# EUROPEAN PATENT SPECIFICATION

(11) **EP 4 190 034 B1**
(45) Date of publication and mention of the grant of the patent: **02.07.2025**
(21) Application number: 21762575.5
(22) Date of filing: 09.08.2021
(51) Int. Cl.: H04W 48/10, H04W 48/18, H04W 48/16

(54) **ACCESS TO SECOND NETWORK**
ZUGRIFF AUF EIN ZWEITES NETZWERK
ACCÈS À UN SECOND RÉSEAU

(30) Priority: 07.08.2020 US 202063062976 P
(43) Date of publication of application: 07.06.2023
(73) Proprietor: Ofinno, LLC, Reston, VA 20190 (US)
(72) Inventor: TALEBI FARD, Peyman, Reston, Virginia 20190 (US); DINAN, Esmael Hejazi, Reston, Virginia 20190 (US); RYU, Jinsook, Reston, Virginia 20190 (US); PARK, Kyungmin, RESTON, Virginia 20190 (US); KIM, Taehun, Reston, Virginia 20190 (US)
(74) Representative: Westphal, Mussgnug & Partner, Patentanwälte mbB
(86) International application number: PCT/US2021/045168
(87) International publication number: WO 2022/032220

(56) References cited:
- "3rd Generation Partnership Project; Technical Specification Group Services and System Aspects; System Architecture for the 5G System; Stage 2 (Release 15)", 7 December 2017 (2017-12-07), XP051362702, Retrieved from the Internet <URL:http://www.3gpp.org/ftp/Email%5FDiscussions/SA2/> [retrieved on 20171207]
- ERICSSON: "KI#4, new solution, RAN impacts due to KI#4", vol. SA WG2, no. 20200601 - 20200612, 22 May 2020 (2020-05-22), XP051889670, Retrieved from the Internet <URL:https://ftp.3gpp.org/tsg_sa/WG2_Arch/TSGS2_139e_Electronic/Docs/S2-2003611.zip S2-2003611_eNPN-KI-4_RAN.doc> [retrieved on 20200522]
- ERICSSON: "KI#4, New Sol: Simplified Onboarding procedure supporting both User and Control Plane UE Provisioning Procedures", vol. SA WG2, no. Elbonia; 20200601 - 20200612, 22 May 2020 (2020-05-22), XP051889669, Retrieved from the Internet <URL:https://ftp.3gpp.org/tsg_sa/WG2_Arch/TSGS2_139e_Electronic/Docs/S2-2003610.zip S2-2003610_pCRTR23.700-07_KI4-Simplified-Onboarding.docx> [retrieved on 20200522]
- CATT: "Discussion on cell access control for eNPN", vol. RAN WG3, no. E-Meeting; 20210125 - 20210204, 15 January 2021 (2021-01-15), XP051974853, Retrieved from the Internet <URL:https://ftp.3gpp.org/tsg_ran/WG3_Iu/TSGR3_111-e/Docs/R3-210104.zip R3-210104-Discussion on cell access control for eNPN.docx> [retrieved on 20210115]
- SAMSUNG: "KI #4, Sol #5: Update to clarify how the UE discovers and selects the onboarding network", vol. SA WG2, no. Electronic, Elbonia; 20200601 - 20200612, 22 May 2020 (2020-05-22), XP051890261, Retrieved from the Internet <URL:https://ftp.3gpp.org/tsg_sa/WG2_Arch/TSGS2_139e_Electronic/Docs/S2-2004257.zip S2-2004257_KI #4, Sol #5, Update to clarify how the UE discovers and selects the onboarding network.doc> [retrieved on 20200522]
- NOKIA ET AL: "(TP for NPN Baseline CR 38.413) NPN Slicing aspects over NG", vol. RAN WG3, no. E-Meeting; 20200420 - 20200430, 10 April 2020 (2020-04-10), XP051873780, Retrieved from the Internet <URL:https://ftp.3gpp.org/tsg_ran/WG3_Iu/TSGR3_107bis_e/Docs/R3-201820.zip R3-201820_NPNslicing413.doc> [retrieved on 20200410]
- ZTE: "KI#4, new sol, discussion on the AS or non-AS solution for the UP UE Onboarding", vol. SA WG2, no. Electronic, Elbonia; 20200601 - 20200612, 22 May 2020 (2020-05-22), XP051889960, Retrieved from the Internet <URL:https://ftp.3gpp.org/tsg_sa/WG2_Arch/TSGS2_139e_Electronic/Docs/S2-2003952.zip S2-2003952 KI#4, new sol, discusson on the AS or non-AS solution for the UP UE onboarding.doc> [retrieved on 20200522]
- "3rd Generation Partnership Project; Technical Specification Group Services and System Aspects; Study on enhanced support of non-public networks (Release 17)", 19 June 2020 (2020-06-19), XP051902986, Retrieved from the Internet <URL:https://ftp.3gpp.org/tsg_sa/WG2_Arch/Latest_SA2_Specs/Latest_draft_S2_Specs/23700-07-040.zip 23700-07-040_rm.docx> [retrieved on 20200619]
- ERICSSON: "Further aspects of SNPN", vol. RAN WG2, no. Chongqing, P.R. China; 20191014 - 20191018, 3 October 2019 (2019-10-03), XP051803854, Retrieved from the Internet <URL:https://ftp.3gpp.org/tsg_ran/WG2_RL2/TSGR2_107bis/Docs/R2-1912360.zip R2-1912360 - Further aspects of SNPN.docx> [retrieved on 20191003]
- LENOVO ET AL: "Solution: UE Onboarding and remote Provisioning for SNPN", vol. SA WG2, no. 20200601 - 20200612, 8 June 2020 (2020-06-08), XP051894462, Retrieved from the Internet <URL:https://ftp.3gpp.org/tsg_sa/WG2_Arch/TSGS2_139e_Electronic/Docs/S2-2004378.zip S2-2004378 rev of 4147 - Solution_UE Onboarding and remote Provisioning.doc> [retrieved on 20200608]

## Description

### TECHNICAL FIELD

This application relates to the field of wireless communication systems such as LTE communication systems, 5G communication systems, other communication systems compatible with LTE and/or 5G communication systems, and related methods, systems and apparatuses.

### BACKGROUND

With regard to the prior art, reference is made to the 3GPP publications Ericsson, "KI#4, new solution, RAN impacts due to KI#4", in: 3GPP draft S2-2003611, SA WG2 Meeting #139e, June 1-12 2020*,* and Ericsson, "KI#4, New Sol: Simplified Onboarding procedure supporting both User and Control Plane UE Provisioning Procedures ", in: 3GPP draft S2-2003610, SA WG2 Meeting #139e, June 1-12, 2020*.*

### SUMMARY

The invention is set out in the appended claims. Accordingly, a method for a network node of a wireless communication system is described herein. In accordance with one embodiment, the method includes receiving - by a first access and mobility management function (AMF) of a first network from a radio access network (RAN) node - a forwarded registration request for onboarding of a wireless device to a second network, wherein the registration request is forwarded by the RAN node if the wireless device is in connected mode or the RAN node cannot select an appropriate AMF. The method further includes sending - by the first AMF to a network repository function (NRF) of the first network - a discovery request to discover an AMF that supports onboarding of the wireless device. The discovery request comprises an onboarding support indication. Furthermore, the method includes receiving - by the first AMF from the NRF - a discovery response message comprising information of one or more AMF candidates that support onboarding. A corresponding method for an NRF as well as a corresponding network node, a corresponding NRF and related apparatuses, devices and systems are described.

### BRIEF DESCRIPTION OF THE SEVERAL VIEWS OF THE DRAWINGS

Examples of several of the various embodiments of the present invention are described herein with reference to the drawings.
FIG. 1 is a diagram of an example 5G system architecture as per an aspect of an embodiment of the present disclosure.
FIG. 2 is a diagram of an example 5G System architecture as per an aspect of an embodiment of the present disclosure.
FIG. 3 is a system diagram of an example wireless device and a network node in a 5G system as per an aspect of an embodiment of the present disclosure.
FIG. 4 is a system diagram of an example wireless device as per an aspect of an embodiment of the present disclosure.
FIG. 5A and FIG. 5B depict two registration management state models in UE 100 and AMF 155 as per an aspect of embodiments of the present disclosure.
FIG. 6A and FIG. 6B depict two connection management state models in UE 100 and AMF 155 as per an aspect of embodiments of the present disclosure.
FIG. 7 is diagram for classification and marking traffic as per an aspect of an embodiment of the present disclosure.
FIG. 8 is an example call flow for registration procedure as per an aspect of an embodiment of the present disclosure.
FIG.9 is an example call flow for registration procedure as per an aspect of an embodiment of the present disclosure.
FIG. 10 is an example call flow for service request procedure as per an aspect of an embodiment of the present disclosure.
FIG. 11 is an example call flow for service request procedure as per an aspect of an embodiment of the present disclosure.
FIG. 12 is an example call flow for PDU session establishment procedure as per an aspect of an embodiment of the present disclosure.
FIG. 13 is an example call flow for PDU session establishment procedure as per an aspect of an embodiment of the present disclosure.
FIG. 14 illustrates an example mobile communication networks as per an aspect of an embodiment of the present disclosure.
FIG. 15 illustrates an example embodiment of a present disclosure.
FIG. 16 illustrates an example embodiment of a present disclosure.
FIG. 17 illustrates an example embodiment of a present disclosure.
FIG. 18 illustrates an example embodiment of a present disclosure.
FIG. 19 illustrates an example embodiment of a present disclosure.
FIG. 20 illustrates an example embodiment of a present disclosure.
FIG. 21 illustrates an example embodiment of a present disclosure.
FIG. 22 illustrates an example flow chart of a present disclosure.
FIG. 23 illustrates an example flow chart of a present disclosure.
FIG. 24 illustrates an example flow chart of a present disclosure.
FIG. 25 illustrates an example flow chart of a present disclosure.
FIG. 26 illustrates an example flow chart of a present disclosure.
FIG. 27 illustrates an example flow chart of a present disclosure.
FIG. 28 illustrates an example of a message of a present disclosure.
FIG. 29 illustrates an example embodiment of a present disclosure.
FIG. 30 illustrates an example embodiment of a present disclosure.
FIG. 31 illustrates an example embodiment of a present disclosure.
FIG. 32 illustrates an example flow chart of a present disclosure.
FIG. 33 illustrates an example flow chart of a present disclosure.
FIG. 34 illustrates an example flow chart of a present disclosure.
FIG. 35 illustrates an example flow chart of a present disclosure.

### DETAILED DESCRIPTION

Example embodiments of the present invention enable implementation of enhanced features and functionalities in 5G systems. More particularly, the embodiments of the technology positioning via user plane transmission (e.g. for 5G or future communication system). Throughout the present disclosure, UE, wireless device, vehicle terminal, and mobile device are used interchangeably. Throughout the present disclosure, base station, (Radio) Access Network ((R)AN), Next Generation Radio Access Network (NG-RAN), New radio Node B (gNB), Next Generation eNodeB (ng-eNBs) are used interchangeably. Throughout the present disclosure, base station, Radio Access Network (RAN), eNodeB are used interchangeably.

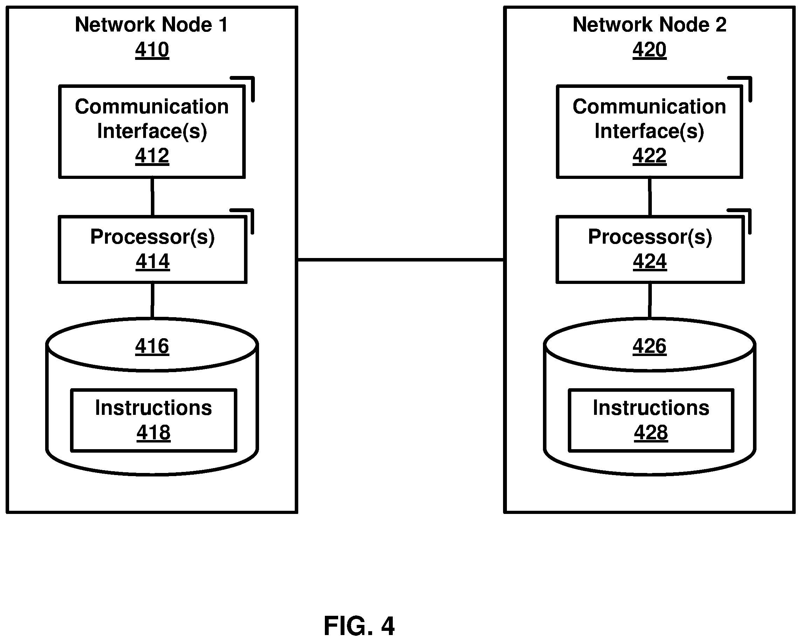

Throughout the present disclosure, AMF, LMC, LMF, UDM, OAM, GMLC, LCS client, NEF and AF are example network functions which may be implemented either as a network element on a (dedicated) hardware, and/or a network node as depicted FIG. 4, or as a software instance running on a (dedicated) hardware and/or shared hardware, or as a virtualized function instantiated on an appropriate platform.

The following acronyms are used throughout the present disclosure:
- 5G: 5th generation mobile networks
- 5GC: 5G Core Network
- 5GS: 5G System
- 5G-AN: 5G Access Network
- 5QI: 5G QoS Indicator
- ACK: Acknowledgement
- AF: Application Function
- A-GNSS: Assisted GNSS
- AMBR: Aggregate Maximum Bit Rate
- AMF: Access and Mobility Management Function
- AN: Access Network
- ANDSP: Access Network Discovery & Selection Policy
- APN: Access Point Name
- ARP: Allocation and Retention Priority
- BD: Billing Domain
- BPS: Barometric Pressure Sensor
- CCNF: Common Control Network Functions
- CDR: Charging Data Record
- CHF: Charging Function
- CIoT: Cellular IoT
- CN: Core Network
- CP: Control Plane
- C-V2X: Cellular Vehicle-To-Everything
- DAB: Digital Audio Broadcasting
- DDN: Downlink Data Notification
- DDoS: Distributed Denial of Service
- DL: Downlink
- DN: Data Network
- DN-AAA: Data Network Authentication Authorization and Accounting
- DNN: Data Network Name
- DTMB: Digital Terrestrial Multimedia Broadcast
- ECGI: E-UTRAN Cell Global Identifier
- ECID: Enhanced Cell Identity
- E-CSCF: Emergency Call Session Control Function
- eNodeB: evolved Node B
- EPS: Evolved Packet System
- E-UTRAN: Evolved Universal Terrestrial Radio Access Network
- FDD: Frequency Division Duplex
- FQDN: Fully Qualified Domain Name
- F-TEID: Fully Qualified TEID
- GAD: Geographical Area Description
- GMLC: Gateway Mobile Location Centre
- gNB: Next Generation Node B
- gNB-CU-CP: gNB Central Unit Control Plane
- GNSS: Global Navigation Satellite System
- GPSI: Generic Public Subscription Identifier
- GTP: GPRS Tunneling Protocol
- GUTI: Globally Unique Temporary Identifier
- GW: Gateway
- HGMLC: Home GMLC
- HTTP: Hypertext Transfer Protocol
- ID: Identifier
- IMEI: International Mobile Equipment Identity
- IMEI DB: IMEI Database
- IMS: IP Multimedia Subsystem
- IMSI: International Mobile Subscriber Identity
- IP: Internet Protocol
- IP-CAN: IP Connectivity Access Network
- L2: Layer 2 (data link layer)
- L3: Layer 3 (network layer)
- LADN: Local Area Data Network
- LAN: local area network
- LCS: LoCation Services
- LI: Lawful Intercept
- LMC: Location Management Component
- LMF: Location Management Function
- LPP: LTE Positioning Protocol
- LRF: location retrieval function
- MAC: Media Access Control
- MEI: Mobile Equipment Identifier
- MIB: Master Information Block
- MICO: Mobile Initiated Connection Only
- MME: Mobility Management Entity
- MO: Mobile Originated
- MO-LR: Mobile Originated Location Request
- MSISDN: Mobile Subscriber ISDN
- MT: Mobile Terminating
- MT-LR: Mobile Terminated Location Request
- N3IWF: Non-3GPP InterWorking Function
- NAI: Network Access Identifier
- NAS: Non Access Stratum
- NAT: Network address translation
- NB-IoT: Narrow Band IoT
- NCGI: NR Cell Global Identity
- NEF: Network Exposure Function
- NF: Network Function
- NGAP: Next Generation Application Protocol
- ng-eNB: Next Generation eNB
- NG-RAN: NR Radio Access Network
- NI-LR: Network Induced Location Request
- NR: New Radio
- NRF: Network Repository Function
- NRPPa: New Radio Positioning Protocol A
- NSI: Network Slice Instance
- NSSAI: Network Slice Selection Assistance Information
- NSSF: Network Slice Selection Function
- NWDAF: Network Data Analytics Function
- OAM: Operation Administration and Maintenance
- OCS: Online Charging System
- OFCS: Offline Charging System
- OTDOA: Observed Time Difference of Arrival
- PCC: Policy and Charging Control
- PCF: Policy Control Function
- PCRF: Policy and Charging Rules Function
- PDN: Packet Data Network
- PDU: Packet Data Unit
- PEI: Permanent Equipment Identifier
- PGW: PDN Gateway
- PLMN: Public Land Mobile Network
- ProSe: Proximity-based Services
- QFI: QoS Flow Identifier
- QoS: Quality of Service
- RM: Registration Management
- RA: Random Access
- RAN: Radio Access Network
- RAT: Radio Access Technology
- RRC: Radio Resource Control
- RM: Registration Management
- S1-AP: S1 Application Protocol
- SBA: Service Based Architecture
- SCM: Security Context Management
- SEA: Security Anchor Function
- SET: SUPL Enabled Terminal
- SGW: Serving Gateway
- SIB: System Information Block
- SLP: SUPL Location Platform
- SM: Session Management
- SMF: Session Management Function
- SMSF: SMS Function
- S-NSSAI: Single Network Slice Selection Assistance information
- SS: Synchronization Signal
- SSC: Session and Service Continuity
- SUCI: Served User Correlation ID
- SUPI: Subscriber Permanent Identifier
- SUPL: Secure User Plane Location
- TA: Tracking Area
- TAI: Tracking Area Identity
- TBS: Terrestrial Beacon System
- TCP: Transmission Control Protocol
- TEID: Tunnel Endpoint Identifier
- TMSI: Temporary Mobile Subscriber Identity
- TNAN: Trusted Non-3GPP Access Network
- TNGF: Trusted Non3GPP Gateway
- TRP: Transmission and Reception Point
- UCMF: UE radio Capability Management Function
- UDR: Unified Data Repository
- UDM: Unified Data Management
- UDP: User Datagram Protocol
- UE: User Equipment
- UL: Uplink
- UL CL: Uplink Classifier
- UPF: User Plane Function
- V2X: Vehicle-To-Everything
- WLAN: Wireless Local Area Network
- XML: Extensible Markup Language

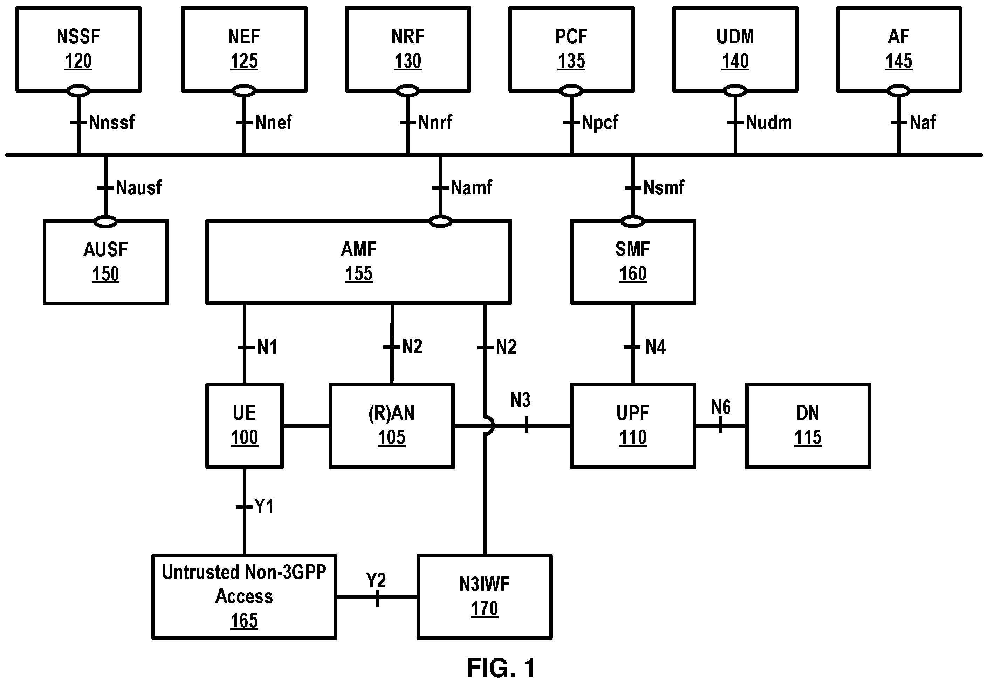

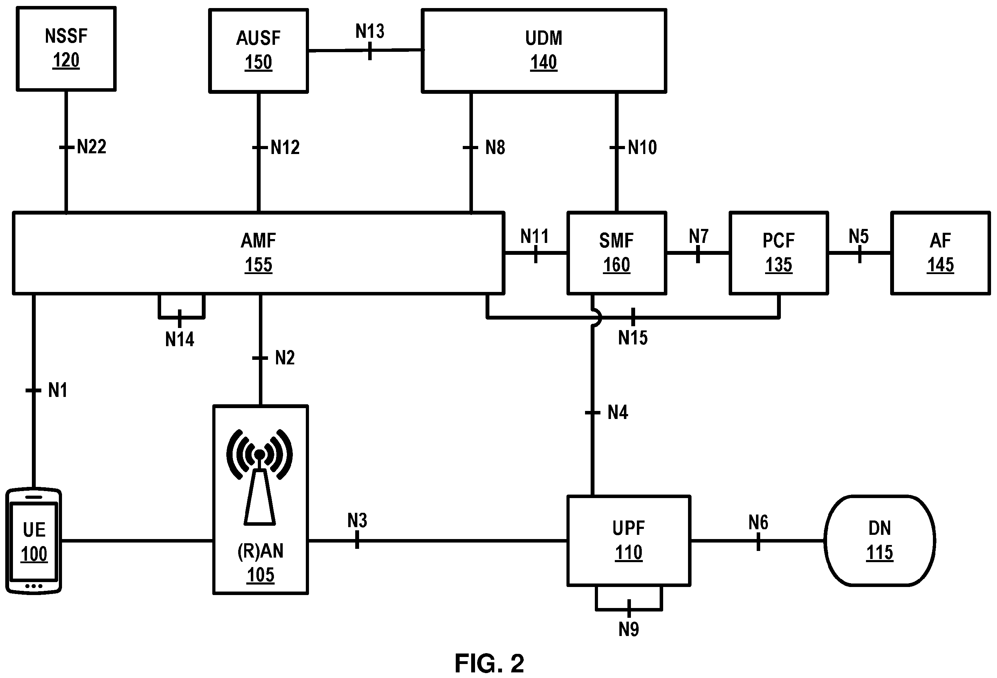

Example FIG. 1 and FIG. 2 depict a 5G system comprising of access networks and 5G core network. An example 5G access network may comprise an access network connecting to a 5G core network. An access network may comprise an NG-RAN 105 and/or non-3GPP AN 165. An example 5G core network may connect to one or more 5G access networks 5G-AN and/or NG-RANs. 5G core network may comprise functional elements or network functions as in example FIG. 1 and example FIG. 2 where interfaces may be employed for communication among the functional elements and/or network elements.

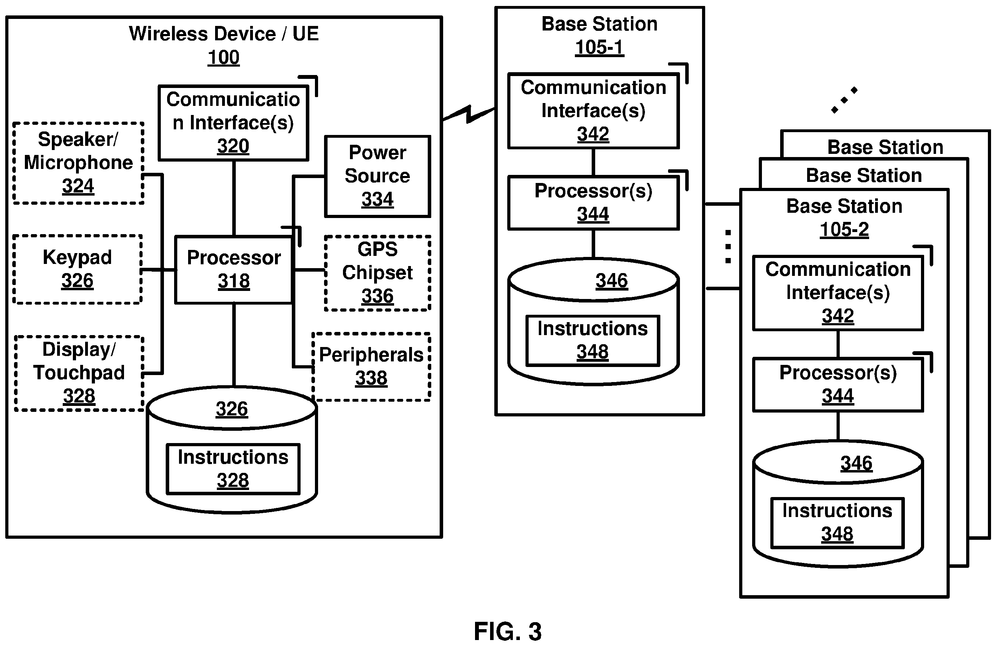

In an example, a network function may be a processing function in a network, which may have a functional behavior and/or interfaces. A network function may be implemented either as a network element on a dedicated hardware, and/or a network node as depicted in FIG. 3 and FIG. 4, or as a software instance running on a dedicated hardware and/or shared hardware, or as a virtualized function instantiated on an appropriate platform.

In an example, access and mobility management function, AMF 155, may include the following functionalities (some of the AMF 155 functionalities may be supported in a single instance of an AMF 155): termination of RAN 105 CP interface (N2), termination of NAS (N1), NAS ciphering and integrity protection, registration management, connection management, reachability management, mobility management, lawful intercept (for AMF 155 events and interface to LI system), provide transport for session management, SM messages between UE 100 and SMF 160, transparent proxy for routing SM messages, access authentication, access authorization, provide transport for SMS messages between UE 100 and SMSF, security anchor function, SEA, interaction with the AUSF 150 and the UE 100, receiving the intermediate key established as a result of the UE 100 authentication process, security context management, SCM, that receives a key from the SEA that it uses to derive access network specific keys, and/or the like.

In an example, the AMF 155 may support non-3GPP access networks through N2 interface with N3IWF 170, NAS signaling with a UE 100 over N3IWF 170, authentication of UEs connected over N3IWF 170, management of mobility, authentication, and separate security context state(s) of a UE 100 connected via non-3GPP access 165 or connected via 3GPP access 105 and non-3GPP access 165 simultaneously, support of a coordinated RM context valid over 3GPP access 105 and non 3GPP access 165, support of CM management contexts for the UE 100 for connectivity over non-3GPP access, and/or the like.

In an example, an AMF 155 region may comprise one or multiple AMF 155 sets. The AMF 155 set may comprise some AMF 155 that serve a given area and/or network slice(s). In an example, multiple AMF 155 sets may be per AMF 155 region and/or network slice(s). Application identifier may be an identifier that may be mapped to a specific application traffic detection rule. Configured NSSAI may be an NSSAI that may be provisioned in a UE 100. DN 115 access identifier (DNAI), for a DNN, may be an identifier of a user plane access to a DN 115. Initial registration may be related to a UE 100 registration in RM-DEREGISTERED 500, 520 states. N2AP UE 100 association may be a logical per UE 100 association between a 5G AN node and an AMF 155. N2AP UE-TNLA-binding may be a binding between a N2AP UE 100 association and a specific transport network layer, TNL association for a given UE 100.

In an example, session management function, SMF 160, may include one or more of the following functionalities (one or more of the SMF 160 functionalities may be supported in a single instance of a SMF 160): session management (e.g. session establishment, modify and release, including tunnel maintain between UPF 110 and AN 105 node), UE 100 IP address allocation & management (including optional authorization), selection and control of UP function(s), configuration of traffic steering at UPF 110 to route traffic to proper destination, termination of interfaces towards policy control functions, control part of policy enforcement and QoS. lawful intercept (for SM events and interface to LI System), termination of SM parts of NAS messages, downlink data notification, initiation of AN specific SM information, sent via AMF 155 over N2 to (R)AN 105, determination of SSC mode of a session, roaming functionality, handling local enforcement to apply QoS SLAs (VPLMN), charging data collection and charging interface (VPLMN), lawful intercept (in VPLMN for SM events and interface to LI System), support for interaction with external DN 115 for transport of signaling for PDU session authorization/authentication by external DN 115, and/or the like.

In an example, a user plane function, UPF 110, may include one or more of the following functionalities (some of the UPF 110 functionalities may be supported in a single instance of a UPF 110): anchor point for Intra-/Inter-RAT mobility (when applicable), external PDU session point of interconnect to DN 115, packet routing & forwarding, packet inspection and user plane part of policy rule enforcement, lawful intercept (UP collection), traffic usage reporting, uplink classifier to support routing traffic flows to a data network, branching point to support multi-homed PDU session(s), QoS handling for user plane, uplink traffic verification (SDF to QoS flow mapping), transport level packet marking in the uplink and downlink, downlink packet buffering, downlink data notification triggering, and/or the like.

In an example, the UE 100 IP address management may include allocation and release of the UE 100 IP address and/or renewal of the allocated IP address. The UE 100 may set a requested PDU type during a PDU session establishment procedure based on its IP stack capabilities and/or configuration. In an example, the SMF 160 may select PDU type of a PDU session. In an example, if the SMF 160 receives a request with PDU type set to IP, the SMF 160 may select PDU type IPv4 or IPv6 based on DNN configuration and/or operator policies. In an example, the SMF 160 may provide a cause value to the UE 100 to indicate whether the other IP version is supported on the DNN. In an example, if the SMF 160 receives a request for PDU type IPv4 or IPv6 and the requested IP version is supported by the DNN the SMF 160 may select the requested PDU type.

In an example embodiment, the 5GC elements and UE 100 may support the following mechanisms: during a PDU session establishment procedure, the SMF 160 may send the IP address to the UE 100 via SM NAS signaling. The IPv4 address allocation and/or IPv4 parameter configuration via DHCPv4 may be employed once PDU session may be established. IPv6 prefix allocation may be supported via IPv6 stateless autoconfiguration, if IPv6 is supported. In an example, 5GC network elements may support IPv6 parameter configuration via stateless DHCPv6.

The 5GC may support the allocation of a static IPv4 address and/or a static IPv6 prefix based on subscription information in a UDM 140 and/or based on the configuration on a per-subscriber, per-DNN basis.

User plane function(s) (UPF 110) may handle the user plane path of PDU sessions. A UPF 110 that provides the interface to a data network may support functionality of a PDU session anchor.

In an example, a policy control function, PCF 135, may support unified policy framework to govern network behavior, provide policy rules to control plane function(s) to enforce policy rules, implement a front end to access subscription information relevant for policy decisions in a user data repository (UDR), and/or the like.

A network exposure function, NEF 125, may provide means to securely expose the services and capabilities provided by the 3GPP network functions, translate between information exchanged with the AF 145 and information exchanged with the internal network functions, receive information from other network functions, and/or the like.

In an example, an network repository function, NRF 130 may support service discovery function that may receive NF discovery request from NF instance, provide information about the discovered NF instances (be discovered) to the NF instance, and maintain information about available NF instances and their supported services, and/or the like.

In an example, an NSSF 120 may select a set of network slice instances serving the UE 100, may determine allowed NSSAI. In an example, the NSSF 120 may determine the AMF 155 set to be employed to serve the UE 100, and/or, based on configuration, determine a list of candidate AMF 155(s) 155 by querying the NRF 130.

In an example, stored data in a UDR may include at least user subscription data, including at least subscription identifiers, security credentials, access and mobility related subscription data, session related subscription data, policy data, and/or the like.

In an example, an AUSF 150 may support authentication server function (AUSF 150).

In an example, an application function, AF 145, may interact with the 3GPP core network to provide services. In an example, based on operator deployment, application functions may be trusted by the operator to interact directly with relevant network functions. Application functions not allowed by the operator to access directly the network functions may use an external exposure framework (e.g., via the NEF 125) to interact with relevant network functions.

In an example, control plane interface between the (R)AN 105 and the 5G core may support connection of multiple different kinds of AN(s) (e.g. 3GPP RAN 105, N3IWF 170 for Un-trusted access 165) to the 5GC via a control plane protocol. In an example, an N2 AP protocol may be employed for both the 3GPP access 105 and non-3GPP access 165. In an example, control plane interface between the (R)AN 105 and the 5G core may support decoupling between AMF 155 and other functions such as SMF 160 that may need to control the services supported by AN(s) (e.g. control of the UP resources in the 105 for a PDU session).

In an example, the 5GC may provide policy information from the PCF 135 to the UE 100. In an example, the policy information may comprise: access network discovery and selection policy, UE 100 route selection policy (URSP), SSC mode selection policy (SSCMSP), network slice selection policy (NSSP), DNN selection policy, non-seamless offload policy, and/or the like.

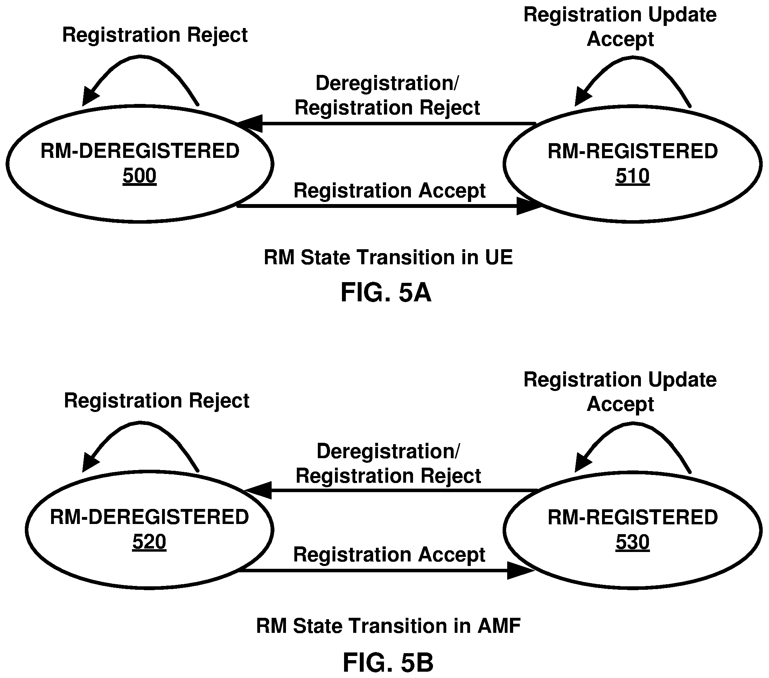

In an example, as depicted in example FIG. 5A and FIG. 5B, the registration management, RM may be employed to register or de-register a UE/user 100 with the network, and establish the user context in the network. Connection management may be employed to establish and release the signaling connection between the UE 100 and the AMF 155.

In an example, a UE 100 may register with the network to receive services that require registration. In an example, the UE 100 may update its registration with the network periodically in order to remain reachable (periodic registration update), or upon mobility (e.g., mobility registration update), or to update its capabilities or to re-negotiate protocol parameters.

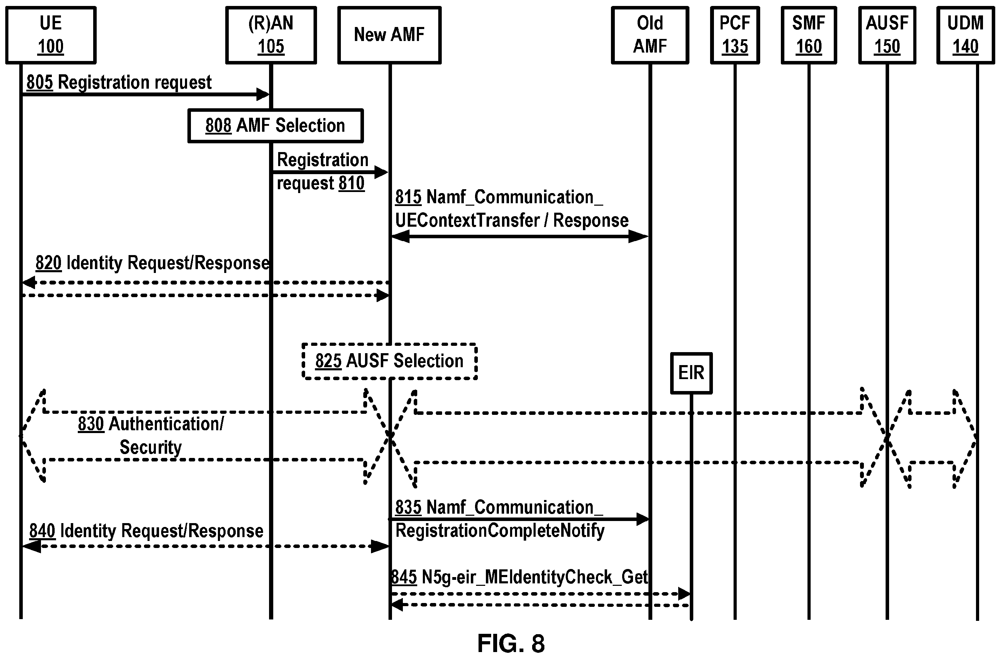

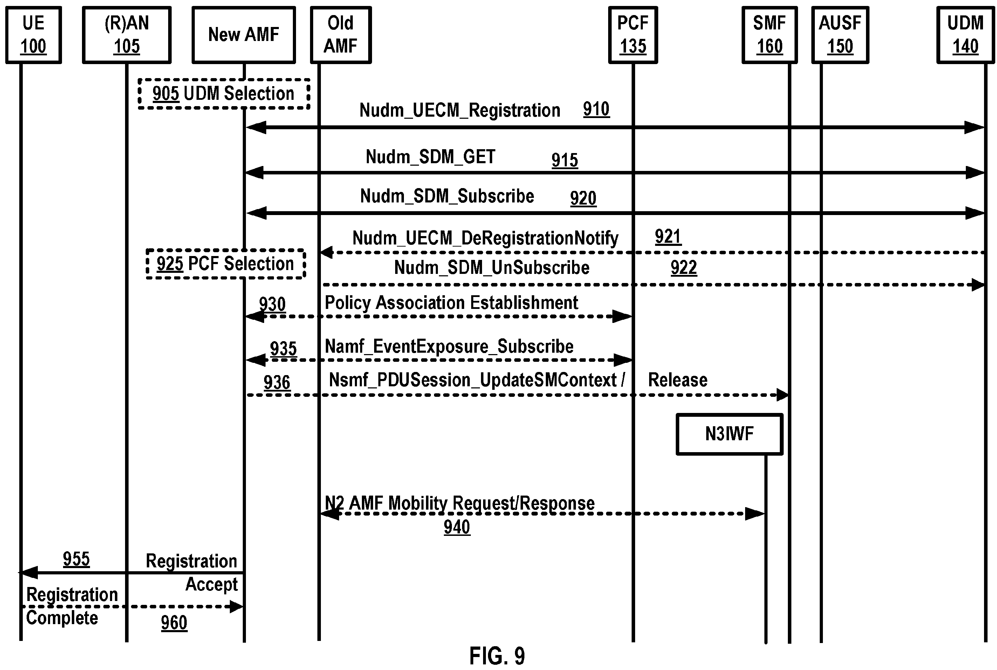

In an example, an initial registration procedure as depicted in example FIG. 8 and FIG. 9 may involve execution of network access control functions (e.g. user authentication and access authorization based on subscription profiles in UDM 140). Example FIG. 9 is a continuation of the initial registration procedure depicted in FIG. 8. As a result of the initial registration procedure, the identity of the serving AMF 155 may be registered in a UDM 140.

In an example, the registration management, RM procedures may be applicable over both 3GPP access 105 and non 3GPP access 165.

An example FIG. 5A may depict the RM states of a UE 100 as observed by the UE 100 and AMF 155. In an example embodiment, two RM states may be employed in the UE 100 and the AMF 155 that may reflect the registration status of the UE 100 in the selected PLMN: RM-DEREGISTERED 500, and RM-REGISTERED 510. In an example, in the RM DEREGISTERED state 500, the UE 100 may not be registered with the network. The UE 100 context in the AMF 155 may not hold valid location or routing information for the UE 100 so the UE 100 may not be reachable by the AMF 155. In an example, the UE 100 context may be stored in the UE 100 and the AMF 155. In an example, in the RM REGISTERED state 510, the UE 100 may be registered with the network. In the RM-REGISTERED 510 state, the UE 100 may receive services that may require registration with the network.

In an example embodiment, two RM states may be employed in AMF 155 for the UE 100 that may reflect the registration status of the UE 100 in the selected PLMN: RM-DEREGISTERED 520, and RM-REGISTERED 530.

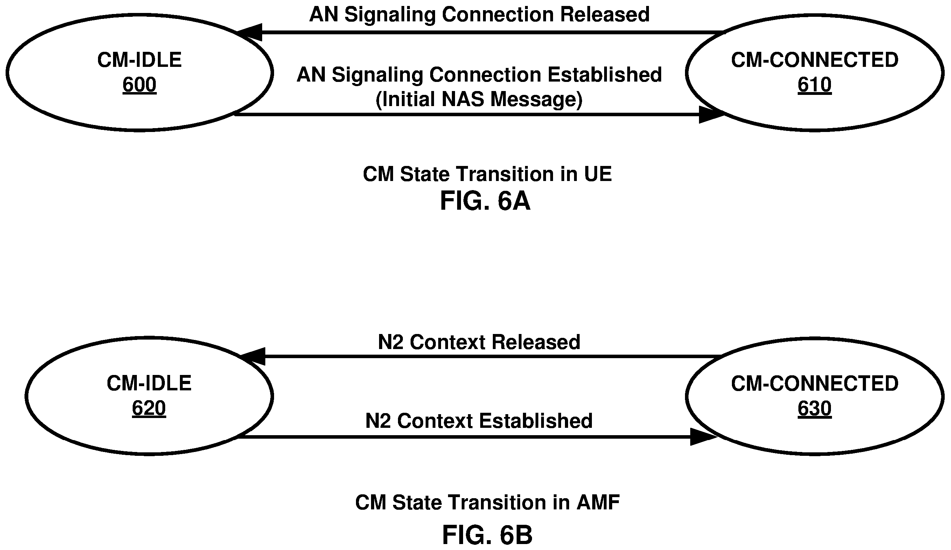

As depicted in example FIG. 6A and FIG. 6B, connection management, CM, may comprise establishing and releasing a signaling connection between a UE 100 and an AMF 155 over N1 interface. The signaling connection may be employed to enable NAS signaling exchange between the UE 100 and the core network. The signaling connection between the UE 100 and the AMF 155 may comprise both the signaling connection between the UE 100 and the (R)AN 105 (e.g. RRC connection over 3GPP access) and the N2 connection for the UE 100 between the and the AMF 155.

As depicted in example FIG. 6A and FIG. 6B, two CM states may be employed for the NAS signaling connectivity of the UE 100 with the AMF 155, CM-IDLE 600, 620 and CM-CONNECTED 610, 630. A UE 100 in CM-IDLE 600 state may be in RM-REGISTERED 510 state and may have no NAS signaling connection established with the AMF 155 over N1. The UE 100 may perform cell selection, cell reselection, PLMN selection, and/or the like. A UE 100 in CM-CONNECTED 610 state may have a NAS signaling connection with the AMF 155 over N1.

In an example embodiment two CM states may be employed for the UE 100 at the AMF 155, CM-IDLE 620 and CM-CONNECTED 630.

In an example, an RRC inactive state may apply to NG-RAN (e.g. it may apply to NR and E-UTRA connected to 5G CN). The AMF 155, based on network configuration, may provide assistance information to the NG RAN 105, to assist the NG RAN's 105 decision whether the UE 100 may be sent to RRC inactive state. When a UE 100 is CM-CONNECTED 610 with RRC inactive state, the UE 100 may resume the RRC connection due to uplink data pending, mobile initiated signaling procedure, as a response to RAN 105 paging, to notify the network that it has left the RAN 105 notification area, and/or the like.

In an example, a NAS signaling connection management may include establishing and releasing a NAS signaling connection. A NAS signaling connection establishment function may be provided by the UE 100 and the AMF 155 to establish the NAS signaling connection for the UE 100 in CM-IDLE 600 state. The procedure of releasing the NAS signaling connection may be initiated by the 5G (R)AN 105 node or the AMF 155.

In an example, reachability management of a UE 100 may detect whether the UE 100 is reachable and may provide the UE 100 location (e.g. access node) to the network to reach the UE 100. Reachability management may be done by paging the UE 100 and the UE 100 location tracking. The UE 100 location tracking may include both UE 100 registration area tracking and UE 100 reachability tracking. The UE 100 and the AMF 155 may negotiate UE 100 reachability characteristics in CM-IDLE 600, 620 state during registration and registration update procedures.

In an example, two UE 100 reachability categories may be negotiated between a UE 100 and an AMF 155 for CM-IDLE 600, 620 state. 1) UE 100 reachability allowing mobile device terminated data while the UE 100 is CM-IDLE 600 mode. 2) Mobile initiated connection only (MICO) mode. The 5GC may support a PDU connectivity service that provides exchange of PDUs between the UE 100 and a data network identified by a DNN. The PDU connectivity service may be supported via PDU sessions that are established upon request from the UE 100.

In an example, a PDU session may support one or more PDU session types. PDU sessions may be established (e.g. upon UE 100 request), modified (e.g. upon UE 100 and 5GC request) and/or released (e.g. upon UE 100 and 5GC request) using NAS SM signaling exchanged over N1 between the UE 100 and the SMF 160. Upon request from an application server (AS), the 5GC may be able to trigger a specific application in the UE 100. When receiving the trigger, the UE 100 may send it to the identified application in the UE 100. The identified application in the UE 100 may establish a PDU session to a specific DNN.

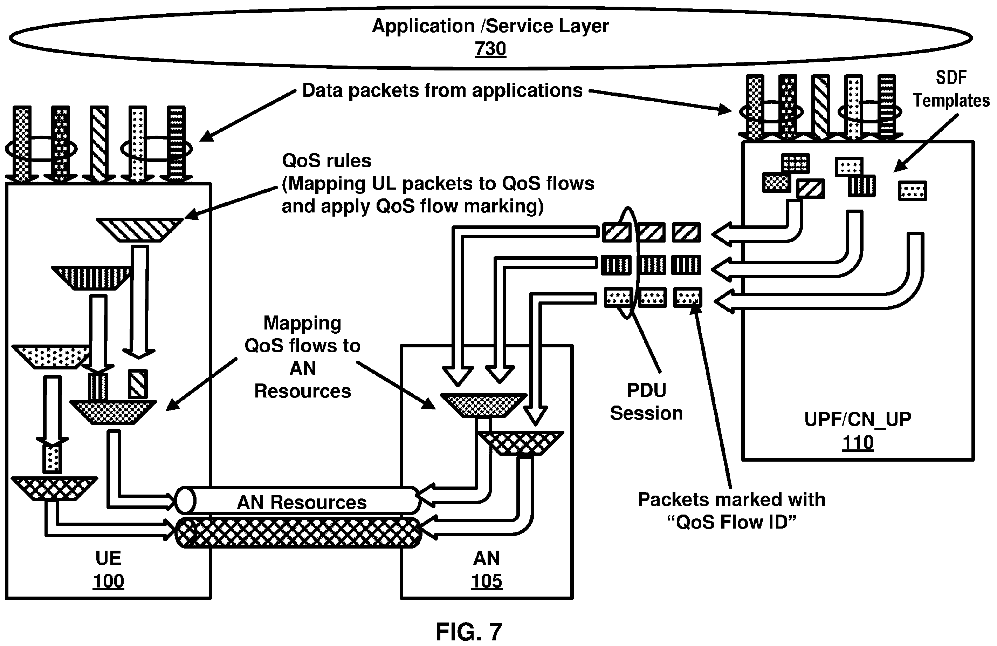

In an example, the 5G QoS model may support a QoS flow based framework as depicted in example FIG. 7. The 5G QoS model may support both QoS flows that require a guaranteed flow bit rate and QoS flows that may not require a guaranteed flow bit rate. In an example, the 5G QoS model may support reflective QoS. The QoS model may comprise flow mapping or packet marking at the UPF 110 (CN_UP) 110, AN 105 and/or the UE 100. In an example, packets may arrive from and/or destined to the application/service layer 730 of UE 100, UPF 110 (CN_UP) 110, and/or the AF 145.

In an example, the QoS flow may be a granularity of QoS differentiation in a PDU session. A QoS flow ID, QFI, may be employed to identify the QoS flow in the 5G system. In an example, user plane traffic with the same QFI within a PDU session may receive the same traffic forwarding treatment. The QFI may be carried in an encapsulation header on N3 and/or N9 (e.g. without any changes to the end-to-end packet header). In an example, the QFI may be applied to PDUs with different types of payload. The QFI may be unique within a PDU session.

In an example, the QoS parameters of a QoS flow may be provided to the (R)AN 105 as a QoS profile over N2 at PDU session establishment, QoS flow establishment, or when NG-RAN is used at every time the user plane is activated. In an example, a default QoS rule may be required for every PDU session. The SMF 160 may allocate the QFI for a QoS flow and may derive QoS parameters from the information provided by the PCF 135. In an example, the SMF 160 may provide the QFI together with the QoS profile containing the QoS parameters of a QoS flow to the (R)AN 105.

In an example, 5G QoS flow may be a granularity for QoS forwarding treatment in the 5G system. Traffic mapped to the same 5G QoS flow may receive the same forwarding treatment (e.g. scheduling policy, queue management policy, rate shaping policy, RLC configuration, and/or the like). In an example, providing different QoS forwarding treatment may require separate 5G QoS flows.

In an example, a 5G QoS indicator may be a scalar that may be employed as a reference to a specific QoS forwarding behavior (e.g. packet loss rate, packet delay budget) to be provided to a 5G QoS flow. In an example, the 5G QoS indicator may be implemented in the access network by the 5QI referencing node specific parameters that may control the QoS forwarding treatment (e.g. scheduling weights, admission thresholds, queue management thresholds, link layer protocol configuration, and/or the like.).

In an example, 5GC may support edge computing and may enable operator(s) and 3rd party services to be hosted close to the UE's access point of attachment. The 5G core network may select a UPF 110 close to the UE 100 and may execute the traffic steering from the UPF 110 to the local data network via a N6 interface. In an example, the selection and traffic steering may be based on the UE's 100 subscription data, UE 100 location, the information from application function AF 145, policy, other related traffic rules, and/or the like. In an example, the 5G core network may expose network information and capabilities to an edge computing application function. The functionality support for edge computing may include local routing where the 5G core network may select a UPF 110 to route the user traffic to the local data network, traffic steering where the 5G core network may select the traffic to be routed to the applications in the local data network, session and service continuity to enable UE 100 and application mobility, user plane selection and reselection, e.g. based on input from application function, network capability exposure where 5G core network and application function may provide information to each other via NEf 125, QoS and charging where PCF 135 may provide rules for QoS control and charging for the traffic routed to the local data network, support of local area data network where 5G core network may provide support to connect to the LADN in a certain area where the applications are deployed, and/or the like.

An example 5G system may be a 3GPP system comprising of 5G access network 105, 5G core network and a UE 100, and/or the like. Allowed NSSAI may be an NSSAI provided by a serving PLMN during e.g. a registration procedure, indicating the NSSAI allowed by the network for the UE 100 in the serving PLMN for the current registration area.

In an example, a PDU connectivity service may provide exchange of PDUs between a UE 100 and a data network. A PDU session may be an association between the UE 100 and the data network, DN 115, that may provide the PDU connectivity service. The type of association may be IP, Ethernet and/or unstructured.

Establishment of user plane connectivity to a data network via network slice instance(s) may comprise the following: performing a RM procedure to select an AMF 155 that supports the required network slices, and establishing one or more PDU session(s) to the required data network via the network slice instance(s).

In an example, the set of network slices for a UE 100 may be changed at any time while the UE 100 may be registered with the network, and may be initiated by the network, or the UE 100.

In an example, a periodic registration update may be UE 100 re-registration at expiry of a periodic registration timer. A requested NSSAI may be a NSSAI that the UE 100 may provide to the network.

In an example, a service based interface may represent how a set of services may be provided/exposed by a given NF.

In an example, a service continuity may be an uninterrupted user experience of a service, including the cases where the IP address and/or anchoring point may change. In an example, a session continuity may refer to continuity of a PDU session. For PDU session of IP type session continuity may imply that the IP address is preserved for the lifetime of the PDU session. An uplink classifier may be a UPF 110 functionality that aims at diverting uplink traffic, based on filter rules provided by the SMF 160, towards data network, DN 115.

In an example, the 5G system architecture may support data connectivity and services enabling deployments to use techniques such as e.g. network function virtualization and/or software defined networking. The 5G system architecture may leverage service-based interactions between control plane (CP) network functions where identified. In 5G system architecture, separation of the user plane (UP) functions from the control plane functions may be considered. A 5G system may enable a network function to interact with other NF(s) directly if required.

In an example, the 5G system may reduce dependencies between the access network (AN) and the core network (CN). The architecture may comprise a converged access-agnostic core network with a common AN - CN interface which may integrate different 3GPP and non-3GPP access types.

In an example, the 5G system may support a unified authentication framework, stateless NFs, where the compute resource is decoupled from the storage resource, capability exposure, and concurrent access to local and centralized services. To support low latency services and access to local data networks, UP functions may be deployed close to the access network.

In an example, the 5G system may support roaming with home routed traffic and/or local breakout traffic in the visited PLMN. An example 5G architecture may be service-based and the interaction between network functions may be represented in two ways. (1) As service-based representation (depicted in example FIG. 1), where network functions within the control plane, may enable other authorized network functions to access their services. This representation may also include point-to-point reference points where necessary. (2) Reference point representation, showing the interaction between the NF services in the network functions described by point-to-point reference point (e.g. N11) between any two network functions.

In an example, a network slice may comprise the core network control plane and user plane network functions, the 5G Radio Access Network; the N3IWF functions to the non-3GPP Access Network, and/or the like. Network slices may differ for supported features and network function implementation. The operator may deploy multiple network slice instances delivering the same features but for different groups of UEs, e.g. as they deliver a different committed service and/or because they may be dedicated to a customer. The NSSF 120 may store the mapping information between slice instance ID and NF ID (or NF address).

In an example, a UE 100 may simultaneously be served by one or more network slice instances via a 5G-AN. In an example, the UE 100 may be served by k network slices (e.g. k=8, 16, etc) at a time. An AMF 155 instance serving the UE 100 logically may belong to a network slice instance serving the UE 100.

In an example, a PDU session may belong to one specific network slice instance per PLMN. In an example, different network slice instances may not share a PDU session. Different slices may have slice-specific PDU sessions using the same DNN.

An S-NSSAI (Single Network Slice Selection Assistance information) may identify a network slice. An S-NSSAI may comprise a slice/service type (SST), which may refer to the expected network slice behavior in terms of features and services; and/or a slice differentiator (SD). A slice differentiator may be optional information that may complement the slice/service type(s) to allow further differentiation for selecting a network slice instance from potentially multiple network slice instances that comply with the indicated slice/service type. In an example, the same network slice instance may be selected employing different S-NSSAIs. The CN part of a network slice instance(s) serving a UE 100 may be selected by CN.

In an example, subscription data may include the S-NSSAI(s) of the network slices that the UE 100 subscribes to. One or more S-NSSAIs may be marked as default S-NSSAI. In an example, k S-NSSAI may be marked default S-NSSAI (e.g. k=8, 16, etc.). In an example, the UE 100 may subscribe to more than 8 S-NSSAIs.

In an example, a UE 100 may be configured by the HPLMN with a configured NSSAI per PLMN. Upon successful completion of a UE's registration procedure, the UE 100 may obtain from the AMF 155 an Allowed NSSAI for this PLMN, which may include one or more S-NSSAIs.

In an example, the Allowed NSSAI may take precedence over the configured NSSAI for a PLMN. The UE 100 may use the S-NSSAIs in the allowed NSSAI corresponding to a network slice for the subsequent network slice selection related procedures in the serving PLMN.

In an example, the establishment of user plane connectivity to a data network via a network slice instance(s) may comprise: performing a RM procedure to select an AMF 155 that may support the required network slices, establishing one or more PDU sessions to the required data network via the network slice instance(s), and/or the like.

In an example, when a UE 100 registers with a PLMN, if the UE 100 for the PLMN has a configured NSSAI or an allowed NSSAI, the UE 100 may provide to the network in RRC and NAS layer a requested NSSAI comprising the S-NSSAI(s) corresponding to the slice(s) to which the UE 100 attempts to register, a temporary user ID if one was assigned to the UE, and/or the like. The requested NSSAI may be configured-NSSAI, allowed-NSSAI, and/or the like.

In an example, when a UE 100 registers with a PLMN, if for the PLMN the UE 100 has no configured NSSAI or allowed NSSAI, the RAN 105 may route NAS signaling from/to the UE 100 to/from a default AMF 155.

In an example, the network, based on local policies, subscription changes and/or UE 100 mobility, may change the set of permitted network slice(s) to which the UE 100 is registered. In an example, the network may perform the change during a registration procedure or trigger a notification towards the UE 100 of the change of the supported network slices using an RM procedure (which may trigger a registration procedure). The network may provide the UE 100 with a new allowed NSSAI and tracking area list.

In an example, during a registration procedure in a PLMN, in case the network decides that the UE 100 should be served by a different AMF 155 based on network slice(s) aspects, the AMF 155 that first received the registration request may redirect the registration request to another AMF 155 via the RAN 105 or via direct signaling between the initial AMF 155 and the target AMF 155.

In an example, the network operator may provision the UE 100 with network slice selection policy (NSSP). The NSSP may comprise one or more NSSP rules.

In an example, if a UE 100 has one or more PDU sessions established corresponding to the a specific S-NSSAI, the UE 100 may route the user data of the application in one of the PDU sessions, unless other conditions in the UE 100 may prohibit the use of the PDU sessions. If the application provides a DNN, then the UE 100 may consider the DNN to determine which PDU session to use. In an example, if the UE 100 does not have a PDU session established with the specific S-NSSAI, the UE 100 may request a new PDU session corresponding to the S-NSSAI and with the DNN that may be provided by the application. In an example, in order for the RAN 105 to select a proper resource for supporting network slicing in the RAN 105, the RAN 105 may be aware of the network slices used by the UE 100.

In an example, an AMF 155 may select an SMF 160 in a network slice instance based on S-NSSAI, DNN and/or other information e.g. UE 100 subscription and local operator policies, and/or the like, when the UE 100 triggers the establishment of a PDU session. The selected SMF 160 may establish the PDU session based on S-NSSAI and DNN.

In an example, in order to support network-controlled privacy of slice information for the slices the UE 100 may access, when the UE 100 is aware or configured that privacy considerations may apply to NSSAI, the UE 100 may not include NSSAI in NAS signaling unless the UE 100 has a NAS security context and the UE 100 may not include NSSAI in unprotected RRC signaling.

In an example, for roaming scenarios, the network slice specific network functions in VPLMN and HPLMN may be selected based on the S-NSSAI provided by the UE 100 during PDU connection establishment. If a standardized S-NSSAI is used, selection of slice specific NF instances may be done by each PLMN based on the provided S-NSSAI. In an example, the VPLMN may map the S-NSSAI of HPLMN to a S-NSSAI of VPLMN based on roaming agreement (e.g., including mapping to a default S-NSSAI of VPLMN). In an example, the selection of slice specific NF instance in VPLMN may be done based on the S-NSSAI of VPLMN. In an example, the selection of any slice specific NF instance in HPLMN may be based on the S-NSSAI of HPLMN.

As depicted in example FIG. 8 and FIG. 9, a registration procedure may be performed by the UE 100 to get authorized to receive services, to enable mobility tracking, to enable reachability, and/or the like.

In an example, the UE 100 may send to the (R)AN 105 an AN message 805 (comprising AN parameters, RM-NAS registration request (registration type, SUCI or SUPI or 5G-GUTI, last visited TAI (if available), security parameters, requested NSSAI, mapping of requested NSSAI, UE 100 5GC capability, PDU session status, PDU session(s) to be re-activated, Follow on request, MICO mode preference, and/or the like), and/or the like). In an example, in case of NG-RAN, the parameters may include e.g. SUCI or SUPI or the 5G-GUTI, the Selected PLMN ID and requested NSSAI, and/or the like. In an example, the parameters may comprise establishment cause. The establishment cause may provide the reason for requesting the establishment of an RRC connection. In an example, the registration type may indicate if the UE 100 wants to perform an initial registration (i.e. the UE 100 is in RM-DEREGISTERED state), a mobility registration update (e.g., the UE 100 is in RM-REGISTERED state and initiates a registration procedure due to mobility), a periodic registration update (e.g., the UE 100 is in RM-REGISTERED state and may initiate a registration procedure due to the periodic registration update timer expiry) or an emergency registration (e.g., the UE 100 is in limited service state). In an example, if the UE 100 performing an initial registration (i.e., the UE 100 is in RM-DEREGISTERED state) to a PLMN for which the UE 100 does not already have a 5G-GUTI, the UE 100 may include its SUCI or SUPI in the registration request. The SUCI may be included if the home network has provisioned the public key to protect SUPI in the UE. If the UE 100 received a UE 100 configuration update command indicating that the UE 100 needs to re-register and the 5G-GUTI is invalid, the UE 100 may perform an initial registration and may include the SUPI in the registration request message. For an emergency registration, the SUPI may be included if the UE 100 does not have a valid 5G-GUTI available; the PEI may be included when the UE 100 has no SUPI and no valid 5G-GUTI. In other cases, the 5G-GUTI may be included and it may indicate the last serving AMF 155. If the UE 100 is already registered via a non-3GPP access in a PLMN different from the new PLMN (e.g., not the registered PLMN or an equivalent PLMN of the registered PLMN) of the 3GPP access, the UE 100 may not provide over the 3GPP access the 5G-GUTI allocated by the AMF 155 during the registration procedure over the non-3GPP access. If the UE 100 is already registered via a 3GPP access in a PLMN (e.g., the registered PLMN), different from the new PLMN (i.e. not the registered PLMN or an equivalent PLMN of the registered PLMN) of the non-3GPP access, the UE 100 may not provide over the non-3GPP access the 5G-GUTI allocated by the AMF 155 during the registration procedure over the 3GPP access. The UE 100 may provide the UE's usage setting based on its configuration. In case of initial registration or mobility registration update, the UE 100 may include the mapping of requested NSSAI, which may be the mapping of each S-NSSAI of the requested NSSAI to the S-NSSAIs of the configured NSSAI for the HPLMN, to ensure that the network is able to verify whether the S-NSSAI(s) in the requested NSSAI are permitted based on the subscribed S-NSSAIs. If available, the last visited TAI may be included in order to help the AMF 155 produce registration area for the UE. In an example, the security parameters may be used for authentication and integrity protection. requested NSSAI may indicate the network slice selection assistance information. The PDU session status may indicates the previously established PDU sessions in the UE. When the UE 100 is connected to the two AMF 155 belonging to different PLMN via 3GPP access and non-3GPP access then the PDU session status may indicate the established PDU session of the current PLMN in the UE. The PDU session(s) to be re-activated may be included to indicate the PDU session(s) for which the UE 100 may intend to activate UP connections. A PDU session corresponding to a LADN may not be included in the PDU session(s) to be re-activated when the UE 100 is outside the area of availability of the LADN. The follow on request may be included when the UE 100 may have pending uplink signaling and the UE 100 may not include PDU session(s) to be re-activated, or the registration type may indicate the UE 100 may want to perform an emergency registration.

In an example, if a SUPI is included or the 5G-GUTI does not indicate a valid AMF 155, the (R)AN 105, based on (R)AT and requested NSSAI, if available, may selects 808 an AMF 155. If UE 100 is in CM-CONNECTED state, the (R)AN 105 may forward the registration request message to the AMF 155 based on the N2 connection of the UE. If the (R)AN 105 may not select an appropriate AMF 155, it may forward the registration request to an AMF 155 which has been configured, in (R)AN 105, to perform AMF 155 selection 808.

In an example, the (R)AN 105 may send to the new AMF 155 an N2 message 810 (comprising: N2 parameters, RM-NAS registration request (registration type, SUPI or 5G-GUTI, last visited TAI (if available), security parameters, requested NSSAI, mapping of requested NSSAI, UE 100 5GC capability, PDU session status, PDU session(s) to be re-activated, follow on request, and MICO mode preference), and/or the like). In an example, when NG-RAN is used, the N2 parameters may comprise the selected PLMN ID, location information, cell identity and the RAT type related to the cell in which the UE 100 is camping. In an example, when NG-RAN is used, the N2 parameters may include the establishment cause.

In an example, the new AMF 155 may send to the old AMF 155 an Namf_Communication_UEContextTransfer (complete registration request) 815. In an example, if the UE's 5G-GUTI was included in the registration request and the serving AMF 155 has changed since last registration procedure, the new AMF 155 may invoke the Namf_Communication_UEContextTransfer service operation 815 on the old AMF 155 including the complete registration request IE, which may be integrity protected, to request the UE's SUPI and MM Context. The old AMF 155 may use the integrity protected complete registration request IE to verify if the context transfer service operation invocation corresponds to the UE 100 requested. In an example, the old AMF 155 may transfer the event subscriptions information by each NF consumer, for the UE, to the new AMF 155. In an example, if the UE 100 identifies itself with PEI, the SUPI request may be skipped.

In an example, the old AMF 155 may send to new AMF 155 a response 815 to Namf_Communication_UEContextTransfer (SUPI, MM context, SMF 160 information, PCF ID). In an example, the old AMF 155 may respond to the new AMF 155 for the Namf_Communication_UEContextTransfer invocation by including the UE's SUPI and MM context. In an example, if old AMF 155 holds information about established PDU sessions, the old AMF 155 may include SMF 160 information including S-NSSAI(s), SMF 160 identities and PDU session ID. In an example, if old AMF 155 holds information about active NGAP UE-TNLA bindings to N3IWF, the old AMF 155 may include information about the NGAP UE-TNLA bindings.

In an example, if the SUPI is not provided by the UE 100 nor retrieved from the old AMF 155 the identity request procedure 820 may be initiated by the AMF 155 sending an identity request message to the UE 100 requesting the SUCI.

In an example, the UE 100 may respond with an identity response message 820 including the SUCI. The UE 100 may derive the SUCI by using the provisioned public key of the HPLMN.

In an example, the AMF 155 may decide to initiate UE 100 authentication 825 by invoking an AUSF 150. The AMF 155 may select an AUSF 150 based on SUPI or SUCI. In an example, if the AMF 155 is configured to support emergency registration for unauthenticated SUPIs and the UE 100 indicated registration type emergency registration the AMF 155 may skip the authentication and security setup or the AMF 155 may accept that the authentication may fail and may continue the registration procedure.

In an example, the authentication 830 may be performed by Nudm_UEAuthenticate_Get operation. The AUSF 150 may discover a UDM 140. In case the AMF 155 provided a SUCI to AUSF 150, the AUSF 150 may return the SUPI to AMF 155 after the authentication is successful. In an example, if network slicing is used, the AMF 155 may decide if the registration request needs to be rerouted where the initial AMF 155 refers to the AMF 155. In an example, the AMF 155 may initiate NAS security functions. In an example, upon completion of NAS security function setup, the AMF 155 may initiate NGAP procedure to enable 5G-AN use it for securing procedures with the UE. In an example, the 5G-AN may store the security context and may acknowledge to the AMF 155. The 5G-AN may use the security context to protect the messages exchanged with the UE.

In an example, new AMF 155 may send to the old AMF 155 Namf_Communication_RegistrationCompleteNotify 835. If the AMF 155 has changed, the new AMF 155 may notify the old AMF 155 that the registration of the UE 100 in the new AMF 155 may be completed by invoking the Namf_Communication_RegistrationCompleteNotify service operation. If the authentication/security procedure fails, then the registration may be rejected, and the new AMF 155 may invoke the Namf_Communication_RegistrationCompleteNotify service operation with a reject indication reason code towards the old AMF 155. The old AMF 155 may continue as if the UE 100 context transfer service operation was never received. If one or more of the S-NSSAIs used in the old registration area may not be served in the target registration area, the new AMF 155 may determine which PDU session may not be supported in the new registration area. The new AMF 155 may invoke the Namf_Communication_RegistrationCompleteNotify service operation including the rejected PDU session ID and a reject cause (e.g. the S-NSSAI becomes no longer available) towards the old AMF 155. The new AMF 155 may modify the PDU session status correspondingly. The old AMF 155 may inform the corresponding SMF 160(s) to locally release the UE's SM context by invoking the Nsmf_PDUSession_ReleaseSMContext service operation.

In an example, the new AMF 155 may send to the UE 100 an identity request/response 840 (e.g., PEI). If the PEI was not provided by the UE 100 nor retrieved from the old AMF 155, the identity request procedure may be initiated by AMF 155 sending an identity request message to the UE 100 to retrieve the PEI. The PEI may be transferred encrypted unless the UE 100 performs emergency registration and may not be authenticated. For an emergency registration, the UE 100 may have included the PEI in the registration request.

In an example, the new AMF 155 may initiate ME identity check 845 by invoking the N5g-eir _EquipmentIdentityCheck_Get service operation 845.

In an example, the new AMF 155, based on the SUPI, may select 905 a UDM 140. The UDM 140 may select a UDR instance. In an example, the AMF 155 may select a UDM 140.

In an example, if the AMF 155 has changed since the last registration procedure, or if the UE 100 provides a SUPI which may not refer to a valid context in the AMF 155, or if the UE 100 registers to the same AMF 155 it has already registered to a non-3GPP access (e.g., the UE 100 is registered over a non-3GPP access and may initiate the registration procedure to add a 3GPP access), the new AMF 155 may register with the UDM 140 using Nudm_UECM_Registration 910 and may subscribe to be notified when the UDM 140 may deregister the AMF 155. The UDM 140 may store the AMF 155 identity associated to the access type and may not remove the AMF 155 identity associated to the other access type. The UDM 140 may store information provided at registration in UDR, by Nudr_UDM_Update. In an example, the AMF 155 may retrieve the access and mobility subscription data and SMF 160 selection subscription data using Nudm_SDM_Get 915. The UDM 140 may retrieve this information from UDR by Nudr_UDM_Query (access and mobility subscription data). After a successful response is received, the AMF 155 may subscribe to be notified using Nudm_SDM _Subscribe 920 when the data requested may be modified. The UDM 140 may subscribe to UDR by Nudr_UDM_Subscribe. The GPSI may be provided to the AMF 155 in the subscription data from the UDM 140 if the GPSI is available in the UE 100 subscription data. In an example, the new AMF 155 may provide the access type it serves for the UE 100 to the UDM 140 and the access type may be set to 3GPP access. The UDM 140 may store the associated access type together with the serving AMF 155 in UDR by Nudr_UDM_Update. The new AMF 155 may create an MM context for the UE 100 after getting the mobility subscription data from the UDM 140. In an example, when the UDM 140 stores the associated access type together with the serving AMF 155, the UDM 140 may initiate a Nudm_UECM_DeregistrationNotification 921 to the old AMF 155 corresponding to 3GPP access. The old AMF 155 may remove the MM context of the UE. If the serving NF removal reason indicated by the UDM 140 is initial registration, then the old AMF 155 may invoke the Namf_EventExposure_Notify service operation towards all the associated SMF 160s of the UE 100 to notify that the UE 100 is deregistered from old AMF 155. The SMF 160 may release the PDU session(s) on getting this notification. In an example, the old AMF 155 may unsubscribe with the UDM 140 for subscription data using Nudm_SDM_unsubscribe 922.

In an example, if the AMF 155 decides to initiate PCF 135 communication, e.g. the AMF 155 has not yet obtained access and mobility policy for the UE 100 or if the access and mobility policy in the AMF 155 are no longer valid, the AMF 155 may select 925 a PCF 135. If the new AMF 155 receives a PCF ID from the old AMF 155 and successfully contacts the PCF 135 identified by the PCF ID, the AMF 155 may select the (V-)PCF identified by the PCF ID. If the PCF 135 identified by the PCF ID may not be used (e.g. no response from the PCF 135) or if there is no PCF ID received from the old AMF 155, the AMF 155 may select 925 a PCF 135.

In an example, the new AMF 155 may perform a policy association establishment 930 during registration procedure. If the new AMF 155 contacts the PCF 135 identified by the (V-)PCF ID received during inter-AMF 155 mobility, the new AMF 155 may include the PCF-ID in the Npcf_AMPolicyControl Get operation. If the AMF 155 notifies the mobility restrictions (e.g. UE 100 location) to the PCF 135 for adjustment, or if the PCF 135 updates the mobility restrictions itself due to some conditions (e.g. application in use, time and date), the PCF 135 may provide the updated mobility restrictions to the AMF 155.

In an example, the PCF 135 may invoke Namf_EventExposure_ Subscribe service operation 935 for UE 100 event subscription.

In an example, the AMF 155 may send to the SMF 160 a Nsmf_PDUSession_UpdateSMContext 936. In an example, the AMF 155 may invoke the Nsmf_PDUSession_UpdateSMContext if the PDU session(s) to be re-activated is included in the registration request. The AMF 155 may send Nsmf_PDUSession_UpdateSMContext request to SMF 160(s) associated with the PDU session(s) to activate user plane connections of the PDU session(s). The SMF 160 may decide to trigger e.g. the intermediate UPF 110 insertion, removal or change of PSA. In the case that the intermediate UPF 110 insertion, removal, or relocation is performed for the PDU session(s) not included in PDU session(s) to be re-activated, the procedure may be performed without N11 and N2 interactions to update the N3 user plane between (R)AN 105 and 5GC. The AMF 155 may invoke the Nsmf_PDUSession_ReleaseSMContext service operation towards the SMF 160 if any PDU session status indicates that it is released at the UE 100. The AMF 155 may invoke the Nsmf_PDUSession_ReleaseSMContext service operation towards the SMF 160 in order to release any network resources related to the PDU session.

In an example, the new AMF 155155 may send to a N3IWF an N2 AMF 155 mobility request 940. If the AMF 155 has changed, the new AMF 155 may create an NGAP UE 100 association towards the N3IWF to which the UE 100 is connected. In an example, the N3IWF may respond to the new AMF 155 with an N2 AMF 155 mobility response 940.

In an example, the new AMF 155 may send to the UE 100 a registration accept 955 (comprising: 5G-GUTI, registration area, mobility restrictions, PDU session status, allowed NSSAI, [mapping of allowed NSSAI], periodic registration update timer, LADN information and accepted MICO mode, IMS voice over PS session supported indication, emergency service support indicator, and/or the like). In an example, the AMF 155 may send the registration accept message to the UE 100 indicating that the registration request has been accepted. 5G-GUTI may be included if the AMF 155 allocates a new 5G-GUTI. If the AMF 155 allocates a new registration area, it may send the registration area to the UE 100 via registration accept message 955. If there is no registration area included in the registration accept message, the UE 100 may consider the old registration area as valid. In an example, mobility restrictions may be included in case mobility restrictions may apply for the UE 100 and registration type may not be emergency registration. The AMF 155 may indicate the established PDU sessions to the UE 100 in the PDU session status. The UE 100 may remove locally any internal resources related to PDU sessions that are not marked as established in the received PDU session status. In an example, when the UE 100 is connected to the two AMF 155 belonging to different PLMN via 3GPP access and non-3GPP access then the UE 100 may remove locally any internal resources related to the PDU session of the current PLMN that are not marked as established in received PDU session status. If the PDU session status information was in the registration request, the AMF 155 may indicate the PDU session status to the UE. The mapping of allowed NSSAI may be the mapping of each S-NSSAI of the allowed NSSAI to the S-NSSAIs of the configured NSSAI for the HPLMN. The AMF 155 may include in the registration accept message 955 the LADN information for LADNs that are available within the registration area determined by the AMF 155 for the UE. If the UE 100 included MICO mode in the request, then AMF 155 may respond whether MICO mode may be used. The AMF 155 may set the IMS voice over PS session supported Indication. In an example, in order to set the IMS voice over PS session supported indication, the AMF 155 may perform a UE/RAN radio information and compatibility request procedure to check the compatibility of the UE 100 and RAN radio capabilities related to IMS voice over PS. In an example, the emergency service support indicator may inform the UE 100 that emergency services are supported, e.g., the UE 100 may request PDU session for emergency services. In an example, the handover restriction list and UE-AMBR may be provided to NG-RAN by the AMF 155.

In an example, the UE 100 may send to the new AMF 155 a registration complete 960 message. In an example, the UE 100 may send the registration complete message 960 to the AMF 155 to acknowledge that a new 5G-GUTI may be assigned. In an example, when information about the PDU session(s) to be re-activated is not included in the registration request, the AMF 155 may release the signaling connection with the UE 100. In an example, when the follow-on request is included in the registration request, the AMF 155 may not release the signaling connection after the completion of the registration procedure. In an example, if the AMF 155 is aware that some signaling is pending in the AMF 155 or between the UE 100 and the 5GC, the AMF 155 may not release the signaling connection after the completion of the registration procedure.

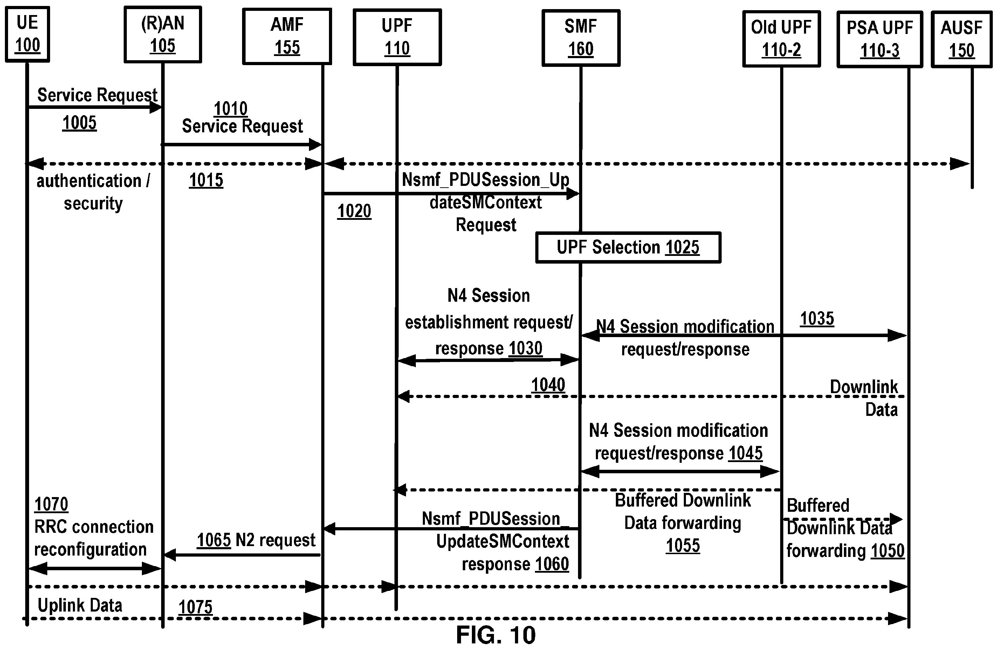

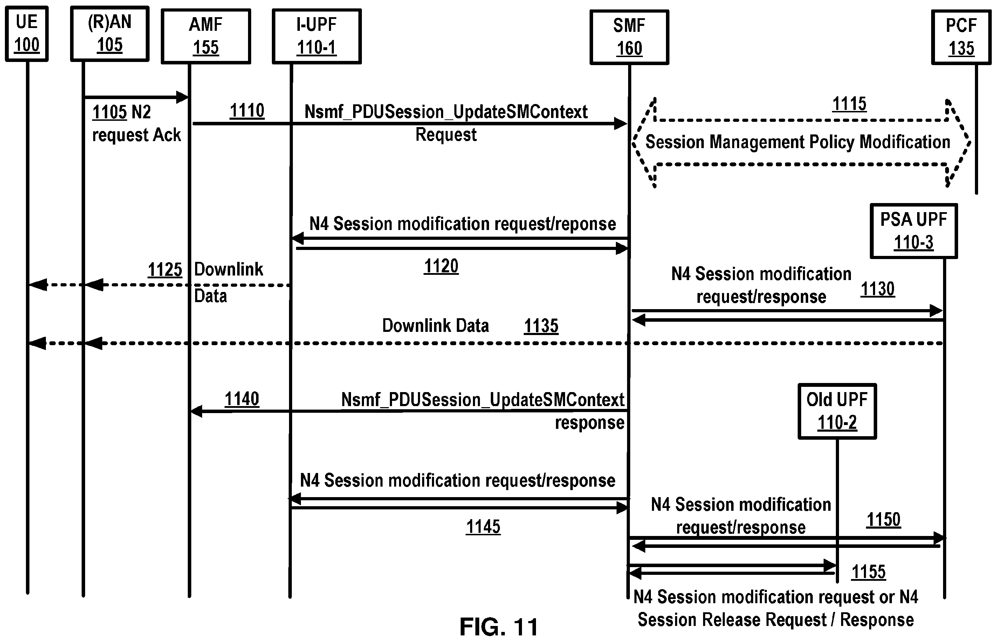

As depicted in example FIG. 10 and FIG. 11, a service request procedure e.g., a UE 100 triggered service request procedure may be used by a UE 100 in CM-IDLE state to request the establishment of a secure connection to an AMF 155. FIG. 11 is continuation of FIG. 10 depicting the service request procedure. The service request procedure may be used to activate a user plane connection for an established PDU session. The service request procedure may be triggered by the UE 100 or the 5GC, and may be used when the UE 100 is in CM-IDLE and/or in CM-CONNECTED and may allow selectively to activate user plane connections for some of the established PDU sessions.

In an example, a UE 100 in CM IDLE state may initiate the service request procedure to send uplink signaling messages, user data, and/or the like, as a response to a network paging request, and/or the like. In an example, after receiving the service request message, the AMF 155 may perform authentication. In an example, after the establishment of signaling connection to the AMF 155, the UE 100 or network may send signaling messages, e.g. PDU session establishment from the UE 100 to a SMF 160, via the AMF 155.

In an example, for any service request, the AMF 155 may respond with a service accept message to synchronize PDU session status between the UE 100 and network. The AMF 155 may respond with a service reject message to the UE 100, if the service request may not be accepted by the network. The service reject message may include an indication or cause code requesting the UE 100 to perform a registration update procedure. In an example, for service request due to user data, network may take further actions if user plane connection activation may not be successful. In an example FIG. 10 and FIG. 11, more than one UPF, e.g., old UPF 110-2 and PDU session Anchor PSA UPF 110-3 may be involved.

In an example, the UE 100 may send to a (R)AN 105 an AN message comprising AN parameters, mobility management, MM NAS service request 1005 (e.g., list of PDU sessions to be activated, list of allowed PDU sessions, security parameters, PDU session status, and/or the like), and/or the like. In an example, the UE 100 may provide the list of PDU sessions to be activated when the UE 100 may re-activate the PDU session(s). The list of allowed PDU sessions may be provided by the UE 100 when the service request may be a response of a paging or a NAS notification, and may identify the PDU sessions that may be transferred or associated to the access on which the service request may be sent. In an example, for the case of NG-RAN, the parameters may include selected PLMN ID, and an establishment cause. The establishment cause may provide the reason for requesting the establishment of an RRC connection. The UE 100 may send NAS service request message towards the AMF 155 encapsulated in an RRC message to the RAN 105.

In an example, if the service request may be triggered for user data, the UE 100 may identify, using the list of PDU sessions to be activated, the PDU session(s) for which the UP connections are to be activated in the NAS service request message. If the service request may be triggered for signaling, the UE 100 may not identify any PDU session(s). If this procedure may be triggered for paging response, and/or the UE 100 may have at the same time user data to be transferred, the UE 100 may identify the PDU session(s) whose UP connections may be activated in MM NAS service request message, by the list of PDU sessions to be activated.

In an example, if the service request over 3GPP access may be triggered in response to a paging indicating non-3GPP access, the NAS service request message may identify in the list of allowed PDU sessions the list of PDU sessions associated with the non-3GPP access that may be re-activated over 3GPP. In an example, the PDU session status may indicate the PDU sessions available in the UE 100. In an example, the UE 100 may not trigger the service request procedure for a PDU session corresponding to a LADN when the UE 100 may be outside the area of availability of the LADN. The UE 100 may not identify such PDU session(s) in the list of PDU sessions to be activated, if the service request may be triggered for other reasons.

In an example, the (R)AN 105 may send to AMF 155 an N2 Message 1010 (e.g., a service request) comprising N2 parameters, MM NAS service request, and/or the like. The AMF 155 may reject the N2 message if it may not be able to handle the service request. In an example, if NG-RAN may be used, the N2 parameters may include the 5G-GUTI, selected PLMN ID, location information, RAT type, establishment cause, and/or the like. In an example, the 5G-GUTI may be obtained in RRC procedure and the (R)AN 105 may select the AMF 155 according to the 5G-GUTI. In an example, the location information and RAT type may relate to the cell in which the UE 100 may be camping. In an example, based on the PDU session status, the AMF 155 may initiate PDU session release procedure in the network for the PDU sessions whose PDU session ID(s) may be indicated by the UE 100 as not available.

In an example, if the service request was not sent integrity protected or integrity protection verification failed, the AMF 155 may initiate a NAS authentication/security procedure 1015.

In an example, if the UE 100 triggers the service request to establish a signaling connection, upon successful establishment of the signaling connection, the UE 100 and the network may exchange NAS signaling.

In an example the AMF 155 may send to the SMF 160 a PDU session update context request 1020 e.g., Nsmf_PDUSession_UpdateSMContext request comprising PDU session ID(s), Cause(s), UE 100 location information, access type, and/or the like.

In an example, the Nsmf_PDUSession_UpdateSMContext request may be invoked by the AMF 155 if the UE 100 may identify PDU session(s) to be activated in the NAS service request message. In an example, the Nsmf_PDUSession_UpdateSMContext request may be triggered by the SMF 160 wherein the PDU session(s) identified by the UE 100 may correlate to other PDU session ID(s) than the one triggering the procedure. In an example, the Nsmf_PDUSession_UpdateSMContext request may be triggered by the SMF 160 wherein the current UE 100 location may be outside the area of validity for the N2 information provided by the SMF 160 during a network triggered service request procedure. The AMF 155 may not send the N2 information provided by the SMF 160 during the network triggered service request procedure.

In an example, the AMF 155 may determine the PDU session(s) to be activated and may send an Nsmf_PDUSession_UpdateSMContext request to SMF 160(s) associated with the PDU session(s) with cause set to indicate establishment of user plane resources for the PDU session(s).

In an example, if the procedure may be triggered in response to paging indicating non-3GPP access, and the list of allowed PDU sessions provided by the UE 100 may not include the PDU session for which the UE 100 was paged, the AMF 155 may notify the SMF 160 that the user plane for the PDU session may not be re-activated. The service request procedure may succeed without re-activating the user plane of any PDU sessions, and the AMF 155 may notify the UE 100.

In an example, if the PDU session ID may correspond to a LADN and the SMF 160 may determine that the UE 100 may be outside the area of availability of the LADN based on the UE 100 location reporting from the AMF 155, the SMF 160 may decide to (based on local policies) keep the PDU session, may reject the activation of user plane connection for the PDU session and may inform the AMF 155. In an example, if the procedure may be triggered by a network triggered service request, the SMF 160 may notify the UPF 110 that originated the data notification to discard downlink data for the PDU sessions and/or to not provide further data notification messages. The SMF 160 may respond to the AMF 155 with an appropriate reject cause and the user plane activation of PDU session may be stopped.

In an example, if the PDU session ID may correspond to a LADN and the SMF 160 may determine that the UE 100 may be outside the area of availability of the LADN based on the UE 100 location reporting from the AMF 155, the SMF 160 may decide to (based on local policies) release the PDU session. The SMF 160 may locally release the PDU session and may inform the AMF 155 that the PDU session may be released. The SMF 160 may respond to the AMF 155 with an appropriate reject cause and the user plane Activation of PDU session may be stopped.

In an example, if the UP activation of the PDU session may be accepted by the SMF 160, based on the location info received from the AMF 155, the SMF 160 may check the UPF 110 Selection 1025 Criteria (e.g., slice isolation requirements, slice coexistence requirements, UPF's 110 dynamic load, UPF's 110 relative static capacity among UPFs supporting the same DNN, UPF 110 location available at the SMF 160, UE 100 location information, Capability of the UPF 110 and the functionality required for the particular UE 100 session. In an example, an appropriate UPF 110 may be selected by matching the functionality and features required for a UE 100, DNN, PDU session type (i.e. IPv4, IPv6, ethernet type or unstructured type) and if applicable, the static IP address/prefix, SSC mode selected for the PDU session, UE 100 subscription profile in UDM 140, DNAI as included in the PCC rules, local operator policies, S-NSSAI, access technology being used by the UE 100, UPF 110 logical topology, and/or the like), and may determine to perform one or more of the following: continue using the current UPF(s); may select a new intermediate UPF 110 (or add/remove an intermediate UPF 110), if the UE 100 has moved out of the service area of the UPF 110 that was previously connecting to the (R)AN 105, while maintaining the UPF(s) acting as PDU session anchor; may trigger re-establishment of the PDU session to perform relocation/reallocation of the UPF 110 acting as PDU session anchor, e.g. the UE 100 has moved out of the service area of thechor UPF 110 which is connecting to RAN 105.

In an example, the SMF 160 may send to the UPF 110 (e.g., new intermediate UPF 110) an N4 session establishment request 1030. In an example, if the SMF 160 may select a new UPF 110 to act as intermediate UPF 110-2 for the PDU session, or if the SMF 160 may select to insert an intermediate UPF 110 for a PDU session which may not have an intermediate UPF 110-2, an N4 session establishment request 1030 message may be sent to the new UPF 110, providing packet detection, data forwarding, enforcement and reporting rules to be installed on the new intermediate UPF. The PDU session anchor addressing information (on N9) for this PDU session may be provided to the intermediate UPF 110-2.

In an example, if a new UPF 110 is selected by the SMF 160 to replace the old (intermediate) UPF 110-2, the SMF 160 may include a data forwarding indication. The data forwarding indication may indicate to the UPF 110 that a second tunnel endpoint may be reserved for buffered DL data from the old I-UPF.

In an example, the new UPF 110 (intermediate) may send to SMF 160 an N4 session establishment response message 1030. In case the UPF 110 may allocate CN tunnel info, the UPF 110 may provide DL CN tunnel info for the UPF 110 acting as PDU session anchor and UL CN tunnel info (e.g., CN N3 tunnel info) to the SMF 160. If the data forwarding indication may be received, the new (intermediate) UPF 110 acting as N3 terminating point may send DL CN tunnel info for the old (intermediate) UPF 110-2 to the SMF 160. The SMF 160 may start a timer, to release the resource in the old intermediate UPF 110-2.

In an example, if the SMF 160 may selects a new intermediate UPF 110 for the PDU session or may remove the old I-UPF 110-2, the SMF 160 may send N4 session modification request message 1035 to PDU session anchor, PSA UPF 110-3, providing the data forwarding indication and DL tunnel information from new intermediate UPF 110.

In an example, if the new intermediate UPF 110 may be added for the PDU session, the (PSA) UPF 110-3 may begin to send the DL data to the new I-UPF 110 as indicated in the DL tunnel information.

In an example, if the service request may be triggered by the network, and the SMF 160 may remove the old I-UPF 110-2 and may not replace the old I-UPF 110-2 with the new I-UPF 110, the SMF 160 may include the data forwarding indication in the request. The data forwarding indication may indicate to the (PSA) UPF 110-3 that a second tunnel endpoint may be reserved for buffered DL data from the old I-UPF 110-2. In this case, the PSA UPF 110-3 may begin to buffer the DL data it may receive at the same time from the N6 interface.

In an example, the PSA UPF 110-3 (PSA) may send to the SMF 160 an N4 session modification response 1035. In an example, if the data forwarding indication may be received, the PSA UPF 110-3 may become as N3 terminating point and may send CN DL tunnel info for the old (intermediate) UPF 110-2 to the SMF 160. The SMF 160 may start a timer, to release the resource in old intermediate UPF 110-2 if there is one.

In an example, the SMF 160 may send to the old UPF 110-2 an N4 session modification request 1045 (e.g., may comprise new UPF 110 address, new UPF 110 DL tunnel ID, and/or the like). In an example, if the service request may be triggered by the network, and/or the SMF 160 may remove the old (intermediate) UPF 110-2, the SMF 160 may send the N4 session modification request message to the old (intermediate) UPF 110-2, and may provide the DL tunnel information for the buffered DL data. If the SMF 160 may allocate new I-UPF 110, the DL tunnel information is from the new (intermediate) UPF 110 may act as N3 terminating point. If the SMF 160 may not allocate a new I-UPF 110, the DL tunnel information may be from the new UPF 110 (PSA) 110-3 acting as N3 terminating point. The SMF 160 may start a timer to monitor the forwarding tunnel. In an example, the old (intermediate) UPF 110-2 may send N4 session modification response message to the SMF 160.

In an example, if the I-UPF 110-2 may be relocated and forwarding tunnel was established to the new I-UPF 110, the old (intermediate) UPF 110-2 may forward its buffered data to the new (intermediate) UPF 110 acting as N3 terminating point. In an example, if the old I-UPF 110-2 may be removed and the new I-UPF 110 may not be assigned for the PDU session and forwarding tunnel may be established to the UPF 110 (PSA) 110-3, the old (intermediate) UPF 110-2 may forward its buffered data to the UPF 110 (PSA) 110-3 acting as N3 terminating point.

In an example, the SMF 160 may send to the AMF 155 an N11 message 1060 e.g., a Nsmf_PDUSession_UpdateSMContext response (comprising: N1 SM container (PDU session ID, PDU session re-establishment indication), N2 SM information (PDU session ID, QoS profile, CN N3 tunnel info, S-NSSAI), Cause), upon reception of the Nsmf_PDUSession_UpdateSMContext request with a cause including e.g., establishment of user plane resources. The SMF 160 may determine whether UPF 110 reallocation may be performed, based on the UE 100 location information, UPF 110 service area and operator policies. In an example, for a PDU session that the SMF 160 may determine to be served by the current UPF 110, e.g., PDU session anchor or intermediate UPF, the SMF 160 may generate N2 SM information and may send an Nsmf_PDUSession_UpdateSMContext response 1060 to the AMF 155 to establish the user plane(s). The N2 SM information may contain information that the AMF 155 may provide to the RAN 105. In an example, for a PDU session that the SMF 160 may determine as requiring a UPF 110 relocation for PDU session anchor UPF, the SMF 160 may reject the activation of UP of the PDU session by sending Nsmf_PDUSession_UpdateSMContext response that may contain N1 SM container to the UE 100 via the AMF 155. The N1 SM container may include the corresponding PDU session ID and PDU session re-establishment indication.

Upon reception of the Namf_EventExposure_Notify from the AMF 155 to the SMF 160, with an indication that the UE 100 is reachable, if the SMF 160 may have pending DL data, the SMF 160 may invoke the Namf_Communication_N1N2MessageTransfer service operation to the AMF 155 to establish the user plane(s) for the PDU sessions. In an example, the SMF 160 may resume sending DL data notifications to the AMF 155 in case of DL data.

In an example, the SMF 160 may send a message to the AMF 155 to reject the activation of UP of the PDU session by including a cause in the Nsmf_PDUSession_UpdateSMContext response if the PDU session may correspond to a LADN and the UE 100 may be outside the area of availability of the LADN, or if the AMF 155 may notify the SMF 160 that the UE 100 may be reachable for regulatory prioritized service, and the PDU session to be activated may not for a regulatory prioritized service; or if the SMF 160 may decide to perform PSA UPF 110-3 relocation for the requested PDU session.

In an example, the AMF 155 may send to the (R)AN 105 an N2 request message 1065 (e.g., N2 SM information received from SMF 160, security context, AMF 155 signaling connection ID, handover restriction list, MM NAS service accept, list of recommended cells / TAs / NG-RAN node identifiers). In an example, the RAN 105 may store the security context, AMF 155 signaling connection Id, QoS information for the QoS flows of the PDU sessions that may be activated and N3 tunnel IDs in the UE 100 RAN 105 context. In an example, the MM NAS service accept may include PDU session status in the AMF 155. If the activation of UP of a PDU session may be rejected by the SMF 160, the MM NAS service accept may include the PDU session ID and the reason why the user plane resources may not be activated (e.g. LADN not available). Local PDU session release during the session request procedure may be indicated to the UE 100 via the session Status.

In an example, if there are multiple PDU sessions that may involve multiple SMF 160s, the AMF 155 may not wait for responses from all SMF 160s before it may send N2 SM information to the UE 100. The AMF 155 may wait for all responses from the SMF 160s before it may send MM NAS service accept message to the UE 100.

In an example, the AMF 155 may include at least one N2 SM information from the SMF 160 if the procedure may be triggered for PDU session user plane activation. AMF 155 may send additional N2 SM information from SMF 160s in separate N2 message(s) (e.g. N2 tunnel setup request), if there is any. Alternatively, if multiple SMF 160s may be involved, the AMF 155 may send one N2 request message to (R)AN 105 after all the Nsmf_PDUSession_UpdateSMContext response service operations from all the SMF 160s associated with the UE 100 may be received. In such case, the N2 request message may include the N2 SM information received in each of the Nsmf_PDUSession_UpdateSMContext response and PDU session ID to enable AMF 155 to associate responses to relevant SMF 160.

In an example, if the RAN 105 (e.g., NG RAN) node may provide the list of recommended cells / TAs / NG-RAN node identifiers during the release procedure, the AMF 155 may include the information from the list in the N2 request. The RAN 105 may use this information to allocate the RAN 105 notification area when the RAN 105 may decide to enable RRC inactive state for the UE 100.

If the AMF 155 may receive an indication, from the SMF 160 during a PDU session establishment procedure that the UE 100 may be using a PDU session related to latency sensitive services, for any of the PDU sessions established for the UE 100 and the AMF 155 has received an indication from the UE 100 that may support the CM-CONNECTED with RRC inactive state, then the AMF 155 may include the UE's RRC inactive assistance information. In an example, the AMF 155 based on network configuration, may include the UE's RRC inactive assistance information.

In an example, the (R)AN 105 may send to the UE 100 a message to perform RRC connection reconfiguration 1070 with the UE 100 depending on the QoS information for all the QoS flows of the PDU sessions whose UP connections may be activated and data radio bearers. In an example, the user plane security may be established.

In an example, if the N2 request may include a MM NAS service accept message, the RAN 105 may forward the MM NAS service accept to the UE 100. The UE 100 may locally delete context of PDU sessions that may not be available in 5GC.

In an example, if the N1 SM information may be transmitted to the UE 100 and may indicate that some PDU session(s) may be re-established, the UE 100 may initiate PDU session re-establishment for the PDU session(s) that me be re-established after the service request procedure may be complete.

In an example, after the user plane radio resources may be setup, the uplink data from the UE 100 may be forwarded to the RAN 105. The RAN 105 (e.g., NG-RAN) may send the uplink data to the UPF 110 address and tunnel ID provided.

In an example, the (R)AN 105 may send to the AMF 155 an N2 request Ack 1105 (e.g., N2 SM information (comprising: AN tunnel info, list of accepted QoS flows for the PDU sessions whose UP connections are activated, list of rejected QoS flows for the PDU sessions whose UP connections are activated)). In an example, the N2 request message may include N2 SM information(s), e.g. AN tunnel info. RAN 105 may respond N2 SM information with separate N2 message (e.g. N2 tunnel setup response). In an example, if multiple N2 SM information are included in the N2 request message, the N2 request Ack may include multiple N2 SM information and information to enable the AMF 155 to associate the responses to relevant SMF 160.

In an example, the AMF 155 may send to the SMF 160 a Nsmf_PDUSession_UpdateSMContext request 1110 (N2 SM information (AN tunnel info), RAT type) per PDU session. If the AMF 155 may receive N2 SM information (one or multiple) from the RAN 105, then the AMF 155 may forward the N2 SM information to the relevant SMF 160. If the UE 100 time zone may change compared to the last reported UE 100 Time Zone then the AMF 155 may include the UE 100 time zone IE in the Nsmf_PDUSession_UpdateSMContext request message.

In an example, if dynamic PCC is deployed, the SMF 160 may initiate notification about new location information to the PCF 135 (if subscribed) by invoking an event exposure notification operation (e.g., a Nsmf_EventExposure_Notify service operation). The PCF 135 may provide updated policies by invoking a policy control update notification message 1115 (e.g., a Npcf_SMPolicyControl_UpdateNotify operation).

In an example, if the SMF 160 may select a new UPF 110 to act as intermediate UPF 110 for the PDU session, the SMF 160 may initiates an N4 session modification procedure 1120 to the new I-UPF 110 and may provide AN tunnel info. The downlink data from the new I-UPF 110 may be forwarded to RAN 105 and UE 100. In an example, the UPF 110 may send to the SMF 160, an N4 session modification response 1120. In an example, the SMF 160 may send to the AMF 155, an Nsmf_PDUSession_UpdateSMContext response 1140.

In an example, if forwarding tunnel may be established to the new I-UPF 110 and if the timer SMF 160 set for forwarding tunnel may be expired, the SMF 160 may sends N4 session modification request 1145 to new (intermediate) UPF 110 acting as N3 terminating point to release the forwarding tunnel. In an example, the new (intermediate) UPF 110 may send to the SMF 160 an N4 session modification response 1145. In an example, the SMF 160 may send to the PSA UPF 110-3 an N4 session modification request 1150, or N4 session release request. In an example, if the SMF 160 may continue using the old UPF 110-2, the SMF 160 may send an N4 session modification request 1155, providing AN tunnel info. In an example, if the SMF 160 may select a new UPF 110 to act as intermediate UPF 110, and the old UPF 110-2 may not be PSA UPF 110-3, the SMF 160 may initiate resource release, after timer expires, by sending an N4 session release request (release cause) to the old intermediate UPF 110-2.

In an example, the old intermediate UPF 110-2 may send to the SMF 160 an N4 session modification response or N4 session release response 1155. The old UPF 110-2 may acknowledge with the N4 session modification response or N4 session release response message to confirm the modification or release of resources. The AMF 155 may invoke the Namf_EventExposure_Notify service operation to notify the mobility related events, after this procedure may complete, towards the NFs that may have subscribed for the events. In an example, the AMF 155 may invoke the Namf_EventExposure_Notify towards the SMF 160 if the SMF 160 had subscribed for UE 100 moving into or out of area of interest and if the UE's current location may indicate that it may be moving into or moving outside of the area of interest subscribed, or if the SMF 160 had subscribed for LADN DNN and if the UE 100 may be moving into or outside of an area where the LADN is available, or if the UE 100 may be in MICO mode and the AMF 155 had notified an SMF 160 of the UE 100 being unreachable and that SMF 160 may not send DL data notifications to the AMF 155, and the AMF 155 may informs the SMF 160 that the UE 100 is reachable, or if the SMF 160 had subscribed for UE 100 reachability status, then the AMF 155 may notify the UE 100 reachability.

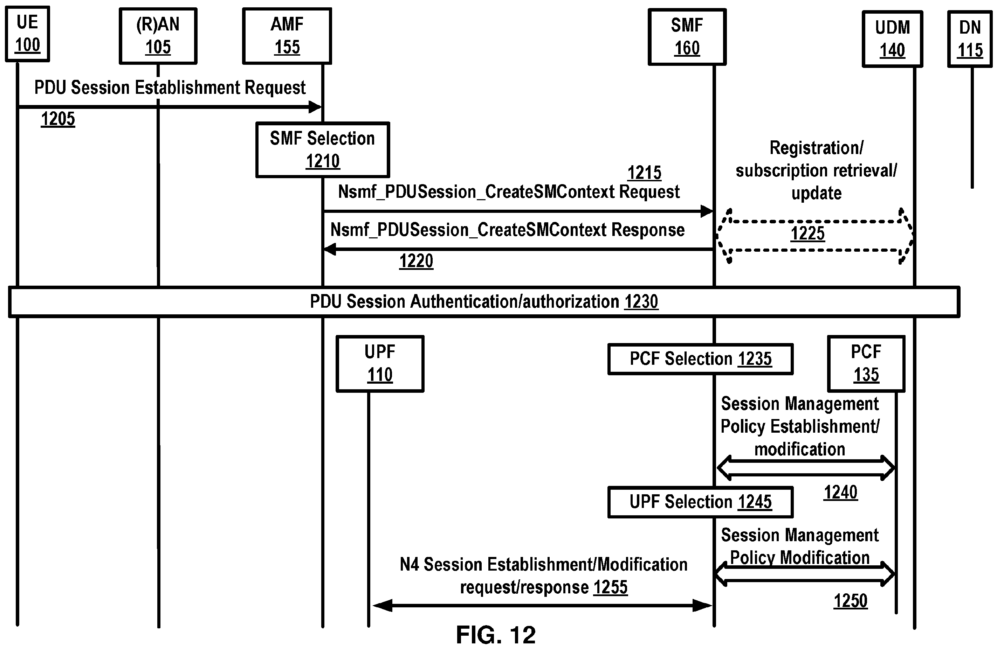

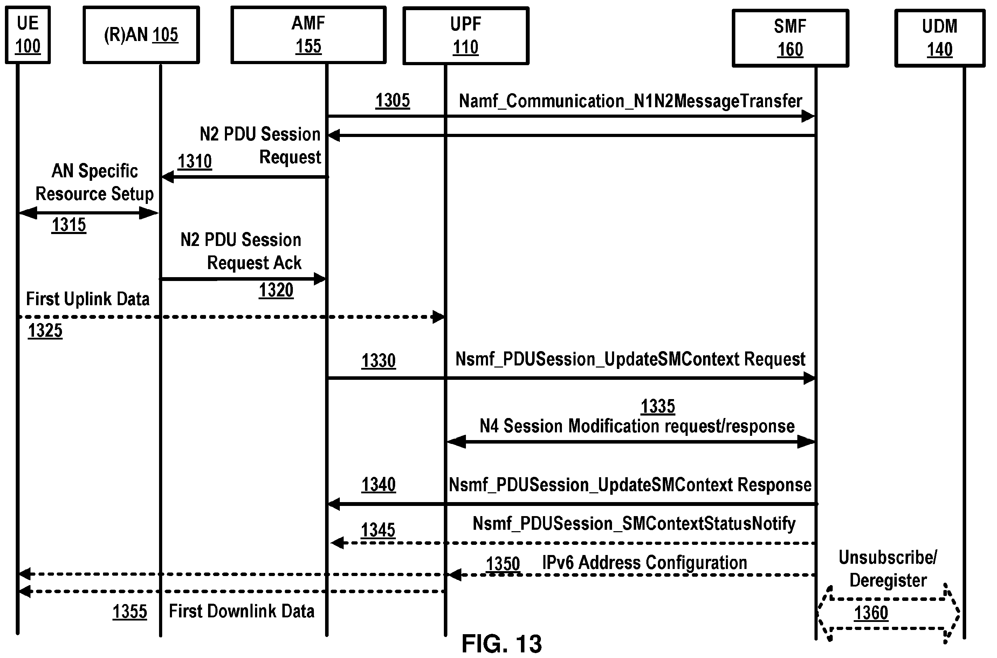

An example PDU session establishment procedure depicted in FIG. 12 and FIG. 13. In an example embodiment, when the PDU session establishment procedure may be employed, the UE 100 may send to the AMF 155 a NAS Message 1205 (or a SM NAS message) comprising NSSAI, S-NSSAI (e.g., requested S-NSSAI, allowed S-NSSAI, subscribed S-NSSAI, and/or the like), DNN, PDU session ID, request type, old PDU session ID, N1 SM container (PDU session establishment request), and/or the like. In an example, the UE 100, in order to establish a new PDU session, may generate a new PDU session ID. In an example, when emergency service may be required and an emergency PDU session may not already be established, the UE 100 may initiate the UE 100 requested PDU session establishment procedure with a request type indicating emergency request. In an example, the UE 100 may initiate the UE 100 requested PDU session establishment procedure by the transmission of the NAS message containing a PDU session establishment request within the N1 SM container. The PDU session establishment request may include a PDU type, SSC mode, protocol configuration options, and/or the like. In an example, the request type may indicate initial request if the PDU session establishment is a request to establish the new PDU session and may indicate existing PDU session if the request refers to an existing PDU session between 3GPP access and non-3GPP access or to an existing PDN connection in EPC. In an example, the request type may indicate emergency request if the PDU session establishment may be a request to establish a PDU session for emergency services. The request type may indicate existing emergency PDU session if the request refers to an existing PDU session for emergency services between 3GPP access and non-3GPP access. In an example, the NAS message sent by the UE 100 may be encapsulated by the in a N2 message towards the AMF 155 that may include user location information and access technology type information. In an example, the PDU session establishment request message may contain SM PDU DN request container containing information for the PDU session authorization by the external DN. In an example, if the procedure may be triggered for SSC mode 3 operation, the UE 100 may include the old PDU session ID which may indicate the PDU session ID of the on-going PDU session to be released, in the NAS message. The old PDU session ID may be an optional parameter which may be included in this case. In an example, the AMF 155 may receive from the the NAS message (e.g., NAS SM message) together with user location information (e.g. cell ID in case of the RAN 105). In an example, the UE 100 may not trigger a PDU session establishment for a PDU session corresponding to a LADN when the UE 100 is outside the area of availability of the LADN.

In an example, the AMF 155 may determine that the NAS message or the SM NAS message may correspond to the request for the new PDU session based on that request type indicates initial request and that the PDU session ID may not be used for any existing PDU session(s) of the UE 100. If the NAS message does not contain an S-NSSAI, the AMF 155 may determine a default S-NSSAI for the requested PDU session either according to the UE 100 subscription, if it may contain only one default S-NSSAI, or based on operator policy. In an example, the AMF 155 may perform SMF 160 selection 1210 and select an SMF 160. If the request type may indicate initial request or the request may be due to handover from EPS, the AMF 155 may store an association of the S-NSSAI, the PDU session ID and a SMF 160 ID. In an example, if the request type is initial request and if the old PDU session ID indicating the existing PDU session may be contained in the message, the AMF 155 may select the SMF 160 and may store an association of the new PDU session ID and the selected SMF 160 ID.

In an example, the AMF 155 may send to the SMF 160, an N11 message 1215, e.g., Nsmf_PDUSession_CreateSMContext request (comprising: SUPI or PEI, DNN, S-NSSAI, PDU session ID, AMF 155 ID, request type, N1 SM container (PDU session establishment request), user location information, access type, PEI, GPSI), or
Nsmf_PDUSession_UpdateSMContext request (SUPI, DNN, S-NSSAI, PDU session ID, AMF 155 ID, request type, N1 SM container (PDU session establishment request), user location information, access type, RAT type, PEI). In an example, if the AMF 155 may not have an association with the SMF 160 for the PDU session ID provided by the UE 100 (e.g when request type indicates initial request), the AMF 155 may invoke the Nsmf_PDUSession_CreateSMContext request, but if the AMF 155 already has an association with an SMF 160 for the PDU session ID provided by the UE 100 (e.g when request type indicates existing PDU session), the AMF 155 may invoke the Nsmf_PDUSession_UpdateSMContext request. In an example, the AMF 155 ID may be the UE's GUAMI which uniquely identifies the AMF 155 serving the UE 100. The AMF 155 may forward the PDU session ID together with the N1 SM container containing the PDU session establishment request received from the UE 100. The AMF 155 may provide the PEI instead of the SUPI when the UE 100 has registered for emergency services without providing the SUPI. In case the UE 100 has registered for emergency services but has not been authenticated, the AMF 155 may indicate that the SUPI has not been authenticated.

In an example, if the request type may indicate neither emergency request nor existing emergency PDU session and, if the SMF 160 has not yet registered and subscription data may not be available, the SMF 160 may register with the UDM 140, and may retrieve subscription data 1225 and subscribes to be notified when subscription data may be modified. In an example, if the request type may indicate existing PDU session or existing emergency PDU session, the SMF 160 may determine that the request may be due to handover between 3GPP access and non-3GPP access or due to handover from EPS. The SMF 160 may identify the existing PDU session based on the PDU session ID. The SMF 160 may not create a new SM context but instead may update the existing SM context and may provide the representation of the updated SM context to the AMF 155 in the response. if the request type may be initial request and if the old PDU session ID may be included in Nsmf_PDUSession_CreateSMContext request, the SMF 160 may identify the existing PDU session to be released based on the old PDU session ID.

In an example, the SMF 160 may send to the AMF 155, the N11 message response 1220, e.g., either a PDU session create/update response,
Nsmf_PDUSession_CreateSMContext response 1220 (cause, SM context ID or N1 SM container (PDU session reject(cause))) or an Nsmf_PDUSession_UpdateSMContext response.

In an example, if the SMF 160 may perform secondary authorization/authentication 1230 during the establishment of the PDU session by a DN-AAA server, the SMF 160 may select a UPF 110 and may trigger a PDU session establishment authentication/authorization.

In an example, if the request type may indicate initial request, the SMF 160 may select an SSC mode for the PDU session. The SMF 160 may select one or more UPFs as needed. In case of PDU type IPv4 or IPv6, the SMF 160 may allocate an IP address/prefix for the PDU session. In case of PDU type IPv6, the SMF 160 may allocate an interface identifier to the UE 100 for the UE 100 to build its link-local address. For Unstructured PDU type the SMF 160 may allocate an IPv6 prefix for the PDU session and N6 point-to-point tunneling (based on UDP/IPv6).

In an example, if dynamic PCC is deployed, the may SMF 160 performs PCF 135 selection 1235. If the request type indicates existing PDU session or existing emergency PDU session, the SMF 160 may use the PCF 135 already selected for the PDU session. If dynamic PCC is not deployed, the SMF 160 may apply local policy.

In an example, the SMF 160 may perform a session management policy establishment procedure 1240 to establish a PDU session with the PCF 135 and may get the default PCC Rules for the PDU session. The GPSI may be included if available at the SMF 160. If the request type in 1215 indicates existing PDU session, the SMF 160 may notify an event previously subscribed by the PCF 135 by a session management policy modification procedure and the PCF 135 may update policy information in the SMF 160. The PCF 135 may provide authorized session-AMBR and the authorized 5QI and ARP to SMF 160. The PCF 135 may subscribe to the IP allocation/release event in the SMF 160 (and may subscribe other events).

In an example, the PCF 135, based on the emergency DNN, may set the ARP of the PCC rules to a value that may be reserved for emergency services.

In an example, if the request type in 1215 indicates initial request, the SMF 160 may select an SSC mode for the PDU session. The SMF 160 may select 1245 one or more UPFs as needed. In case of PDU type IPv4 or IPv6, the SMF 160 may allocate an IP address/prefix for the PDU session. In case of PDU type IPv6, the SMF 160 may allocate an interface identifier to the UE 100 for the UE 100 to build its link-local address. For unstructured PDU type the SMF 160 may allocate an IPv6 prefix for the PDU session and N6 point-to-point tunneling (e.g., based on UDP/IPv6). In an example, for Ethernet PDU type PDU session, neither a MAC nor an IP address may be allocated by the SMF 160 to the UE 100 for this PDU session.

In an example, if the request type in 1215 is existing PDU session, the SMF 160 may maintain the same IP address/prefix that may be allocated to the UE 100 in the source network.

In an example, if the request type in 1215 indicates existing PDU session referring to an existing PDU session moved between 3GPP access and non-3GPP access, the SMF 160 may maintain the SSC mode of the PDU session, e.g., the current PDU session Anchor and IP address. In an example, the SMF 160 may trigger e.g. new intermediate UPF 110 insertion or allocation of a new UPF 110. In an example, if the request type indicates emergency request, the SMF 160 may select 1245 the UPF 110 and may select SSC mode 1.

In an example, the SMF 160 may perform a session management policy modification 1250 procedure to report some event to the PCF 135 that has previously subscribed. If request type is initial request and dynamic PCC is deployed and PDU type is IPv4 or IPv6, the SMF 160 may notify the PCF 135 (that has previously subscribed) with the allocated UE 100 IP address/prefix.

In an example, the PCF 135 may provide updated policies to the SMF 160. The PCF 135 may provide authorized session-AMBR and the authorized 5QI and ARP to the SMF 160.

In an example, if request type indicates initial request, the SMF 160 may initiate an N4 session establishment procedure 1255 with the selected UPF 110. The SMF 160 may initiate an N4 session modification procedure with the selected UPF 110. In an example, the SMF 160 may send an N4 session establishment/modification request 1255 to the UPF 110 and may provide packet detection, enforcement, reporting rules, and/or the like to be installed on the UPF 110 for this PDU session. If CN tunnel info is allocated by the SMF 160, the CN tunnel info may be provided to the UPF 110. If the selective user plane deactivation is required for this PDU session, the SMF 160 may determine the Inactivity Timer and may provide it to the UPF 110. In an example, the UPF 110 may acknowledges by sending an N4 session establishment/modification response 1255. If CN tunnel info is allocated by the UPF, the CN tunnel info may be provided to SMF 160. In an example, if multiple UPFs are selected for the PDU session, the SMF 160 may initiate N4 session establishment/modification procedure 1255 with each UPF 110 of the PDU session.

In an example, the SMF 160 may send to the AMF 155 an Namf_Communication_N1N2MessageTransfer 1305 message (comprising PDU session ID, access type, N2 SM information (PDU session ID, QFI(s), QoS profile(s), CN tunnel info, S-NSSAI, session-AMBR, PDU session type, and/or the like), N1 SM container (PDU session establishment accept (QoS Rule(s), selected SSC mode, S-NSSAI, allocated IPv4 address, interface identifier, session-AMBR, selected PDU session type, and/or the like))). In case of multiple UPFs are used for the PDU session, the CN tunnel info may comprise tunnel information related with the UPF 110 that terminates N3. In an example, the N2 SM information may carry information that the AMF 155 may forward to the (R)AN 105 (e.g., the CN tunnel info corresponding to the core network address of the N3 tunnel corresponding to the PDU session, one or multiple QoS profiles and the corresponding QFIs may be provided to the (R)AN 105, the PDU session ID may be used by AN signaling with the UE 100 to indicate to the UE 100 the association between AN resources and a PDU session for the UE100, and/or the like). In an example, a PDU session may be associated to an S-NSSAI and a DNN. In an example, the N1 SM container may contain the PDU session establishment accept that the AMF 155 may provide to the UE 100. In an example, multiple QoS rules and QoS profiles may be included in the PDU session establishment accept within the N1 SM and in the N2 SM information. In an example, the Namf_Communication_N1N2MessageTransfer 1305 may further comprise the PDU session ID and information allowing the AMF 155 to know which access towards the UE 100 to use.

In an example, the AMF 155 may send to the (R)AN105 an N2 PDU session request 1310 (comprising N2 SM information, NAS message (PDU session ID, N1 SM container (PDU session establishment accept, and/or the like))). In an example, the AMF 155 may send the NAS message 1310 that may comprise PDU session ID and PDU session establishment accept targeted to the UE 100 and the N2 SM information received from the SMF 160 within the N2 PDU session request 1310 to the (R)AN 105.

In an example, the (R)AN 105 may issue AN specific signaling exchange 1315 with the UE 100 that may be related with the information received from SMF 160. In an example, in case of a 3GPP RAN 105, an RRC connection reconfiguration procedure may take place with the UE 100 to establish the necessary RAN 105 resources related to the QoS Rules for the PDU session request 1310. In an example, (R)AN 105 may allocate (R)AN 105 N3 tunnel information for the PDU session. In case of dual connectivity, the master RAN 105 node may assign some (zero or more) QFIs to be setup to a master RAN 105 node and others to the secondary RAN 105 node. The tunnel info may comprise a tunnel endpoint for each involved RAN 105 node, and the QFIs assigned to each tunnel endpoint. A QFI may be assigned to either the master RAN 105 node or the secondary RAN 105 node. In an example, (R)AN 105 may forward the NAS message 1310 (PDU session ID, N1 SM container (PDU session establishment accept)) to the UE 100. The (R)AN 105 may provide the NAS message to the UE 100 if the necessary RAN 105 resources are established and the allocation of (R)AN 105 tunnel information are successful.

In an example, the N2 PDU session response 1320 may comprise a PDU session ID, cause, N2 SM information (PDU session ID, AN tunnel info, list of accepted/rejected QFI(s)), and/or the like. In an example, the tunnel info may correspond to the access network address of the N3 tunnel corresponding to the PDU session.

In an example, the AMF 155 may forward the N2 SM information received from (R)AN 105 to the SMF 160 via a Nsmf_PDUSession_UpdateSMContext request 1330 (comprising: N2 SM information, request type, and/or the like). In an example, if the list of rejected QFI(s) is included in N2 SM information, the SMF 160 may release the rejected QFI(s) associated QoS profiles.

In an example, the SMF 160 may initiate an N4 session modification procedure 1335 with the UPF110. The SMF 160 may provide AN tunnel info to the UPF 110 as well as the corresponding forwarding rules. In an example, the UPF 110 may provide an N4 session modification response 1335 to the SMF 160160.

In an example, the SMF 160 may send to the AMF 155 an Nsmf_PDUSession_UpdateSMContext response 1340 (Cause). In an example, the SMF 160 may subscribe to the UE 100 mobility event notification from the AMF 155 (e.g. location reporting, UE 100 moving into or out of area of interest), after this step by invoking Namf_EventExposure_Subscribe service operation. For LADN, the SMF 160 may subscribe to the UE 100 moving into or out of LADN service area event notification by providing the LADN DNN as an indicator for the area of interest. The AMF 155 may forward relevant events subscribed by the SMF 160.

In an example, the SMF 160 may send to the AMF 155, a Nsmf_PDUSession_SMContextStatusNotify (release) 1345. In an example, if during the procedure, any time the PDU session establishment is not successful, the SMF 160 may inform the AMF 155 by invoking Nsmf_PDUSession_SMContextStatusNotify(release) 1345. The SMF 160 may releases any N4 session(s) created, any PDU session address if allocated (e.g IP address) and may release the association with the PCF 135.

In an example, in case of PDU type IPv6, the SMF 160 may generate an IPv6 Router Advertisement 1350 and may send it to the UE 100 via N4 and the UPF 110.

In an example, if the PDU session may not be established, the SMF 160 may unsubscribe 1360 to the modifications of session management subscription data for the corresponding (SUPI, DNN, S-NSSAI), using Nudm_SDM_Unsubscribe (SUPI, DNN, S-NSSAI), if the SMF 160 is no more handling a PDU session of the UE 100 for this (DNN, S-NSSAI). In an example, if the PDU session may not be established, the SMF 160 may deregister 1360 for the given PDU session using Nudm_UECM_Deregistration (SUPI, DNN, PDU session ID).

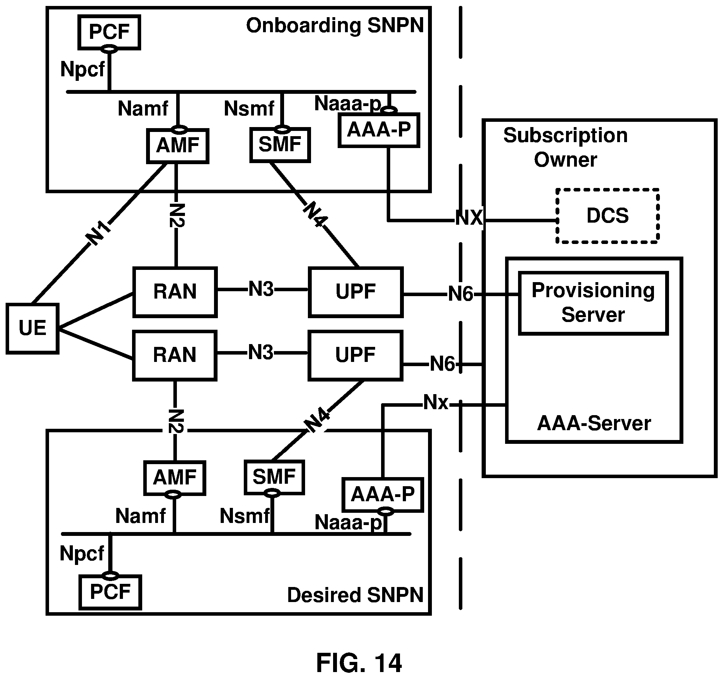

FIG. 14 illustrates another example of a mobile communication network in which embodiments of the present disclosure may be implemented. The mobile communication network depicted in FIG. 14 includes a wireless device 1410, a base station 1420, a physical core network deployment of one or more network functions 1430 (henceforth "CN deployment 1430"), and a physical core network deployment of one or more network functions 1440 (henceforth "CN deployment 1440"). The deployment 1430 and the deployment 1440 may be elements of a core network.

The wireless device 1410 may communicate with the base station 1420 over an air interface 1470. The communication direction from the wireless device 1410 to the base station 1420 over the air interface is known as uplink, and the communication direction from the base station 1420 to the wireless device 1410 over the air interface 1470 is known as downlink. Downlink transmissions may be separated from uplink transmissions using FDD, TDD, and/or some combination of the two duplexing techniques. FIG. 14 shows a single wireless device 1410 and a single base station 1420, but it will be understood that the wireless device 1410 may communicate with any number of base stations or other access network components over the air interface 1470, and that the base station 1420 may communicate with any number of wireless devices over the air interface 1470.

The wireless device 1410 may comprise a processing system 1411 and a memory 1412. The memory 1412 may comprise one or more computer-readable media, for example, one or more non-transitory computer readable media. The memory 1412 may include instructions 1413. The processing system 1411 may process and/or execute the instructions 1413. Processing and/or execution of the instructions 1413 may cause the processing system 1411 to perform one or more functions or activities. The memory 1412 may include data (not shown). One of the functions or activities performed by the processing system 1411 may be to store data in the memory 1412 and/or retrieve previously-stored data from the memory 1412. In an example, downlink data received from the base station 1420 may be stored in the memory 1412, and uplink data for transmission to the base station 1420 may be retrieved from the memory 1412. The wireless device 1410 may communicate with the base station 1420 using a transmission processing system 1414 and a reception processing system 1415. The wireless device 1410 may comprise one or more antennas 1416 to access the air interface 1470. Although not shown in FIG. 14, the transmission processing system 1414 and/or the reception processing system 1415 may be coupled to a dedicated memory that is analogous to but separate from the memory 1412, and comprises instructions that may be processed and/or executed to carry out one or more of their respective functionalities.

The wireless device 1410 may comprise one or more other elements 1419. The one or more other elements 1419 may comprise software and/or hardware that provide features and/or functionalities, for example, a speaker, a microphone, a keypad, a display, a touchpad, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, a global positioning sensor (GPS) and/or the like). The wireless device 1410 may receive user input data from and/or provide user output data to the one or more one or more other elements 1419. The one or more other elements 1419 may comprise a power source. The wireless device 1410 may receive power from the power source and may be configured to distribute the power to the other components in the wireless device 1410. The power source may comprise one or more sources of power, for example, a battery, a solar cell, a fuel cell, or any combination thereof.

The wireless device 1410 may transmit data to the base station 1420 via the air interface 1470. To perform the transmission, the processing system 1411 may implement layer 3 and layer 2 open systems interconnection (OSI) functionality to process the data for uplink transmission. Layer 3 may include a radio resource control layer (RRC). Layer 14 may include a service data application protocol layer (SDAP), a packet data convergence protocol layer (PDCP), a radio link control layer (RLC), and a media access control layer (MAC). The data may be provided to the transmission processing system 1414, which may implement layer 1 OSI functionality. Layer 1 may include a physical layer (PHY). The wireless device 1410 may transmit the data over the air interface 1470 using one or more antennas 1416. For scenarios where the one or more antennas 1416 include multiple antennas, the multiple antennas may be used to perform one or more multi-antenna techniques, such as spatial multiplexing (e.g., single-user multiple-input multiple output (MIMO) or multi-user MIMO), transmit/receive diversity, and/or beamforming.

The wireless device 1410 may receive downlink data from the base station 1420 over the air interface 1470. The downlink data may be received via the one or more antennas 1416. The reception processing system 1415 may implement layer 1 OSI functionality on the received downlink data and may provide the data to the processing system 1411. The processing system 1411 may implement layer 2 and layer 3 OSI functionality to process the received downlink data. The base station 1420 may comprise elements analogous to the elements of the wireless device 1410. The base station 1420 may comprise a processing system 1421 and a memory 1422. The memory 1422 may comprise one or more computer-readable media, for example, one or more non-transitory computer readable media. The memory 1422 may include instructions 1423. The processing system 1421 may process and/or execute the instructions 1423. Processing and/or execution of the instructions 1423 may cause the processing system 1421 to perform one or more functions or activities. The memory 1422 may include data (not shown). One of the functions or activities performed by the processing system 1421 may be to store data in the memory 1422 and/or retrieve previously-stored data from the memory 1422. The base station 1420 may communicate with the wireless device 1410 using a transmission processing system 1424 and a reception processing system 1425. The base station 1420 may comprise one or more antennas 1426 to access the air interface 1470. The processing system 1421 may implement layer 14 and layer 3 OSI functionality. The transmission processing system 1424 and the reception processing system 1425 may implement layer 1 OSI functionality to perform transmission of downlink data and reception of uplink data, respectively.

The base station 1420 may comprise an interface system 1427. The interface system 1427 may communicate with one or more elements of the core network via an interface 1480. The interface 1480 may be wired and/or wireless and the interface system 1427 may include one or more components suitable for communicating via the interface 1480. In FIG. 14, the interface 1480 connects the base station 1420 to a single CN deployment 1430, but it will be understood that the wireless device 1410 may communicate with any number of CN deployments over the interface 1480, and that the CN deployment 1430 may communicate with any number of base stations over the interface 1480. The base station 1420 may comprise one or more other elements 1429 analogous to one or more of the one or more other elements 1419.

The CN deployment 1430 may comprise one or more network functions (NFs). For example, the CN deployment 1430 may comprise an AMF and/or a UPF analogous to the AMF and UPF depicted in FIG. 1. The CN deployment 1430 may comprise elements analogous to the elements of the wireless device 1410 and the base station 1420, as described above. The CN deployment 1430 may comprise a processing system 1431 and a memory 1432. The memory 1432 may comprise one or more computer-readable media, for example, one or more non-transitory computer readable media. The memory 1432 may include instructions 1433. The processing system 1431 may process and/or execute the instructions 1433. Processing and/or execution of the instructions 1433 may cause the processing system 1431 to perform one or more functions or activities. The memory 1432 may include data (not shown). One of the functions or activities performed by the processing system 1431 may be to store data in the memory 1432 and/or retrieve previously-stored data from the memory 1432. The CN deployment 1430 may access the interface 1480 using an interface system 1437. The CN deployment 1430 may also use the interface system 1437 to access an interface 1490. The CN deployment 1430 may use the interface 1490 to communicate with one or more data networks (analogous to, for example, the DN(s) depicted in FIG. 1 and/or one or more other CN deployments, including the CN deployment 1440 depicted in FIG. 14. The CN deployment 1430 may comprise one or more other elements 1439.

The CN deployment 1440 may comprise elements analogous to the elements of the CN deployment 1430, as described above. The CN deployment 1440 may comprise a processing system 1441 and a memory 1442. The memory 1442 may comprise one or more computer-readable media, for example, one or more non-transitory computer readable media. The memory 1442 may include instructions 1443. The processing system 1441 may process and/or execute the instructions 1443. Processing and/or execution of the instructions 1443 may cause the processing system 1441 to perform one or more functions or activities. The memory 1442 may include data (not shown). One of the functions or activities performed by the processing system 1441 may be to store data in the memory 1442 and/or retrieve previously-stored data from the memory 1442. The CN deployment 1440 may access the interface 1490 using an interface system 1447. The CN deployment 1440 may comprise one or more other elements.

The processing system 1411, the processing system 1421, the processing system 1431, and/or the processing system 1441 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1411, the processing system 1421, the processing system 1431, and/or the processing system 1441 may perform signal coding/processing, data processing, power control, input/output processing, and/or any other functionality that may enable the wireless device 1410, base station 1420, CN deployment 1430, and/or CN deployment 1440 to operate in a mobile communications system.

Each CN deployment may comprise one or more network functions. Depending on the context in which the term is used, a network function (NF) may refer to a particular set of functionalities and/or one or more physical elements configured to perform those functionalities (e.g., a processing system and memory comprising instructions that, when executed by the processing system, cause the processing system to perform the functionalities). There are many different types of NF and each type of NF may be associated with a different set of functionalities. Different NFs may be flexibly deployed at different locations (for example, in different physical core network deployments) or in a same location (for example, co-located in the same physical core network deployment). Moreover, physical CN deployment are not limited to implementation of NFs. For example, a particular physical CN deployment may further include a base station or portions therefor and/or a data network or portions thereof. Accordingly, one or more NFs implemented on a particular physical core network deployment may be co-located with one or more non-core elements, including elements of an access network or data network.

Many cellular networks may deployed as a PLMN or NPN (SNPN). A UE may access services of a PLMN via an SNPN. A UE may access services of a SNPN via a PLMN.

In an example embodiment, default UE credentials may be information that the UE have before the actual onboarding procedure to make it uniquely identifiable and verifiably secure. A Default Credential Server (DCS) may be a server that can authenticate a UE with default UE credentials or provide means to another entity to do it. A non public network (NPN) may be a private network deployed for an organization, specific application, and/or the like. NPN credentials or SNPN credentials may be information that the UE uses for authentication to access a NPN or a SNPN. (S)NPN credentials may be 3GPP credentials or non-3GPP credentials. An onboarding network (ON) may provide initial registration and/or access to the UE for UE Onboarding. A provisioning server may be a server that provisions the authenticated/authorized UE with the subscription data and optionally other configuration information. Subscription Owner (SO) may be an entity that stores and as result of the UE onboarding procedures provide the subscription data and optionally other configuration information via a provisioning server (PS) to the UE. UE onboarding may comprise provisioning of information, to a UE and within the network, required for the UE to get authorized access and connectivity to an NPN. A unique UE identifier may identify the UE in the network and the DCS and may be assigned and configured by the DCS. The unique UE identifier may be unique within the DCS and may take the form of (or comprise) a network access identifier (NAI) using the NAI RFC 7542.

In an example embodiment as depicted in FIG. 14, a UE may access an ON. The ON may be a separate network. The ON may be a SNPN as depicted in FIG. 14. The ON may be PLMN, PNI-NPN, and/or the like. A desired network (as depicted in FIG. 14: desired SNPN) may be a SNPN, NPN or a PLMN. FIG. 14 depicts UE onboarding and remote provisioning, in particular for UE's subscription to standalone non-public networks. The UEs without subscription to the desired SNPN may temporarily register to a 5G network that supports UE onboarding and to establish a restricted PDU Session for reception of a newly assigned subscription for the desired SNPN from the network entity for provisioning.

In an example, a SNPN may be deployed to support audio/video applications (includes television and radio studios, live news-gathering, sports events, music festivals, medical operating, lecture hall, press center, trade fair, company/TV evening) for Program Making and Special Events (PMSE) equipment, which has no user interfaces (screens and keyboards) or physical ports (network ports, USB ports, and card slots), such as microphones, speakers, headphones, cameras, recorders, mixers, consoles. The PMSE equipment may be provisioned/updated during UE onboarding at the onboarding 5G Network. A AAA Server may act as the provisioning server and provisions the UE with a newly assigned subscription (non-3GPP identities e.g. non-IMSI and credentials) for the desired SNPN. If the onboarding 5G network is PLMN or PNI-NPN, the UE may have a subscription and credentials to the PLMN for the UE to be uniquely identifiable and verifiably secure during onboarding and remote provisioning. If the onboarding 5G network is SNPN, the UE may have default UE credentials e.g., provided by a manufacturer, for the UE to be uniquely identifiable and verifiably secure during onboarding and remote provisioning.

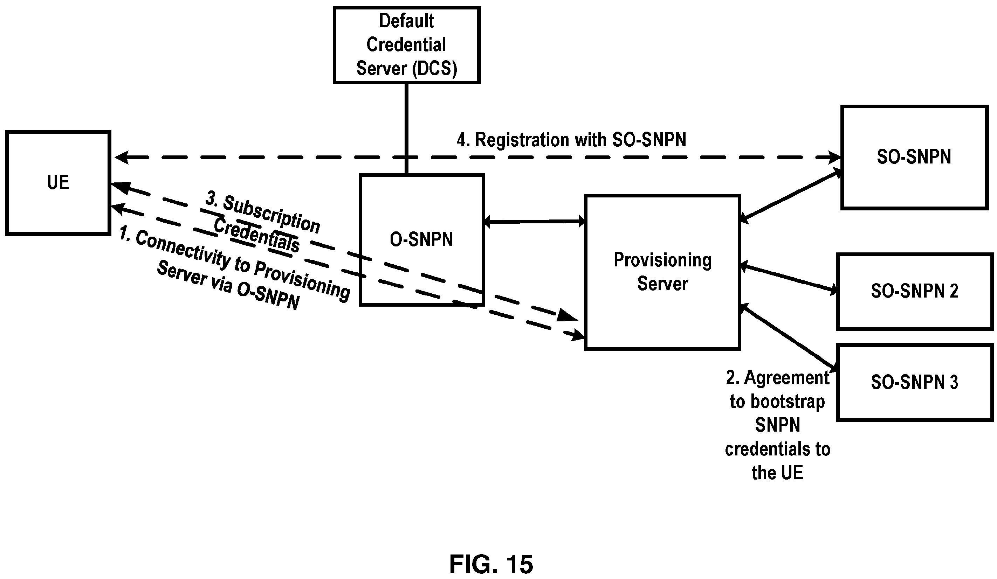

In an example embodiment, an onboarding network may be a SNPN (O-SNPN) as depicted in FIG. 15. In an example embodiment as depicted in FIG. 15 a procedure may allow a UE, which is not initially provisioned with subscription credentials to access an ON e.g., an onboarding SNPN (O-SNPN) and to obtain subscription credentials and configuration for an subscription owner SNPN (SO-SNPN) which may be the same as or different from the O-SNPN. In an example, the UE may select the O-SNPN based on information broadcasted by the O-SNPN and may register to it for onboarding service to obtain connectivity to the provisioning server. If the UE is not configured with network selection parameters for O-SNPN, the O-SNPN may be manually selected, or the UE may randomly select a network that is available and supports onboarding functionalities. If the UE fails to complete the remote provisioning through the selected O-SNPN (e.g., the UE fails the authentication by the DCS), the UE may select another O-SNPN to try the process again. During the registration procedure the O-SNPN may authenticate the UE with the default credential server (DCS) to determine whether the UE is a genuine device subject to onboarding and authorized to access a provisioning server via a configuration PDU session. Upon establishment of connectivity to the provisioning server, the UE may be provisioned with the subscription credentials for the SO-SNPN (i.e. SNPN that will own the UE's subscription) and additional configuration data. The UE may de-register from the O-SNPN, and may perform a network selection, and may register the SO-SNPN using the provisioned subscription credentials and configuration data.

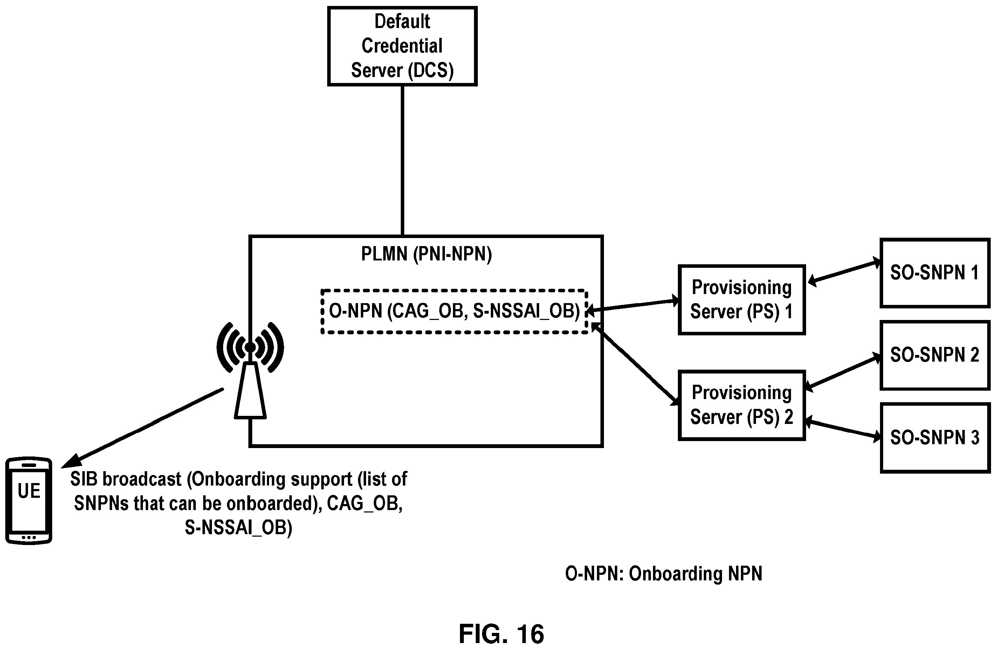

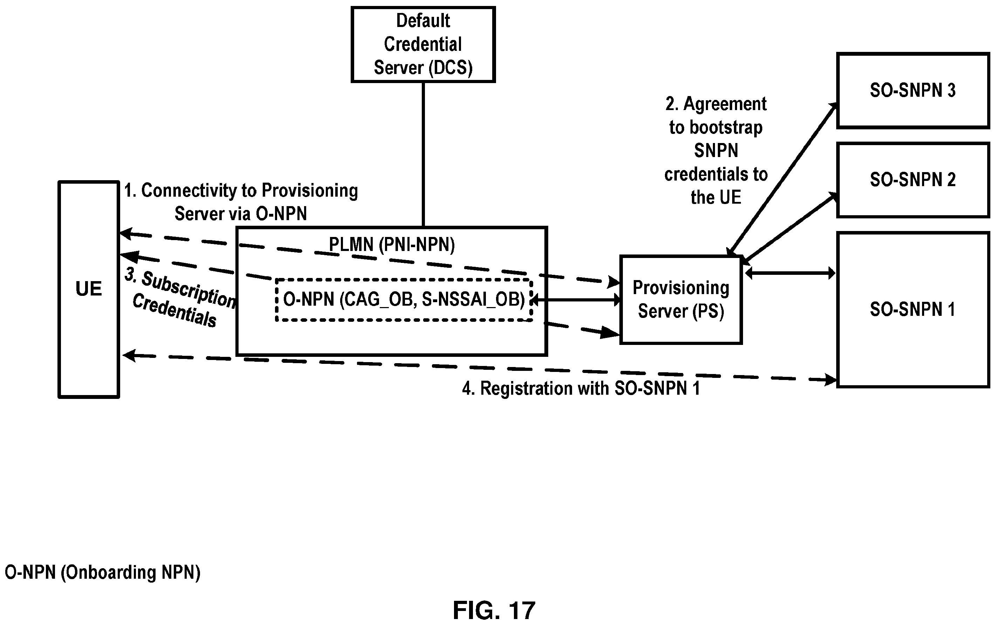

In an example embodiment as depicted in FIG. 16 and FIG. 17, the onboarding network may be an NPN (O-NPN) integrated in a PLMN, SNPN, or another network. The O-NPN may be identified and accessed by a UE by a specific network ID (NID), CAG ID, S-NSSAI, DNN, a combination of PLMN ID and NID, and/or the like. One or more provisioning servers may have an agreement with one or more desired SNPNs (SO-SNPNs).

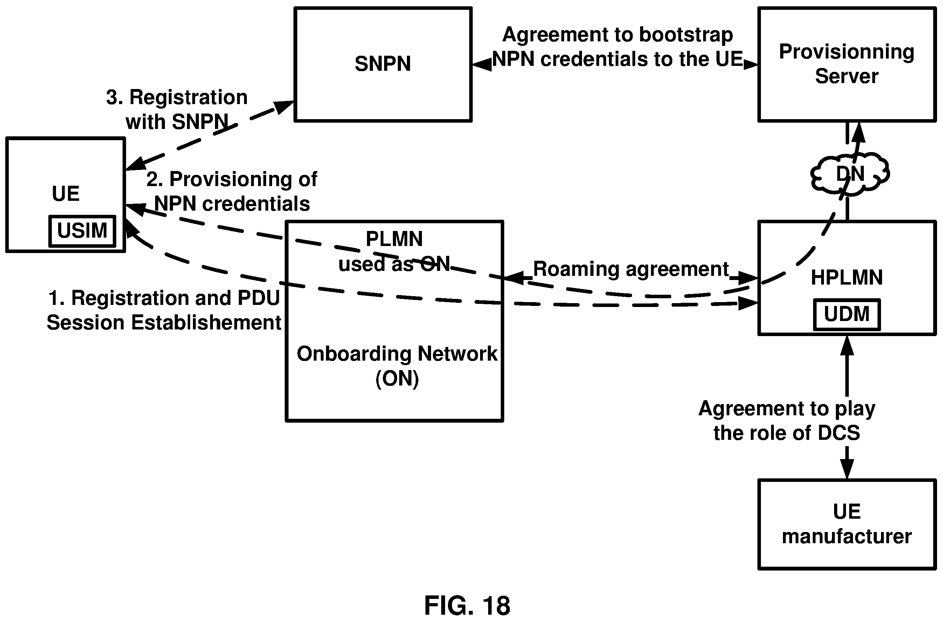

In an example embodiment as depicted in FIG. 18, a PLMN may be employed for onboarding of a UE. The UE may be configured with default credentials in a universal subscriber identity module (USIM) to attach to any PLMN in which the UE can register with the default credentials, e.g., an Onboarding Network (ON). This enables UEs to be provisioned with necessary network credentials and configuration for the SNPN that will own the UE's subscription. The UE may be manufactured with default credentials that consist in a USIM profile that may be used for UE onboarding. The USIM profile may be issued by any PLMN operator the manufacturer has an agreement with. The PLMN that issued the USIM profile is referred to as HPLMN in FIG. 18. The UDM (or HSS) of the HPLMN plays the role of default credential server (DCS) and the provisioning server (PS) is in a DN that the HPLMN provides access to. As part of the agreement between the UE manufacturer and the HPLMN, the UE subscription in the HPLMN may allow access to a DN that provides connectivity to the PS. Any PLMN available at the location where the UE is when performing UE onboarding may be used as ON, as long as it has an agreement with the HPLMN. At power-up, the UE may not have information for SNPN selection and therefore performs normal PLMN selection, registers and establishes a PDU Session using normal procedures. The UE subscription corresponding to the USIM profile contains a default Subscribed S-NSSAI and a default DNN that are appropriate to reach the PS; consequently a PDU Session that provides access to the PS may be established without the UE having to indicate any NSSAI or DNN information. The UE may connect to the PS through the established PDU session for onboarding. The HPLMN may provides a GPSI of the UE subscription to the PS e.g., using header enrichment. Upon establishment of connectivity to the PS, the UE may be provisioned with NPN credentials (for the SNPN that will own the UE's subscription) and additional configuration data. Then the UE may deregister from the PLMN and, using the information acquired during UE onboarding, performs a new network selection and registers using the provisioned NPN credentials with the SNPN owning the UE's subscription.

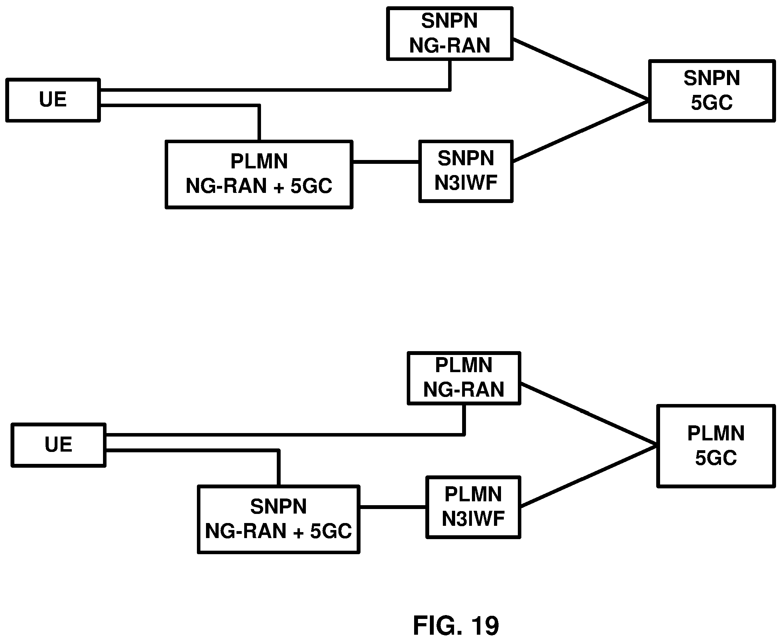

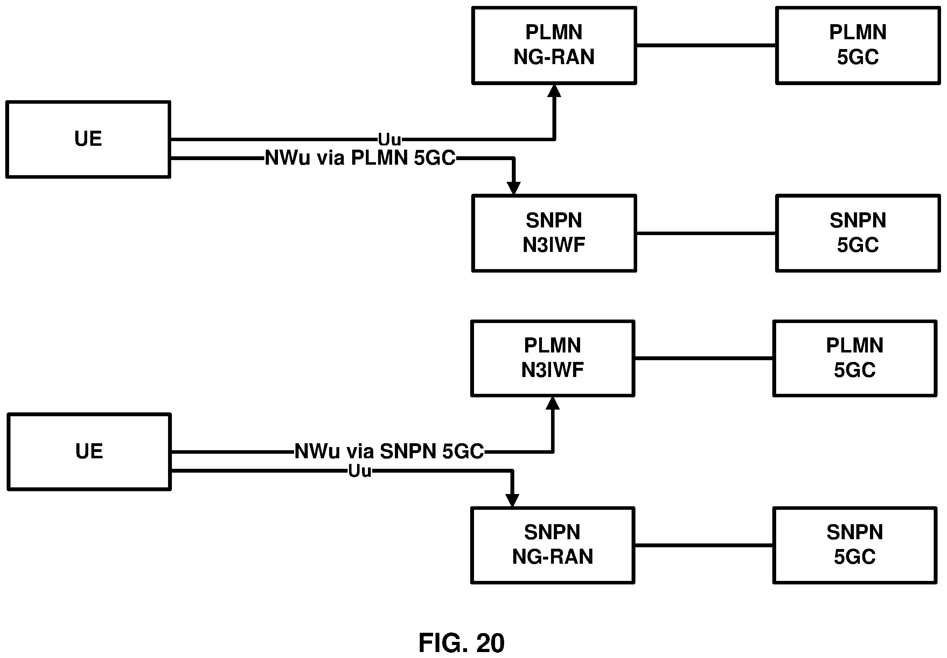

In an example embodiment as depicted in FIG. 19 and FIG. 20, an N3IWF or an interworking function may be employed for connectivity of two or more networks. A UE may access services of a PLMN via an SNPN. A UE may access services of a SNPN via a PLMN. A UE may access services of a SNPN via another SNPN. Figure 19 depicts a scenario where the UPF PSA of a PDU session is in SNPN. A dual radio UE may employ one radio to register under the SNPN NG-RAN, and the other radio to register under the SNPN N3IWF via the PLMN NG-RAN and 5GC. From SNPN 5GC point of view, the UE may be registered under both 3GPP access and non-3GPP access. FIG. 19 depicts the example of a dual radio UE. FIG. 20 depicts the example of a single radio UE.

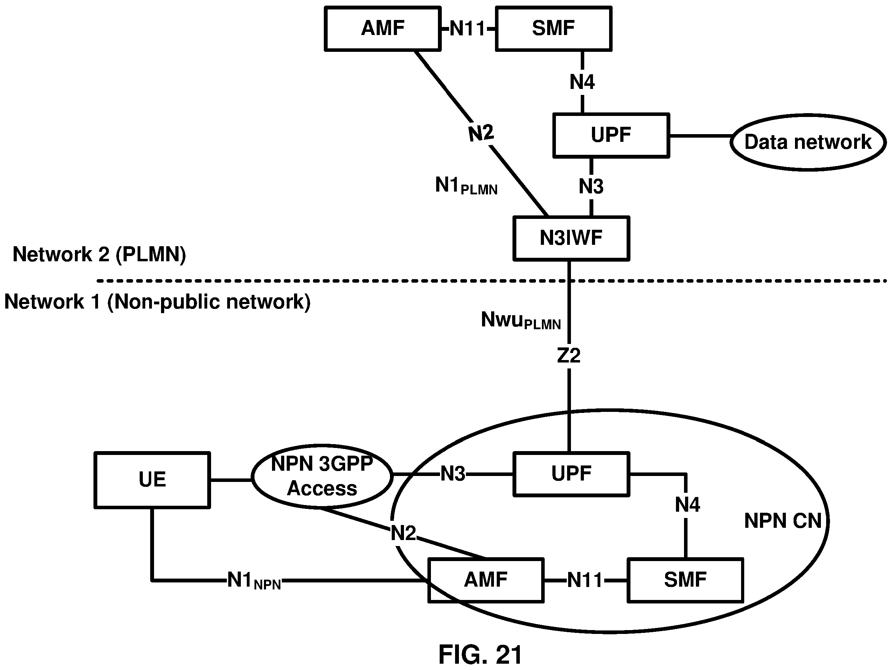

In an example embodiment as depicted in FIG. 21, a UE may access to a second network (PLMN) services via a first network (e.g., non-public network). The UE may first obtain IP connectivity by registering with the non-public network. Then the UE may obtain connectivity to the 5GC in the PLMN via an interworking function (e.g., a proxy, N3IWF, and/or the like). The Non-public network may deploy a 3GPP RAT, though it may not be considered a public PLMN. The UE may perform PLMN selection as part of the N3IWF discovery.

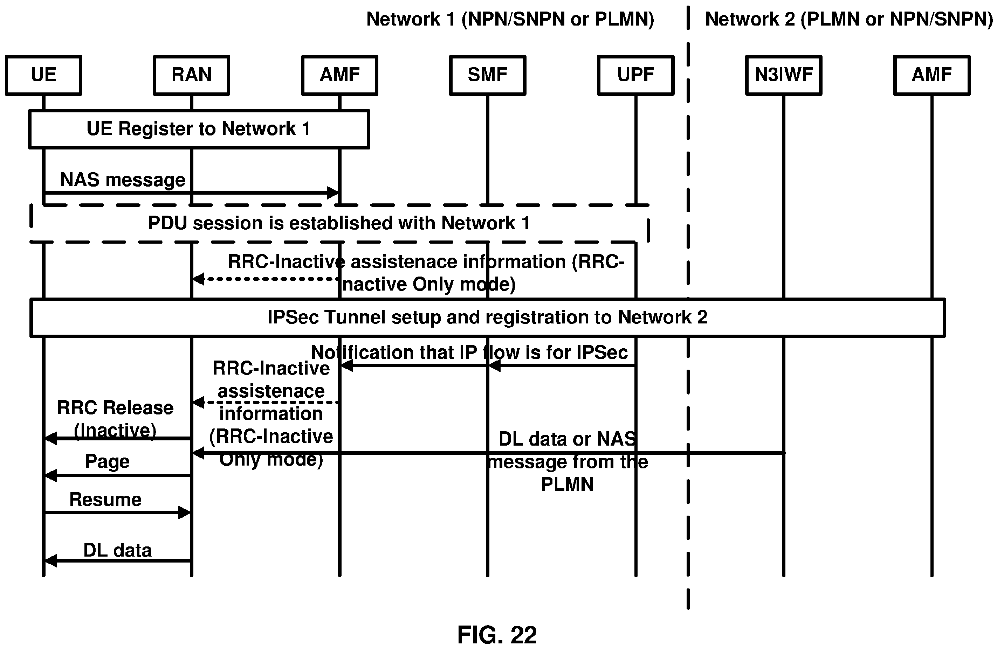

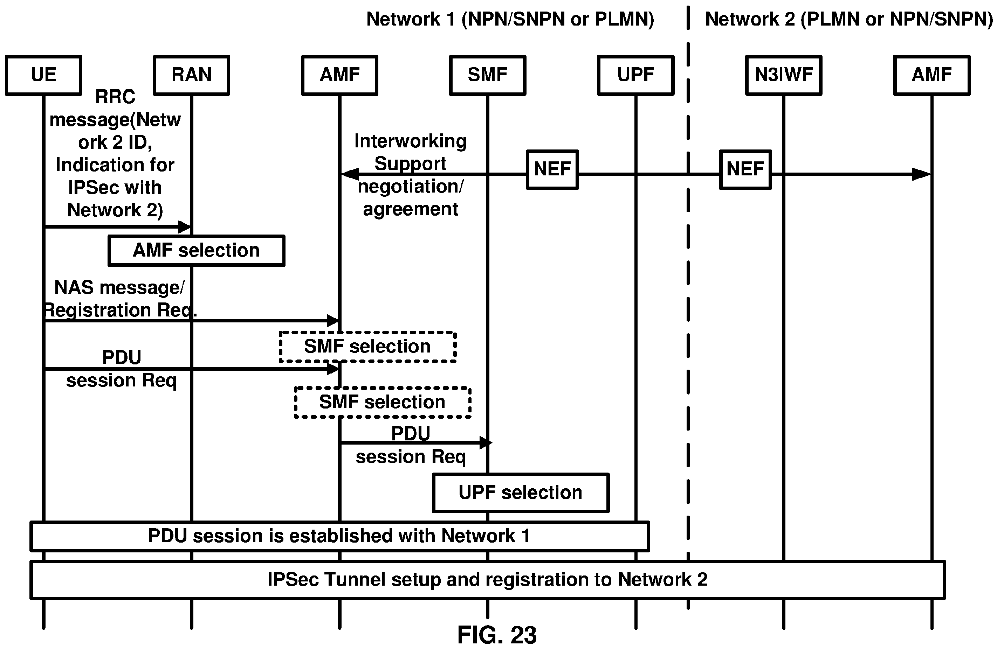

In an example embodiment as depicted in FIG. 22 and FIG. 23, a UE may access network 2 via network 1. In an example, the UE may have two subscription e.g., one PLMN (aka "PLMN UE" for PLMN parts of the UE) and one SNPN (aka "SNPN UE" for SNPN parts of the UE) subscription. The scenarios described may employ PLMN and SNPN, but same principles may apply between SNPNs, if allowed.

In an example embodiment as depicted in FIG. 22 and FIG. 23, The UE may be either in connected state or in a power save state in the serving network (network 1) and still get service from the other network. The UE may be always in CM connected state in both networks and that the IPsec tunnel between the UE and N3IWF over Nwu may be always maintained. It may involve that the UE send IPsec keep alive messages. In an example, in order for the UE to maintain an IPSec tunnel to network 2, a PDU session in network 1 may be required. As depicted in FIG. 22, and FIG. 23, the UE may register to the network 1 (e.g., NPN). The UE may request service in order to setup an IPsec tunnel to the N3IWF. The service request may need to indicate the specific service (connection to the PLMN/network 2). The PDU session may be setup in network 1. The AMF may include in the RRC inactive assistance information that this UE may only be released to RRC Inactive and may send the RRC inactive assistance information to the RAN. This behavior in the AMF may be triggered by 1) either based on the UE indication in the NAS message (SR or PDU session establishment), or 2) informed by the SMF/UPF. The SMF/UPF, when the SMF/UPF detect that the target address for the IPSec tunnel is a known N3IWF of a PLMN (in this case the RRC Inactive Assistance IE may need to be updated if already sent). UE sets up the IPSec tunnel and registers to the PLMN (network 2). Due to inactivity in the network 1 (NPN) the RAN may release the UE to RRC Inactive mode. RAN may receive DL data or NAS message from the PLMN (network 2) to the UE. The RAN node may page the UE. The UE may resume the RRC-Connection. The DL data or NAS message may be sent to the UE.

In existing technologies, a wireless device may perform an onboarding procedure in which an onboarding network is used to access a provisioning server. The provisioning server may provide credentials for accessing a second network (e.g., a target network). When the onboarding procedure is employed, the wireless device may access the onboarding network and use the onboarding network to obtain the credentials. After the credentials are obtained, the UE may deregister from the onboarding network and connect to the target network.

Existing technologies may support access of the wireless device to a second network via a first network. The wireless device may employ the first network (e.g., underlay network) to access the second network (e.g., overlay network) via, for example, an interworking node (e.g., N3IWF) of the second network. During initial access and registration to the first network, the AMF selection may be performed by the RAN node. If the RAN node selects an AMF that does not support underlying network capability for the SNPN, the wireless device may not successfully establish a PDU session for an IPSec connection to the N3IWF and the procedure of connecting and accessing the overlay network or the second network (via N3IWF) may fail.

Not all networks support onboarding to a target network and/or underlay support for an overlay network. For example, if a first network does not support onboarding, or if the RAN node sends an onboarding request to a mobility management function of the first network that does not support onboarding, then the wireless device may not successfully establish a PDU session for onboarding. If the first network does not support underlay, or if the RAN node sends a request to a mobility management function of the first network that does not support underlay, then the wireless device may not successfully establish a session with the overlay network. As a result, the wireless device may not be able to access the second network via the first network.

Example embodiments implement enhanced signaling for facilitating access to a second network based on access to a first network. In an example, a base station may receive from a first network a configuration message comprising an indication that the first network support onboarding for a second network. The configuration message may be received from an OAM, a NWDAF, or a mobility management function (e.g., a mobility management function that provides the onboarding support). The configuration message may comprise an identifier of the second network. The presence of the identifier of the second network may be the indication that the first network supports onboarding for the second network. The base station may send an onboarding request to a mobility management function of the first network. The onboarding request may request onboarding of the wireless device to the second network. This enhanced signaling may facilitate connection of the wireless device to a network that supports onboarding, especially in a case where onboarding is a specific need of the wireless device.

Example embodiments implement enhanced signaling for notifying lack of access to a second network based on access to a first network. In an example, a base station of a first network may receive, from a wireless device, an RRC message comprising an identifier of a second network. The base station may determine that the first network (e.g., one or more mobility management functions of the first network) does not support onboarding for the second network. The base station may indicate that onboarding is not supported. This enhanced signaling may facilitate connection of the wireless device to a network that supports onboarding, especially in a case where onboarding is a specific need of the wireless device.

Example embodiments implement enhanced signaling for facilitating access to a second network based on access to a first network. In an example, a base station of a first network may receive, from a wireless device, an RRC message comprising indicating access to a second network. The base station may select a mobility management function of the first network that support the network access to the second network. The base station may send, to the mobility management function, a registration request message for the network access of the wireless device. This enhanced signaling may reduce selection of a mobility management function within the first network in a case where the mobility management function is unsuited for a specific need of the wireless device, in particular, a need for network access to a second network.

Example embodiments comprise implementation of signaling from the wireless device to the base station wherein the signaling message comprises an identifier of the SNPN (SNPN ID). The identifier of the SNPN may be an indication to the network that onboarding support is required. The network (base station) may determine based on the indication (SNPN ID) that onboarding is required. The base station may select based on the SNPN ID an AMF that supports onboarding for the SNPN.

In an example embodiment, the base station may receive a configuration message from an AMF indicating onboarding support for the SNPN. The configuration message may comprise an onboarding support indication, SNPN ID, and/or the like. The base station may select the AMF base on an element of the configuration message and the SNPN ID that is received from the wireless device.

Example embodiments comprise implementation of signaling from the wireless device to the base station wherein the signaling message comprises an indication of underlying network capability support. The signaling may comprise the identifier of the SNPN that may be an indication to the network that underlying network capability to connect to the second network (the SNPN) may be required. The network (base station) may determine based on the indication (SNPN ID) that underlying network capability is required. The base station may select based on the SNPN ID an AMF that supports underlying network capability for the SNPN. The underlying network capability may be SNPN interworking support, SNPN signaling proxy support, SNPN overlay or underlay support, and/or the like.

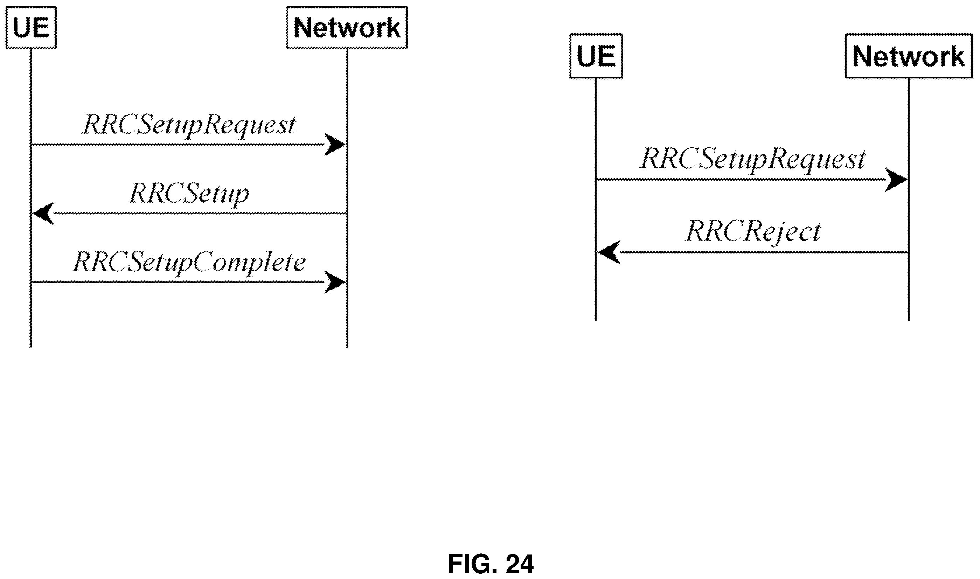

FIG. 24 illustrates a diagram comprising a wireless device, a network (e.g., RAN node). FIG. 24 depicts an example RRC connection procedure. RRC connection procedure may comprise sending an RRC setup request message upon completion of random access procedures. The purpose of this procedure is to establish an RRC connection. RRC connection establishment involves SRB 1 establishment. The procedure may also be employed to transfer the initial NAS dedicated information/ message from the UE to the network.

The network applies the procedure e.g.as follows: When establishing an RRC connection; When UE is resuming or re-establishing an RRC connection, and the network is not able to retrieve or verify the UE context. In this case, the UE may receive RRCSetup and responds with RRCSetupComplete. The UE may initiates the RRC connection establishment procedure when upper layers request establishment of an RRC connection while the UE is in RRC_IDLE and it has acquired essential system information, or for sidelink communication.

The UE may determine that system information is valid and up to date. The UE determines that access to the network is not barred, the UE may send an RRCSetupRequest message. The UE may receive an RRC setup message from the network. The UE may receive an RRC reject message by the network.

In an example embodiment as depicted in FIG. 24, the wireless device (UE) may attempt to access to the network. The attempt to access the network may comprise an RRC connection establishment procedure, a service request procedure, RRC resume procedure, and/or the like. The RRC connection establishment may be employed to establish an RRC connection. RRC connection establishment may comprise establishment of a signaling radio bearer e.g., SRB 1 establishment. The procedure may be employed to transfer the initial NAS dedicated information/ message from the UE to the network. The network may apply the procedure when establishing an RRC connection, when UE is resuming or re-establishing an RRC connection, and the network is not able to retrieve or verify the UE context, and/or the like. In an example, the UE may receive RRCSetup and may respond with RRCSetupComplete message. The RRC connection establishment may comprise reception of an RRC reject message by the wireless device (UE) from the network.

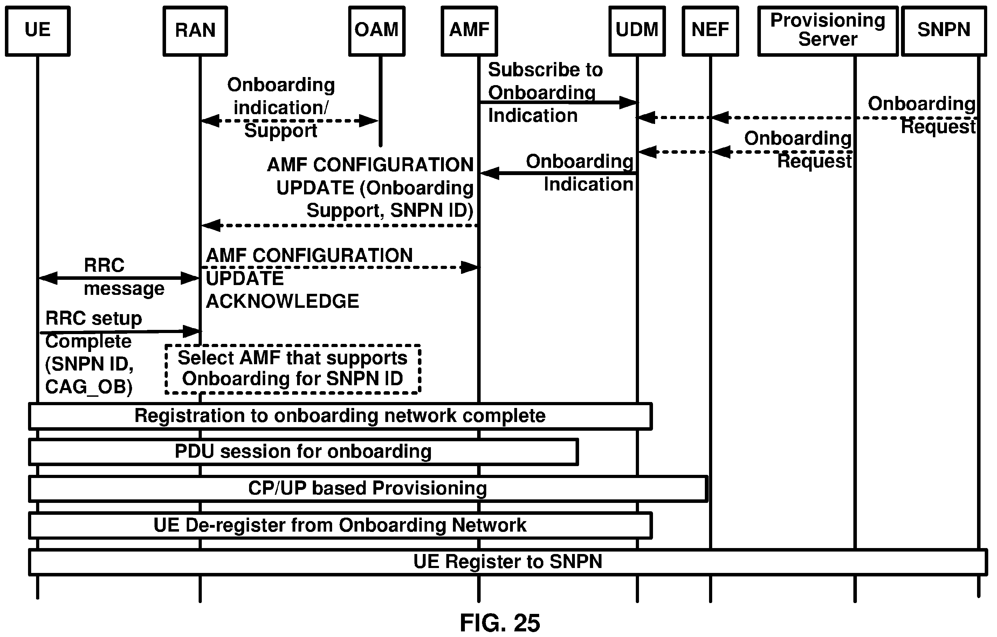

In an example embodiment as depicted in FIG. 25, a UE may send to a base station (RAN node, NG-RAN, gNB, and/or the like) of a first network, a radio resource control (RRC) message comprising a standalone non-public network identifier (SNPN ID) of a second network. The RRC message may be an RRC setup complete message. The RRC message may be an RRC setup request message. The RRC message may comprise a SNPN ID of the second network. In an example, the base station may determine that onboarding procedure is required for the UE in order to access the second network (e.g., SNPN). The base station may select an AMF based on an element of the RRC message. The AMF selection may be based on the onboarding support or onboarding capability of the AMF. The base station may send an N2 message to the selected AMF. Upon completion of the procedure (e.g., registration procedure, service request procedure, or PDU session establishment procedure), the UE may receive a response message from the AMF that supports onboarding (e.g., onboarding for SNPN). In an example, the UE may receive the AMF of the first network, a first message indicating acceptance of registration with the first network. The first message may be a registration acceptance message. In an example, the UE may send to the AMF of the first network a second message to establish a packet data unit (PDU) session. The second message may be a PDU session establishment request message, a NAS message, and/or the like. The PDU session establishment request may comprise an onboarding indication. The PDU session establishment request may comprise a PDU session type indicating an onboarding PDU session. The PDU session establishment request may comprise a request type indicating onboarding (request type = onboarding).

In an example embodiment, the RRC message may comprise the SNPN ID. In an example the RRC message may comprise an onboarding indication. The RRC message may be an RRC setup complete message (message 5). In an example, the RRC message may be an RRC setup request message (message 3). In an example, the RRC setup request message may comprise an RRC establishment cause indicating onboarding, the SNPN ID, and/or the like. The RAN node may select an AMF that supports onboarding for the SNPN with SNPN ID.

The RRC setup complete message may comprise an RRC information element indicating that onboarding support is required, the SNPN ID, and/or the like. The RAN node may select an AMF that supports onboarding for the SNPN with SNPN ID based on the information element.

In an example, when ON is deployed as a PNI-NPN, and access to the ON is restricted to one or more CAGs, that RRC message may comprise a CAG ID of the ON. The RAN node may select an AMF for onboarding based on the CAG ID of the ON. In an example, when ON is deployed as a PNI-NPN, and access to the ON is restricted to one or more S-NSSAIs, that RRC message may comprise a S-NSSAI of the ON. The RAN node may select an AMF for onboarding based on the S-NSSAI of the ON.

In an example embodiment, the base station may select an AMF based on an indication from the network, an AMF of the network, NWDAF, OAM, and/or the like. For example, the AMF that supports onboarding (for one or more SNPNs) may send a configuration update message to the RAN node(s) or base stations indicating that the AMF supports onboarding for the SNPN. When the base station receives the RRC message and determines to select an AMF that supports onboarding for the SNPN, the base station may select the AMF based on an element of the configuration update message.

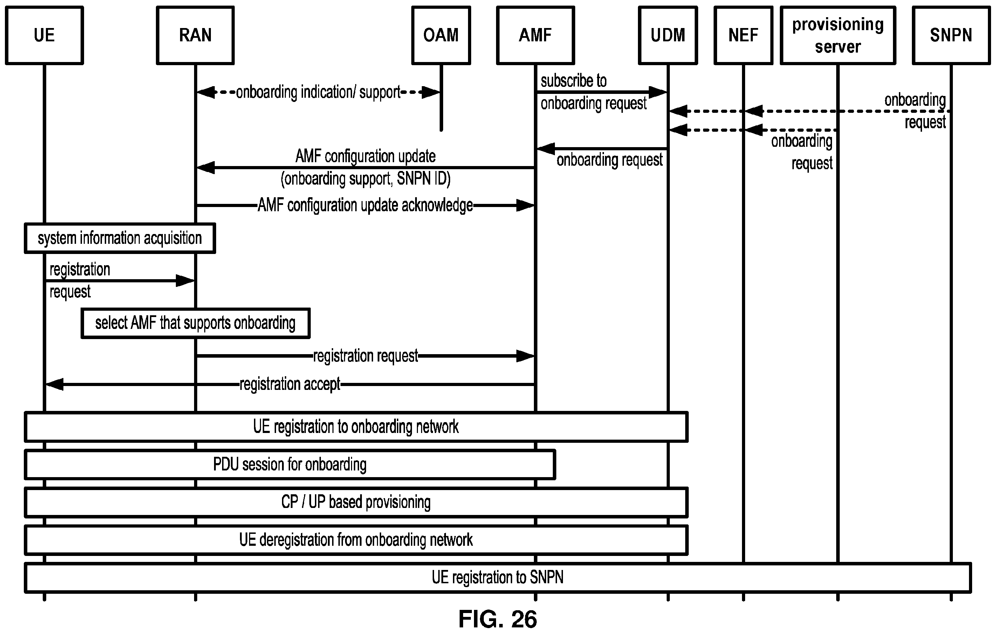

In an example embodiment as depicted in FIG. 25 and FIG. 26, the AMF, which the UE camp on, may subscribe to a UDM about Onboarding information. The provisioning server can be triggered to initiate the onboarding procedures by some events. The provisioning server may send the onboarding request to NEF, which includes the onboarding information (the GPSI of the target UE, subscription credentials to access SNPN, DNN/NSSAI used to access SNPN), and optional Triggering Events. The onboarding information may be protected by a default UE credential which is also pre-configured in the UE (USIM). The UE may determine which default UE credentials are applied for protection (optionally via SNPN identity or default UE credential identity). The NEF may relay the onboarding request to the UDM which stores the target UE's subscription based on the GPSI. The AMF may subscribe the triggering events to the serving AMF for the target UEs via Nudm_SDM_Notification message. The UDM may send the onboarding response to the NEF and then the NEF may transfer to provisioning server. In an example, when the AMF receives a notification of onboarding from the UDM indicating onboarding support for the SNPN, the AMF may send an AMF configuration update message to the RAN nodes.

In an example embodiment as depicted in FIG. 26, the AMF may receive onboarding indication or notification from the network (UDM). The AMF may send the AMF configuration update message to the base station. In an example, the base station (RAN) may receive an onboarding support indication from an OAM (OA&M) network element, NWDAF network element, and/or the like of the network. In an example, the base station upon receiving the onboarding support indication or onboarding support indication for one or more SNPNs, the base station may broadcast system information. The base station may broadcast SIB such as SIB1. The system information may indicate that the network or the RAN node, base station or one or more cell of the RAN node may support onboarding.

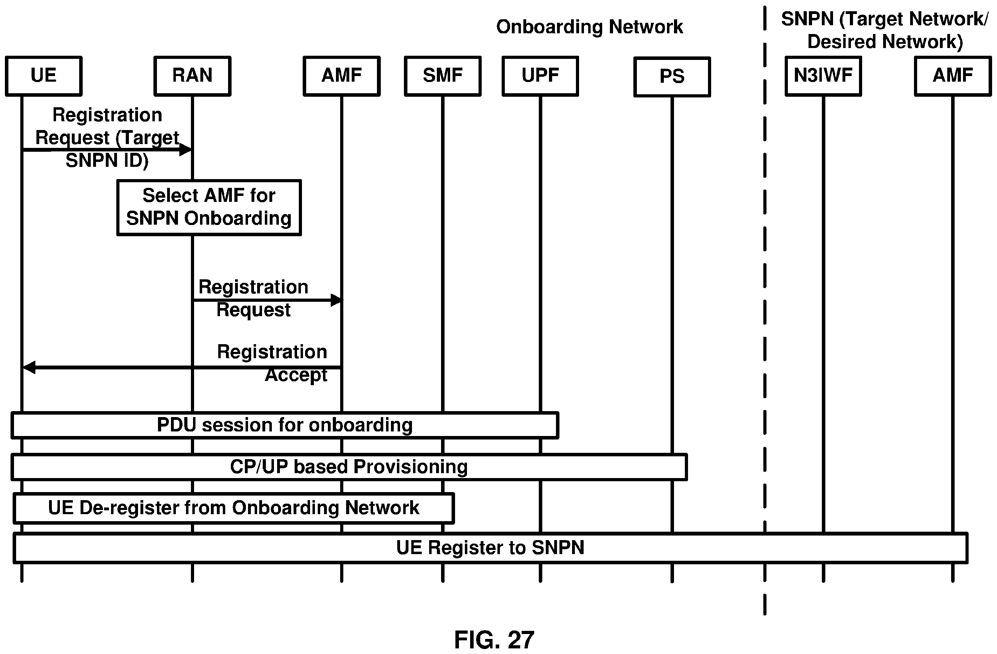

FIG. 27 illustrates a call flow of a procedure for a registration request procedure performed for a wireless device (UE) in accordance with embodiments of the present disclosure. The registration request procedure may be for an onboarding network. Upon successful registration to the onboarding network (ON), the UE may perform a PDU session establishment procedure. The PDU session establishment procedure may be for onboarding of the UE. The UE may access a PS via the PDU session (e.g., onboarding PDU session) to receive credentials for a target network, desired network, a SNPN, and/or the like. The PDU session may be employed for provisioning of parameters and credentials to the UE for accessing and registering to the SNPN. The provisioning may be over a user plane or a control plane of the PDU session. Upon successful provisioning, the UE may deregister from the ON, and register to the SNPN based on the received parameters and credentials. An example of a registration procedure is depicted in FIG. 8 and FIG. 9.

In an example as depicted in FIG. 27, during the registration procedure, the UE may send to a RAN node (base station) a registration request message. The registration request message may be or may comprise an AN message. In an example embodiment, the registration request message may be the RRC setup complete message. The registration request message may comprise an identifier of a second network (e.g., a SNPN ID, second network ID, and/or the like). In an example, the second network may be a target network, desired network, a SNPN, and/or the like. The registration request message (or the AN message) may comprise AN parameters, registration request (registration type, SUCI or 5G-GUTI or PEI, [last visited TAI (if available)], Security parameters, [Requested NSSAI], [Mapping Of Requested NSSAI], [Default Configured NSSAI Indication], [UE Radio Capability Update], [UE MM Core Network Capability], [PDU Session status], [List Of PDU Sessions To Be Activated], [Follow-on request], [MICO mode preference], [Requested Active Time], [Requested DRX parameters], [extended idle mode DRX parameters], [LADN DNN(s) or Indicator Of Requesting LADN Information], [NAS message container], [Support for restriction of use of Enhanced Coverage], [Preferred Network Behaviour], [UE paging probability information], [UE Policy Container (the list of PSIs, indication of UE support for ANDSP and the operating system identifier)] and [UE Radio Capability ID], PEI). In the case of NG-RAN, the AN parameters may comprise 5G-S-TMSI or GUAMI, the Selected PLMN ID (or PLMN ID and NID) and Requested NSSAI, the AN parameters may comprise Establishment cause. The Establishment cause may provide the reason for requesting the establishment of an RRC connection. Whether and how the UE includes the Requested NSSAI as part of the AN parameters may be dependent on the value of the Access Stratum Connection Establishment NSSAI Inclusion Mode parameter.

In an example as depicted in FIG. 27, the RAN node may select an AMF that supports onboarding. The RAN node may select an AMF that supports onboarding for the second network (e.g., SNPN with SNPN ID). If a 5G-S-TMSI or GUAMI is not included or the 5G-S-TMSI or GUAMI does not indicate a valid AMF the RAN, based on RAT and requested NSSAI, if available, may select an AMF. The RAN node may select an AMF based on an indication received from the AMF for onboarding support (as depicted in FIG. 26). The RAN may select an AMF. If the UE is in CM-CONNECTED state, the RAN node may forward the registration request message to the AMF based on the N2 connection of the UE. If the RAN cannot select an appropriate AMF, it may forward the registration request to an AMF which has been configured, in RAN, to perform AMF selection.

In an example embodiment, AMF discovery and selection functionality may be applicable to both 3GPP access and non-3GPP access. The AMF selection functionality can be supported by the 5G-AN (e.g. RAN, N3IWF) and may be employed to select an AMF instance for a given UE. An AMF may support the AMF selection functionality to select an AMF for relocation or because the initially selected AMF was not an appropriate AMF to serve the UE (e.g., due to change of Allowed NSSAI) because the initially selected AMF may support onboarding (e.g., for the SNPN). Other CP NF(s), e.g., SMF, may support the AMF selection functionality to select an AMF from the AMF set when the original AMF serving a UE is unavailable or the AMF does not support onboarding (for the SNPN). 5G-AN may select an AMF set and an AMF from the AMF set under the following circumstances: when the UE sends (e.g., via the registration request message) a SNPN ID and/or indicate that onboarding may be required, when the 5G-AN receives the SNPN ID from the UE and determine that the SNPN ID may be associated with a second network that may require onboarding, when the UE provides no 5G-S-TMSI nor the GUAMI to the 5G-AN, when the UE provides 5G-S-TMSI or GUAMI but the routing information (i.e. AMF identified based on AMF Set ID, AMF pointer) present in the 5G-S-TMSI or GUAMI is not sufficient and/or not usable (e.g. UE provides GUAMI with an AMF region ID from a different region), AMF has instructed RAN that the AMF (identified by GUAMI(s)) is unavailable and no target AMF is identified and/or AN has detected that the AMF has failed, and/or the like. In the case of NF Service Consumer based discovery and selection, the CP NF may select an AMF from the AMF Set under the following circumstances: when the AMF has instructed CP NF that a certain AMF identified by GUAMI(s) is unavailable and the CP NF was not notified of target AMF; CP NF has detected that the AMF has failed; when the selected AMF does not support the UE's Preferred Network Behaviour such as onboarding or access to an overlay network.

In an example embodiment, the AMF selection functionality in the 5G-AN (RAN) may consider the following factors for selecting the AMF (set):
- Request from UE comprising a target network ID such as the SNPN ID and onboarding support of the AMF for the SNPN associated with the SNPN ID.
- AMF Region ID and AMF Set ID derived from GUAMI;
- Requested NSSAI;
- Local operator policies;
- 5G CIoT features indicated in RRC signalling by the UE;
- IAB-indication;
- NB-IoT RAT Type; and
- Category M Indication.

AMF selection functionality in the 5G-AN or CP NFs or SCP may consider the following factors for selecting an AMF from AMF Set:
- availability of candidate AMF(s).
- Load balancing across candidate AMF(s) (e.g. considering weight factors of candidate AMFs in the AMF Set).

In the case of NF Service Consumer based discovery and selection, the AMF or other CP NFs may utilize the NRF to discover the AMF instance(s) unless AMF information is available by other means, e.g., locally configured on AMF or other CP NFs. The NRF provides the NF profile(s) of AMF instance(s) to the AMF or other CP NFs. The AMF selection function in the AMF or other CP NFs selects an AMF instance as described in the following: when NF Service Consumer performs discovery and selection the following applies: In the case of AMF discovery and selection functionality in AMF or other CP NFs use onboarding support indication (optionally with SNPN ID), GUAMI or TAI to discover the AMF instance(s), the NRF provides the NF profile of the associated AMF instance(s). If an associated AMF is unavailable due to AMF planned removal, the NF profile of the backup AMF used for planned removal is provided by the NRF. If an associated AMF is unavailable due to AMF failure, the NF profile of the backup AMF used for failure is provided by the NRF. If AMF pointer value in the GUAMI is associated with more than one AMF, the NRF provides all the AMFs associated with this AMF pointer value. If no AMF instances related to the indicated GUAMI can be found, the NRF may provide a list of NF profiles of candidate AMF instances in the same AMF Set. The other CP NF or AMF may select any AMF instance from the list of candidate AMF instances. If no NF profiles of AMF is returned in the discovery result, the other CP NF or AMF may discover an AMF using the AMF Set as below. In the case of AMF discovery and selection functionality in AMF use AMF Set to discover AMF instance(s), the NRF may provide a list of NF profiles of AMF instances in the same AMF Set.

In an example, a NF, a RAN node, or an AMF may discover an AMF based on NRF interactions (e.g., query and response with NRF). The NF may send a discovery request message (e.g., Nnrf_discoveryRequest) that may comprise the SNPN ID and/or the onboarding indication, requested NF type (e.g., AMF), and/or the like. The NRF may respond by a discovery response message (e.g., Nnrf_discoveryResponse, and/or the like) that may comprise one or more AMF candidates that support onboarding or support onboarding for the SNPN.

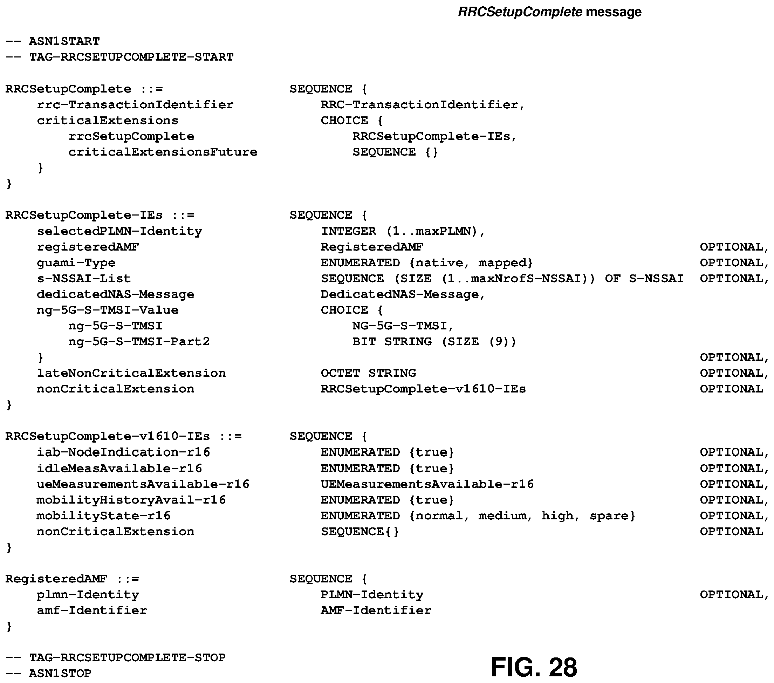

FIG. 28 illustrates an example of the RRC setup complete message and elements in accordance with embodiments of the present disclosure. An information element (IE) of the RRC setup complete message may comprise an indication for onboarding, SNPN ID. The SNPN ID may be employed by the network (RAN node, AMF, and/or the like) to discover and select the AMF that supports onboarding for the SNPN.

In an example embodiment, the IE of the setup complete message (as in FIG. 28) may comprise an indication for IPSec (tunnel) connectivity to the SNPN based on the configuration depicted in FIG. 19-23. The network may determine, discover, select an AMF that may support connectivity of the UE to the second network via the IPSec tunnel/connection. The selected AMF may employ or may be configured with a proxy of an AMF of the second network, or an interworking function (N3IWF) of the second network (SNPN).

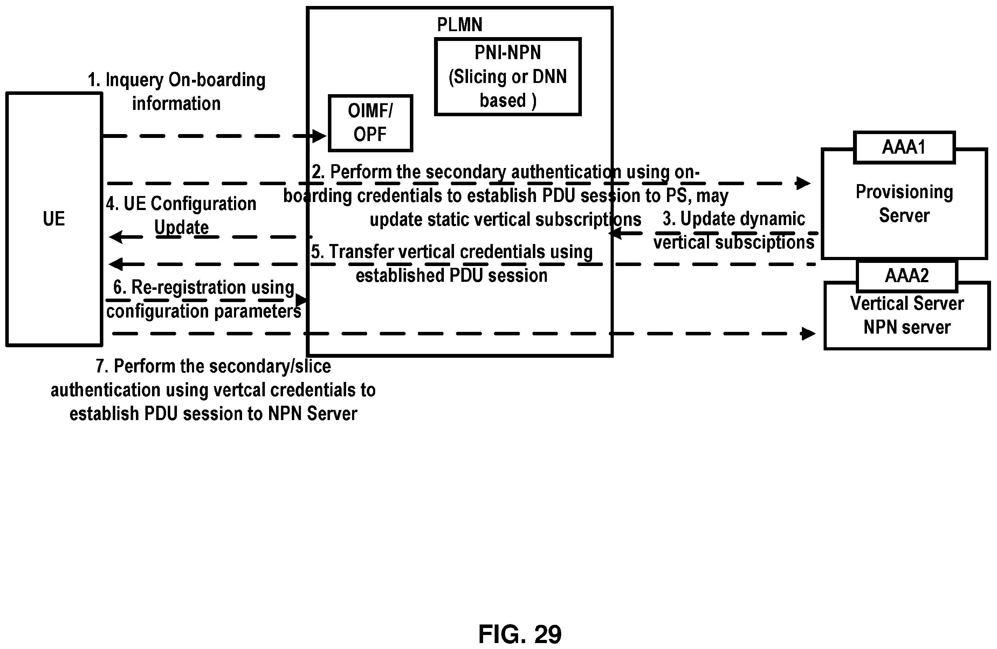

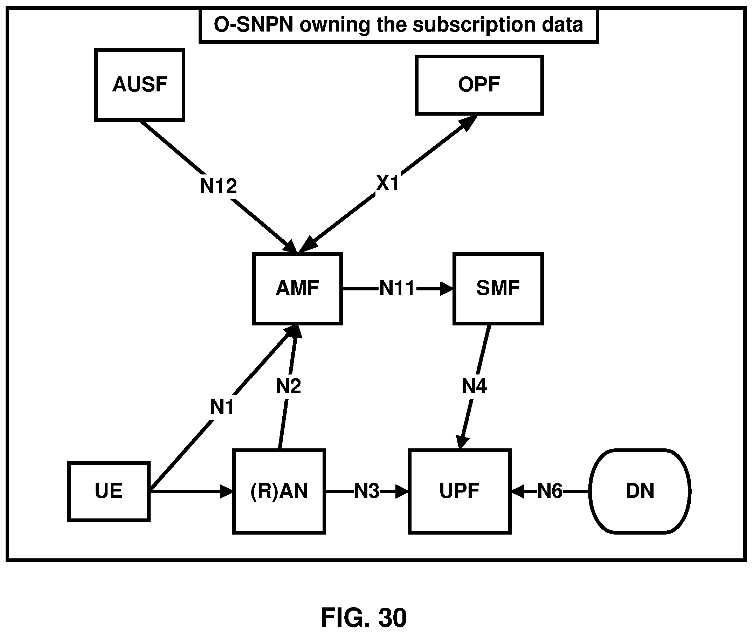

In an example embodiment a configuration as depicted in FIG. 29 and FIG. 30 may enable UEs to get network connectivity so that it can be provisioned with necessary information for access to a PNI-NPN and vertical networks attached to the PNI-NPN. The UE is provisioned with the public subscription/credentials of UE side for accessing to PLMN. The UE may be provisioned with the on-boarding credentials for secondary authentication to grant access to Provisioning Server. The on-boarding credentials may be provisioned during manufacturing process, or may be input by the user. The UE may be provisioned with vertical credentials for secondary/slice authentication to grant access to the vertical network attached to a PNI-NPN. The UE may be provisioned with UE configuration (e.g. Mobility Restriction, URSP, etc.) for CAG selection or DNN/NSSAI selection. The PLMN may be pre-configured with public subscription/credentials of network side which include at least the minimum set of contents which common public UE owns, e.g., UE identifiers and associated security credential, optionally support indication and valid period for the on-boarding registration. The PLMN may be pre-configured with static vertical configurations (e.g. subscription owner (SO) DNN, SO NSSAI) which may comprise part of subscriptions of UEs allowed for on-boarding and accessing to the vertical DN via the PNI-NPN. Vertical enterprises may sign agreement with PLMN for static vertical subscriptions assignment. The PLMN may be pre-configured with Provisioning Server Routing Information (e.g. PS DNN, PS NSSAI, allowed PS and/or PS AAA address list, port ID, SMF selection subscription data, allowed number of PDU Session for provisioning per UE and QoS) which may be used to trigger the on-boarding authentication and establish connectivity to the expected Provisioning Server. An OIMF (On-boarding Information Mapping Function) may be pre-configured with mapping information of PNI-NPN ID (e.g., CAG ID) and Provisioning Server Routing Information. PS AAA may be provisioned with the onboarding credentials to authenticate the UE for on-boarding. The on-boarding credentials may be provisioned via out-of-band way, e.g., via application. Provisioning Server may be provisioned with the dynamic vertical configurations (e.g. updated CAG information, updated QoS) based on UE granularity, which can constitute part of subscriptions of UEs allowed for on-boarding and accessing to the vertical DN via the PNI-NPN. Provisioning Server may be provisioned with the vertical credentials (e.g. N3GPP credential) for updating NPN credentials of UEs that are allowed for onboarding. As depicted in FIG. 30, a configuration comprising an Onboarding and Provisioning Function (OPF) may enable the UEs without the subscription data to access to the Onboarding SNPN (O-SNPN) to obtain the full provisioning data from the home network owning the UE's subscription data. So that the provisioned UE can normally access to the desired network services. The presence of the Onboarding and Provisioning Function (OPF), which stores both the default configuration and provisioning data for the UE, and to provide onboarding authentication and authorization between UE and OPF. The OPF may be located inside of O-SNPN, or outside of O-SNPN.

In an example, A UE may enquire onboarding information. The UE may register to the PLMN using the public subscription/credentials and primary authentication may be performed. The UE either manually or automatically discovers and selects the PNI-NPN ID for UE on-boarding (e.g. CAG ID) based on the broadcast information. Then the UE may request the OIMF for the Provisioning Server Routing Information (e.g. PS DNN, PS NSSAI, allowed PS and/or PS AAA address list, port ID) using PNI-NPN ID via NAS message. If support indication for the onboarding registration is included in the public subscription, the PLMN may provide the UE with the restricted registration and PDU Session for limited services based on the valid period in the public subscription, and extra restriction information involved in Provisioning Server Routing Information (e.g. SMF selection subscription data, and allowed number of PDU Session for provisioning per UE, allowed PS address list and QoS). In an example, the registration request message, the RRC message, the RRC setup complete message, and/or the like may comprise an OIMF ID, OPF ID, SNPN ID, an indication that the request may be for an OIMF/OPF, and/or the like.

In an example, the UE may select the slice or DNN to access PS according to Provisioning Server Routing Information. The UE may re-register to the PLMN using selected slice. The UE may perform onboarding authentication via 5GC with PS AAA using the onboarding credentials, potentially reusing the secondary authentication procedure, which triggered by SMF, to realize the onboarding authentication. When the UE has been successfully authenticated, the PLMN subscription may be updated, including static vertical subscriptions and dynamic vertical credentials. The static vertical subscription (e.g. SO DNN, SO NSSAI) may be preconfigured in PLMN based on the agreement between PLMN and vertical. By using the on-boarding authentication, the 5GC can be aware of authentication result. If the authentication is successful, the 5GC authorizes the UE, and updates UE's subscriptions according to pre-configured static vertical subscriptions. The dynamic vertical subscription (e.g. updated CAG information, updated QoS) may be the information that Vertical intends to revise to UE's subscription. The PLMN may reject the update of dynamic vertical subscriptions. If the provisioning is successful, the provisioning server may transfer the UE's dynamic vertical subscriptions (e.g. updated CAG information, updated QoS) to the PLMN via NEF, and the PLMN may update UE's subscriptions for dynamic vertical subscriptions. The PS may provision the UE configuration parameters to the PLMN and vertical credentials to UE. When UE configurations are updated, the PLMN may update UE configurations to the UE by triggering the UE Configuration Update procedure. Upon successful onboarding authentication, the UE may be authorized to establish the PDU session to access the PS and the PS may provision the vertical credentials to the UE by the established user plane path and via the PDU session. The UE may reuse existing N3GPP credential management protocol with the PS. For example, to reuse CMPv2 protocol to ask CA for signing a vertical's certificate. The credential may be stored in either the UE (ME) or UICC. The UE may access the NPN using UE configuration parameters and vertical credentials. After the provisioning procedure, the UE may perform re-registration procedures using UE configuration to reselect CAG ID, slice and DNN, and may establish a PDU session with suitable QoS. When the UE requests to access the vertical server, the PLMN may trigger secondary/slice authentication, the UE uses vertical credentials to process the authentication. Upon a successful procedure the UE may initiate regular services to the vertical network via the PNI-NPN. During the procedure, if the secondary authentication fails and/or a valid period expires, the PLMN may trigger a network-initiated de-registration.

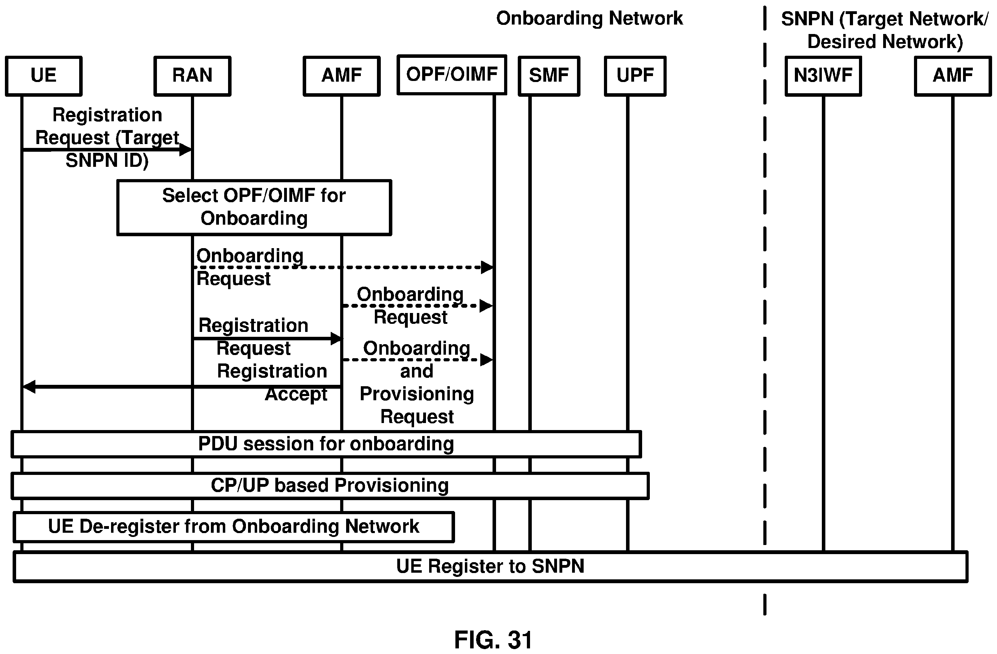

FIG. 31 illustrates a call flow of a procedure for registration and access to an ON performed for a wireless device (UE) in accordance with embodiments of the present disclosure. The UE may send a registration request procedure to a RAN node. The registration request procedure may be an RRC message, RRC setup complete message, and/or the like. The registration request message may comprise a SNPN ID, a target network ID, and/or the like. The registration request message may comprise an onboarding indication. The registration request message may comprise an identifier of an OPF (OPF ID), OIMF ID, and or the like. In an example, the SNPN ID, onboarding indication, OPF ID, OIMF ID, and/or the like may be included in the NAS message container of the registration request message. In an example, the SNPN ID, onboarding indication, OPF ID, OIMF ID, and/or the like may be included in the RRC setup complete message. In an example, the UE may register to the ON. The UE may send a PDU session establishment request message, a service request message, and/or the like. In an example, the UE may send a NAS message to the AMF (MM-NAS) via the RAN node. The NAS message may be sent from the UE to the SMF (e.g., SM-NAS). In an example, the NAS message may be the PDU session establishment request message, the service request message, the registration request message, and/or the like. In an example, the NAS message may comprise the OPF ID, OIMF ID, target SNPN ID, and/or the like.

In an example embodiment, the presence of the target SNPN ID in the RRC message, or the NAS message may indicate that the UE is accessing the network for onboarding and provisioning of credentials.

In an example embodiment, the presence of the target SNPN ID in the RRC message, or the NAS message may indicate that the UE is accessing the target network SNPN (overlay network) via the first network (underlying network) and the PDU session of the first network may be employed to establish a connection to the second network via an interworking function such as the N3IWF. The presence of the target SNPN ID in the RRC message, or the NAS message may indicate that underlying network capability is required. An IPSec tunnel or an IPSec connection may be employed (e.g., based on IPSec tunnel or IPSec transport). Such capability or the underlying network capability may be SNPN interworking support, SNPN signaling proxy support, SNPN overlay or underlay support, and/or the like.

In an example embodiment, onboarding support of the network may be determined when a CP function such as the AMF, SMF, and/or the like receive a request from a NEF or OA&M or a configuration entity that the network may support onboarding.

In an example embodiment, onboarding support of the network may be determined when a CP function such as the AMF, SMF, and/or the like receive a request from a NEF or OA&M or a configuration entity that the network may support onboarding.

In an example, the capability indicating SNPN interworking support, SNPN signaling proxy support, SNPN overlay or underlay support, and/or the like, may indicate that the AMF of the underlay network (network 1) may establish a proxy for the AMF or signaling state or status of the UE in the overlay network. The capability may indicate that the AMF of the underlying network may be able to establish connectivity or receive external exposure of notification to or from the overlay network, and/or the like. The capability may indicate that the underlay network may be able configure an IPSec connection to the overlay network via the interworking function (N3IWF). The IPSec connection may be between the UE and the N3IWF of the overlay network, or between the UPF of the underlying network and the N3IWF of the overlay network.

In an example embodiment, provisioning may comprise preparing or equipping a wireless device, a network or a network node (or network element) to perform a service by providing one or more parameters to the network or the network node. Provisioning may cause initiation, configuration, activation or deployment of a process or service on the network node. In response to provisioning, the network node may perform an action, activate, deploy a service, or enforce a policy or rule when the network is provisioned with the one or more parameters. In an example, provisioning may be performed via a configuration message. In an example, provisioning may comprise sending a configuration message, modification message, setup message, and/or the like to the network node to enable or activate the network node to perform an operation as required. Provisioning may be performed by employing an application programming interface API, direct messaging, or service based interaction. For example, an access and mobility management function AMF may deploy an access and mobility control policy, which includes provisioning of a UE Policy to the UE and provisioning a radio access technology RAT frequency selection priority RFSP index to a radio access network RAN.

In an example, provisioning of policy and charging rules may comprise sending a message by a first network node to a second network node, a policy or rule (such as charging rule or policy) based on a subscription of a user, wireless device, service type, PDU session type, QoS flow, and/or the like. The second network node may implement the rule or policy based on an element of the message. For example, a policy and charging control function PCF may provision policy rules over an interface (e.g., N7) to a session management function SMF for the enforcement or implementation of policy and charging control in the SMF and a user plane function UPF.

In an example, provisioning of packet detection and forwarding rules may comprise providing configuration parameters for activation of a packet detection and forwarding on a user plane function. A control plane function (network node) may provision packet detection and forwarding rules to a user plane function UPF. In response to the provisioning, the UPF may activate or initiate detection and forwarding of data packets based on the rules.

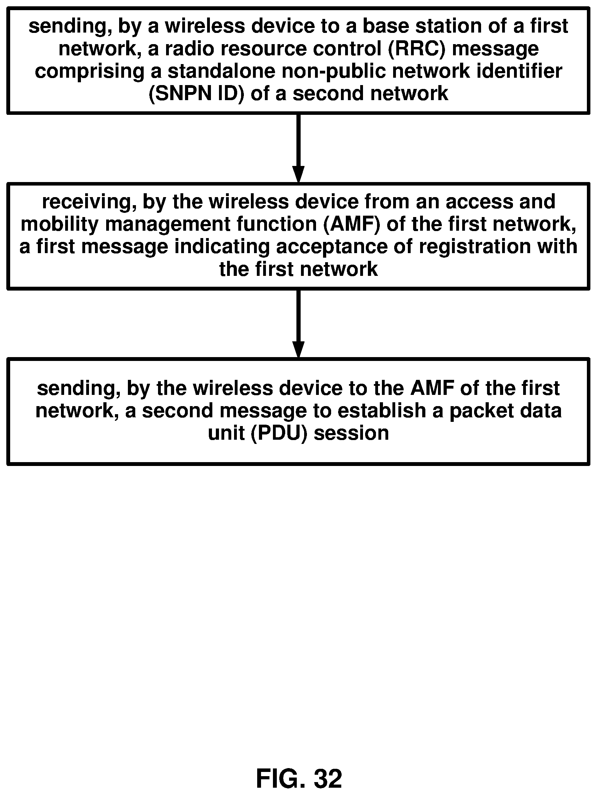

In an example embodiment as depicted in FIG. 32, a wireless device may send to a base station of a first network, a radio resource control (RRC) message comprising a standalone non-public network identifier (SNPN ID) of a second network. The wireless device may receive from an access and mobility management function (AMF) of the first network, a first message indicating acceptance of registration with the first network. The wireless device may send to the AMF of the first network, a second message to establish a packet data unit (PDU) session.

In an example, the RRC message may comprise a closed access group identifier (CAG ID) associated with onboarding. In an example, based on CAG ID, the base station (RAN) may select an AMF that supports onboarding, and based on the SNPN ID the base station (RAN) may select an AMF that supports onboarding for the SNPN. In an example, the RRC message may comprise an onboarding indication. In an example, the RRC message may comprise a non-access stratum packet data unit (NAS PDU) or NAS message container. The NAS PDU or the NAS message container may comprise the identifier of the SNPN. The RRC message may be a registration request message. The RRC message may be service request message. In an example, the wireless device may receive from the network (AMF, RAN, and/or the like) in response to the RRC message, a configuration update message comprising configuration information for onboarding. The configuration information may comprise a data network name (DNN) that supports onboarding of the SNPN, a slice information (S-NSSAI) that supports onboarding of the SNPN, an identifier of an AMF that supports onboarding of the SNPN, and/or the like. In an example, the network may be an onboarding network (ON). In an example, the onboarding network may be a public land mobile network (PLMN). In an example, the onboarding network may be a non-public network (NPN). In an example, the onboarding network may be identified by at least one of a closed access group identifier (CAG ID), a S-NSSAI, and/or the like. In an example, the RRC message may be an RRC setup complete message. In an example, the AMF may support onboarding for the SNPN. In an example, the AMF may indicate that the acceptance of registration with the first network may be for onboarding. In an example, the wireless device may establishe the packet data unit (PDU) session for onboarding of the wireless device to access the SNPN. In an example, the wireless device may send a PDU session request that may comprise an onboarding indication (e.g., with PDU session type = onboarding, request type = onboarding, and/or the like). In an example, the wireless device may send to the base station of the first network (or the first network, AMF of the first network, the ON) a PDU session release message. The wireless device may release the PDU session established for onboarding. The wireless device may send to the base station (or the network, AMF, ON) a deregistration message. In an example, the wireless device may send to the second network (base station, AMF), a second registration request message. The wireless device may receive from the second network, a second registration accept message from the second network. The wireless device may send to the second network (e.g., AMF, RAN), a second PDU session establishment request.

In an example embodiment, the RRC message may comprise an underlying network capability support indication. The underlying network capability may comprise an SNPN interworking support, an SNPN signaling proxy support, an SNPN overlay or underlay support, and/or the like. In an example, the wireless device may receive the first message (registration accept) from an AMF that supports an underlying network capability. In an example, the wireless device may send to the first network, a PDU session establishment request message indicating that the PDU session is for an IPSec tunnel/connection to an N3IWF of the second network. In an example, the wireless device may receive from the first network, a PDU session accept message. In an example, the wireless device may send to an interworking network node (N3IWF) of the second network an IPSec connection request via the PDU session (that is established for IPSec).

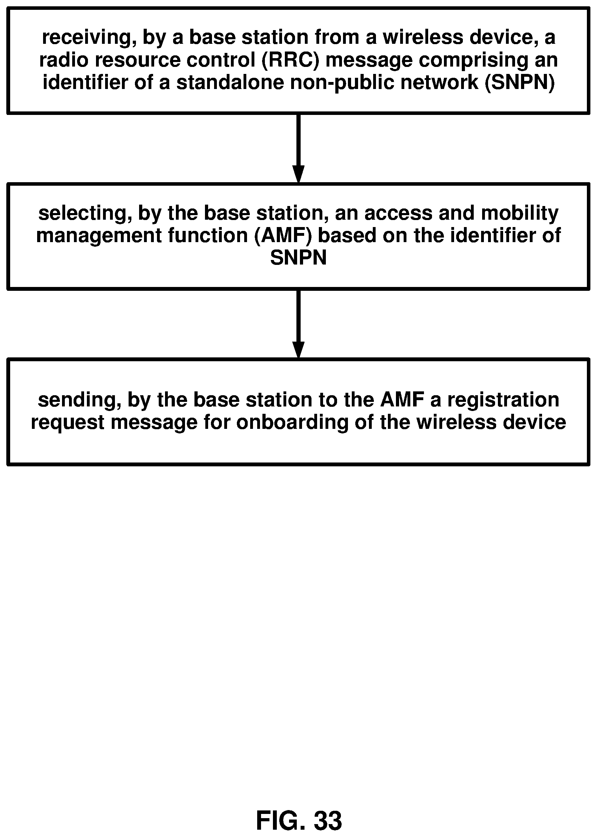

In an example embodiment as depicted in FIG. 33, a base station may receive from a wireless device, a radio resource control (RRC) message. The RRC message may comprise an identifier of a standalone non-public network (SNPN) e.g., SNPN ID. The base station may select an access and mobility management function (AMF) based on the identifier of SNPN or SNPN ID. The base station may send to the AMF a registration request message for onboarding of the wireless device. The base station may send to the AMF a registration request message for the wireless device access to a second network (overlay network).

In an example, the base station may receive from the access and mobility management function, a configuration message comprising an onboarding support indication. In an example, the selecting may be based on the onboarding supporting indication. In an example, the selecting may be based on the underlay supporting indication, underlay network capability indication, and/or the like. In an example, the RRC message may comprise a closed access group identifier (CAG ID) associated with onboarding. (e.g., based on CAG ID, RAN selects an AMF that supports onboarding, and based on SNPN ID: RAN selects an AMF that supports onboarding for the SNPN. In an example, based on SNPN ID RAN selects an AMF that supports underlying network capability for SNPN). In an example, the base station may select an AMF based on the CAG ID associated with onboarding or based on a CAG associated with underlay network support, SNPN interworking support, SNPN signaling proxy support, and/or the like. In an example, the RRC message may comprise an onboarding indication. The RRC message may comprise a non-access stratum packet data unit (NAS PDU, NAS container, and/or the like) comprising the identifier of the SNPN. The RRC message may be a registration request message. The selecting of the AMF may be based on a determination by the base station that onboarding is required. The determining may be based on the SNPN ID.

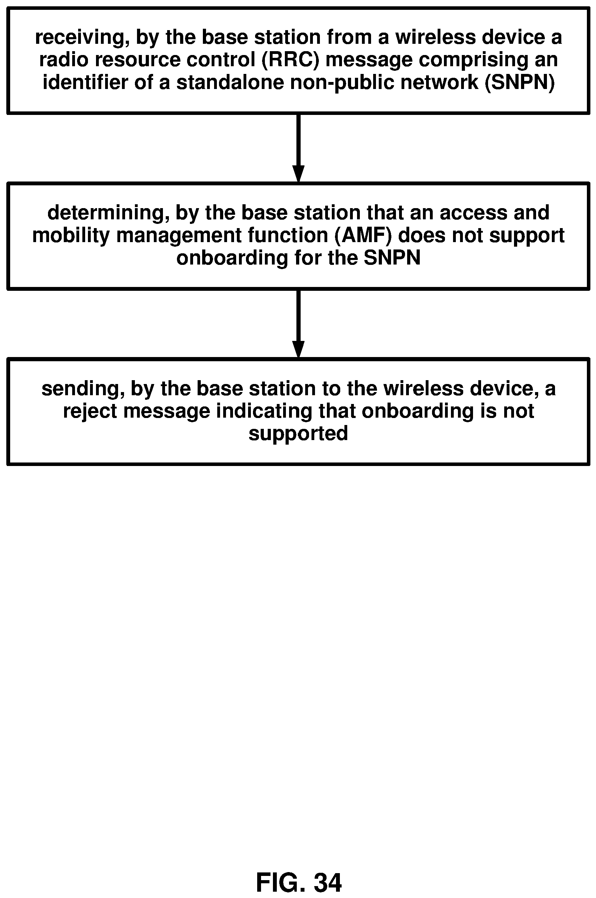

In an example embodiment as depicted in FIG. 34, the base station may receive from a wireless device a radio resource control (RRC) message. The RRC message may comprise an identifier of a standalone non-public network (SNPN). The base station may determine that an access and mobility management function (AMF) does not support onboarding for the SNPN. The base station may send to the wireless device, a reject message indicating that onboarding is not supported.

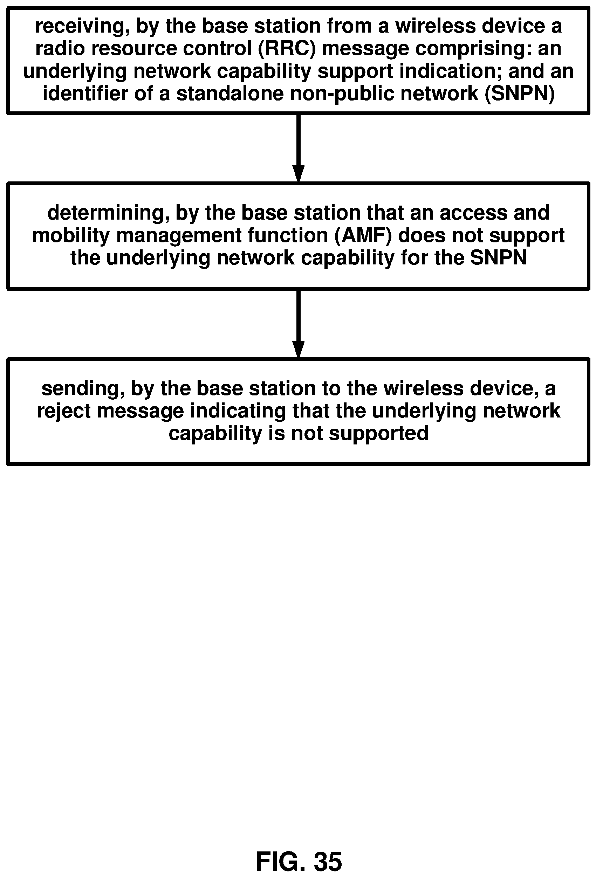

In an example embodiment as depicted in FIG. 35, the base station may receive from a wireless device a radio resource control (RRC) message. The RRC message may comprise an underlying network capability support indication, an identifier of a standalone non-public network (SNPN ID), NPN ID, and/or the like. The base station may determine that an access and mobility management function (AMF) does not support the underlying network capability for the SNPN. The base station may send to the wireless device, a reject message indicating that the underlying network capability is not supported.

According to various embodiments, one or more devices such as, for example, a wireless device, off-network wireless device, a base station, a core network device, and/or the like, may be employed in a system. One or more of the devices may be configured to perform particular operations or actions by virtue of having software, firmware, hardware, or a combination of them installed on the one or more of the devices, that in operation causes or cause the one or more devices to perform the actions. One or more computer programs can be configured to perform particular operations or actions by virtue of including instructions that, when executed by data processing apparatus, cause the apparatus to perform the actions. Embodiments of example actions are illustrated in the accompanying figures and specification. Features from various embodiments may be combined to create yet further embodiments.

In this specification, "a" and "an" and similar phrases are to be interpreted as "at least one" and "one or more." In this specification, the term "may" is to be interpreted as "may, for example." In other words, the term "may" is indicative that the phrase following the term "may" is an example of one of a multitude of suitable possibilities that may, or may not, be employed to one or more of the various Examples. If A and B are sets and every element of A is an element of B, A is called a subset of B. In this specification, only non-empty sets and subsets are considered. For example, possible subsets of B = {cell1, cell2} are: {cell1}, {cell2}, and {cell1, cell2}.

In this specification, various examples are disclosed. Limitations, features, and/or elements from the disclosed examples may be combined to create further examples. In this specification, parameters (Information elements: IEs) may comprise one or more objects, and one of those objects may comprise one or more other objects. For example, if parameter (IE) N comprises parameter (IE) M, and parameter (IE) M comprises parameter (IE) K, and parameter (IE) K comprises parameter (information element) J, then, for example, N comprises K, and N comprises J. In an example, when one or more messages comprise a plurality of parameters, it implies that a parameter in the plurality of parameters is in at least one of the one or more messages, but does not have to be in one of the one or more messages.

Many of the elements described in the disclosed Examples may be implemented as modules. A module is defined here as an isolatable element that performs a defined function and has a defined interface to other elements. The modules described in this disclosure may be implemented in hardware, software in combination with hardware, firmware, wetware (e.g. hardware with a biological element) or a combination thereof, some of which are behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally, it may be possible to implement modules using physical hardware that incorporates discrete or programmable analog, digital and/or quantum hardware. Examples of programmable hardware comprise: computers, microcontrollers, microprocessors, application-specific integrated circuits (ASICs); field programmable gate arrays (FPGAs); and complex programmable logic devices (CPLDs). Computers, microcontrollers and microprocessors are programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. Finally, it needs to be emphasized that the above mentioned technologies are often used in combination to achieve the result of a functional module.

While various Examples have been described above, it should be understood that they have been presented by way of example, and not limitation. It will be apparent to persons skilled in the relevant art(s) that various changes in form and detail can be made therein to obtain further examples. In fact, after reading the above description, it will be apparent to one skilled in the relevant art(s) how to implement alternative Examples. Thus, the present Examples should not be limited by any of the above described exemplary Examples. In particular, it should be noted that, for example purposes, the above explanation has focused on the example(s) using 5G AN. However, one skilled in the art will recognize that Examples of the invention may be implemented in a system comprising one or more legacy systems or LTE. The disclosed methods and systems may be implemented in wireless or wireline systems. The features of various Examples presented in this invention may be combined. One or many features (method or system) of one Example may be implemented in other Examples. A limited number of example combinations are shown to indicate to one skilled in the art the possibility of features that may be combined in various Examples to create enhanced transmission and reception systems and methods.

In addition, it should be understood that any figures which highlight the functionality and advantages, are presented for example purposes. The disclosed architecture is sufficiently flexible and configurable, such that it may be utilized in ways other than that shown. For example, the actions listed in any flowchart may be re-ordered or optionally used in some examples.

## Claims

1. A method comprising:
receiving, by a first access and mobility management function, AMF, of a first network from a radio access network, RAN, node, a forwarded registration request for onboarding of a wireless device to a second network, wherein the registration request is forwarded by the RAN node if the wireless device is in connected mode or the RAN node cannot select an appropriate AMF;
sending, by the first AMF to a network repository function, NRF, of the first network, a discovery request to discover an access and mobility management function, AMF, that supports onboarding of the wireless device, the discovery request comprising an onboarding support indication; and
receiving, by the first AMF from the NRF, a discovery response message comprising information of one or more AMF candidates that support onboarding.

2. The method of claim 1, wherein the registration request comprises an identifier of the second network.

3. The method of claim 1 or 2, wherein onboarding comprises providing, by the first network to the wireless device, information for the wireless device to get authorized access and connectivity to the second network.

4. The method of any one of claims 1-3, wherein:
the first network is one or more of:
an onboarding network;
a first public land mobile network;
a first non-public network; and
a first standalone non-public network; and
the second network is one or more of:
an onboarding network;
a second public land mobile network;
a second non-public network; and
a second standalone non-public network.

5. A first access and mobility management function, AMF, of a first network comprising:
one or more processors; and
memory storing instructions that, when executed by the one or more processors, cause the first AMF to perform the method of any one of claims 1-4.

6. A method comprising:
receiving, by a network repository function, NRF, of a first network from a first access and mobility management function, AMF, of the first network, a discovery request to discover an access and mobility management function, AMF, that supports onboarding of a wireless device to a second network, the registration request comprising an onboarding support indication;
sending, by the NRF to the first AMF, a discovery response message comprising information of the AMF that supports onboarding.

7. The method of claim 6, wherein the discovery request comprises an identifier of the second network.

8. The method of claim 6 or 7, wherein onboarding comprises providing, by the first network to the wireless device, information for the wireless device to get authorized access and connectivity to the second network.

9. The method of any one of claims 6-8, wherein:
the first network is one or more of:
an onboarding network;
a first public land mobile network;
a first non-public network; and
a first standalone non-public network; and
the second network is one or more of:
an onboarding network;
a second public land mobile network;
a second non-public network; and
a second standalone non-public network.

10. A network repository function comprising:
one or more processors; and
memory storing instructions that, when executed by the one or more processors, cause the network repository function to perform the method of any one of claims 6-9.

11. A non-transitory computer-readable medium comprising instructions that,
when executed by one or more processors of an access and mobility management function, AMF, cause the AMF to perform the method of any one of claims 1-4, or
when executed by one or more processors of a network repository function, NRF, cause the NRF to perform the method of any one of claims 6-9.

## Patentansprüche

1. Verfahren, umfassend:
Empfangen, durch eine erste Zugangs- und Mobilitätsverwaltungsfunktion (AMF) eines ersten Netzes von einem Funkzugangsnetzknoten (RAN-Knoten), einer weitergeleiteten Registrierungsanforderung zum Einbinden eines drahtlosen Geräts in ein zweites Netz, wobei die Registrierungsanforderung durch den RAN-Knoten weitergeleitet wird, wenn das drahtlose Gerät im verbundenen Modus ist oder der RAN-Knoten keine geeignete AMF auswählen kann;
Senden einer Erkennungsanforderung durch die erste AMF an eine Netzwerkspeicherfunktion (NRF) des ersten Netzwerks, um eine Zugangs- und Mobilitätsmanagementfunktion (AMF) zu erkennen, die das Onboarding des drahtlosen Geräts unterstützt, wobei die Erkennungsanforderung eine Onboarding-Unterstützungsanzeige umfasst; und
Das erste AMF erhält vom NRF eine Antwortnachricht, in der Informationen über ein oder mehrere AMF-Kandidaten enthalten sind, die für das Onboarding geeignet sind.

2. Verfahren nach Anspruch 1, wobei die Registrierungsanforderung eine Kennung des zweiten Netzes umfasst.

3. Verfahren nach Anspruch 1 oder 2, wobei das Onboarding umfasst, dass das erste Netzwerk dem drahtlosen Gerät Informationen bereitstellt, mit denen dieses eine autorisierte Verbindung und Zugriff auf das zweite Netzwerk erhält.

4. Verfahren nach einem der Ansprüche 1 bis 3, wobei:
das erste Netz ist eines oder mehrere der folgenden:
ein Onboarding-Netzwerk;
ein erstes öffentliches Mobilfunknetz;
ein erstes nicht-öffentliches Netz; und
ein erstes eigenständiges nichtöffentliches Netz; und
das zweite Netz ist eines oder mehrere der folgenden:
ein Onboarding-Netzwerk;
ein zweites öffentliches Mobilfunknetz;
ein zweites nichtöffentliches Netz; und
ein zweites eigenständiges nichtöffentliches Netz.

5. Eine erste Zugriffs- und Mobilitätsverwaltungsfunktion (AMF) eines ersten Netzwerks, umfassend:
einen oder mehrere Prozessoren; und
einen Speicher, der Anweisungen speichert, die, wenn sie von einem oder mehreren Prozessoren ausgeführt werden, das erste AMF veranlassen, das Verfahren nach einem der Ansprüche 1 bis 4 auszuführen.

6. Verfahren, umfassend:
Empfangen, durch eine Netzwerkspeicherfunktion (NRF) eines ersten Netzes von einer ersten Zugriffs- und Mobilitätsverwaltungsfunktion (AMF) des ersten Netzes, einer Erkennungsanforderung, um eine Zugriffss- und Mobilitätsverwaltunktsfunktion (AMF) zu erkennen, die das Onboarding des drahtlosen Geräts zu einem zweiten Netz unterstützt, wobei die Registrierungsanforderung eine Onboarding-Unterstützungsanzeige umfasst;
Übermitteln einer Discovery-Antwortnachricht vom NRF an das erste AMF, wobei die Nachricht Informationen über das Onboarding-fähige AMF enthält.

7. Verfahren nach Anspruch 6, wobei die Erkennungsanforderung eine Kennung des zweiten Netzes umfasst.

8. Verfahren nach Anspruch 6 oder 7, wobei das Onboarding das Bereitstellen von Informationen durch das erste Netz an das drahtlose Gerät umfasst, damit das drahtlose Gerät eine Vollmacht für den Zugang und die Konnektivität zum zweiten Netz erhält.

9. Verfahren nach einem der Ansprüche 6 bis 8, wobei:
das erste Netz ist eines oder mehrere der folgenden:
ein Onboarding-Netzwerk;
ein erstes öffentliches Mobilfunktnetz;
ein erstes nichtöffentliches Netz; und
ein erstes eigenständiges nichtöffentliches Netz; und
das zweite Netz ist eines oder mehrere der folgenden:
ein Onboarding-Netzwerk;
ein zweites öffentliches Mobilfunknetz;
ein zweites nichtöffentliches Netz; und
ein zweites eigenständiges nichtöffentliches Netz.

10. Eine Netzwerkspeicherfunktion, die Folgendes umfasst:
einen oder mehrere Prozessoren; und
einen Speicher, der Anweisungen speichert, die, wenn sie durch den einen oder die mehreren Prozessoren ausgeführt werden, die Netzwerkspeicherfunktion veranlassen, das Verfahren nach einem der Ansprüche 6-9 durchzuführen.

11. Ein nicht-flüchtiges computerlesbares Speichermedium, das Anweisungen enthält,die,
wenn sie durch einen oder mehrere Prozessoren einer Zugriffs-und Mobilitätsverwaltungsfunktion (AMF) ausgeführt werden, die AMF veranlassen, das Verfahren nach einem der Ansprüche 1-4 durchzuführen, oder
wenn sie durch einen oder mehrere Prozessoren einer Netzwerkspeicherfunktion (NRF) ausgeführt werden, die NRF veranlassen, das Verfahren nach einem der Ansprüche 6-9 durchzuführen.

## Revendications

1. Procédé, comprenant :
la réception, par une première fonction de gestion d'accès et de mobilité, AMF, d'un premier réseau provenant d'un nœud de réseau d'accès radio, RAN, d'une requête d'enregistrement transmise pour l'intégration d'un dispositif sans fil à un second réseau, dans lequel la requête d'enregistrement est transmise par le nœud RAN si le dispositif sans fil est en mode connecté ou si le nœud RAN ne peut pas sélectionner une AMF appropriée ;
l'envoi, par la première AMF à une fonction de référentiel réseau, NRF, du premier réseau, d'une requête de découverte pour découvrir une fonction de gestion d'accès et de mobilité, AMF, qui prend en charge l'intégration du dispositif sans fil, la requête de découverte comprenant une indication de prise en charge de l'intégration ; et
la réception, par la première AMF provenant de la NRF, d'un message de réponse de découverte comprenant des informations sur une ou plusieurs candidates AMF qui prennent en charge l'intégration.

2. Procédé selon la revendication 1, dans lequel la requête d'enregistrement comprend un identifiant du second réseau.

3. Procédé selon la revendication 1 ou 2, dans lequel l'intégration comprend la fourniture, par le premier réseau au dispositif sans fil, d'informations permettant au dispositif sans fil d'obtenir un accès autorisé et une connectivité au second réseau.

4. Procédé selon l'une quelconque des revendications 1 à 3, dans lequel :
le premier réseau est l'un ou plusieurs :
d'un réseau d'intégration ;
d'un premier réseau mobile terrestre public ;
d'un premier réseau non public ; et
d'un premier réseau non public autonome ; et
le second réseau est l'un ou plusieurs :
d'un réseau d'intégration ;
d'un second réseau mobile terrestre public ;
d'un second réseau non public ; et
d'un second réseau non public autonome ; et

5. Première fonction de gestion d'accès et de mobilité, AMF, d'un premier réseau, comprenant :
un ou plusieurs processeurs ; et
une mémoire stockant des instructions qui, lorsqu'elles sont exécutées par les un ou les plusieurs processeurs, amènent la première AMF à réaliser le procédé selon l'une quelconque des revendications 1 à 4.

6. Procédé, comprenant :
la réception, par une fonction de référentiel réseau, NRF, d'un premier réseau, provenant d'une première fonction de gestion d'accès et de mobilité, AMF, du premier réseau, d'une requête de découverte pour découvrir une fonction de gestion d'accès et de mobilité, AMF, qui prend en charge l'intégration d'un dispositif sans fil dans un second réseau, la requête d'enregistrement comprenant une indication de prise en charge de l'intégration ;
l'envoi, par la NRF à l'AMF, d'un message de réponse de découverte comprenant des informations sur l'AMF qui prend en charge l'intégration.

7. Procédé selon la revendication 6, dans lequel la requête de découverte comprend un identifiant du second réseau.

8. Procédé selon la revendication 6 ou 7, dans lequel l'intégration comprend la fourniture, par le premier réseau au dispositif sans fil, d'informations permettant au dispositif sans fil d'obtenir un accès autorisé et une connectivité au second réseau.

9. Procédé selon l'une quelconque des revendications 6 à 8, dans lequel :
le premier réseau est l'un ou plusieurs :
d'un réseau d'intégration ;
d'un premier réseau mobile terrestre public ;
d'un premier réseau non public ; et
d'un premier réseau non public autonome ; et
le second réseau est l'un ou plusieurs :
d'un réseau d'intégration ;
d'un second réseau mobile terrestre public ;
d'un second réseau non public ; et
d'un second réseau non public autonome ; et

10. Fonction de référentiel réseau, comprenant :
un ou plusieurs processeurs ; et
une mémoire stockant des instructions qui, lorsqu'elles sont exécutées par les un ou plusieurs processeurs, amènent la fonction de référentiel réseau à réaliser le procédé selon l'une quelconque des revendications 6 à 9.

11. Support lisible par ordinateur non transitoire comprenant des instructions qui,
lorsqu'elles sont exécutées par un ou plusieurs processeurs d'une fonction de gestion d'accès et de mobilité, AMF, amènent l'AMF à réaliser le procédé selon l'une quelconque des revendications 1 à 4, ou
lorsqu'elles sont exécutées par un ou plusieurs processeurs d'une fonction de référentiel réseau, NRF, amènent la NRF à réaliser le procédé selon l'une quelconque des revendications 6 à 9.
